# EUROPÄISCHE PATENTSCHRIFT

(11) **EP 1 403 356 B1**
(45) Veröffentlichungstag und Bekanntmachung des Hinweises auf die Patenterteilung: **17.09.2008**
(21) Anmeldenummer: 03021131.2
(22) Anmeldetag: 22.09.2003
(51) Int. Cl.: C09K 19/30, C09K 19/20

(54) **Flüssigkristallines Medium**
Liquid crystalline medium
Milieu à base de cristaux liquides

(30) Priorität: 30.09.2002 DE 10246117
(43) Veröffentlichungstag der Anmeldung: 31.03.2004
(73) Patentinhaber: Merck Patent GmbH, 64293 Darmstadt (DE)
(72) Erfinder: Kirsch, Peer Dr., 64342 Seeheim-Jugenheim (DE); Lenges, Marc, 64823 Gross-Umstadt (DE); Heckmeier, Michael Dr., 69502 Hemsbach (DE)

(56) Entgegenhaltungen:
- EP-A- 0 786 445
- EP-A- 0 844 229
- EP-A- 0 916 639
- WO-A-01/25370
- WO-A-01/27221

## Beschreibung

Die vorliegende Erfindung betrifft flüssigkristalline Verbindungen und ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien eine niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Aus den Druckschriften WO 01/27221 A und WO 01/25370 A sind bereits Phenolester mit zwei oder mehr Benzolringen als Komponenten für ein flüssigkristallines Medium bekannt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der vorliegenden Erfindung liegt somit die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen. Insbesondere ist es möglich mit den Verbindungen der Formel I low Vₜₕ-Mischungen herzustellen, die ein sehr gutes γ₁/Klärpunkt-Verhältnis sowie relativ niedrige Δn-Werte aufweisen. Insbesondere sind die erfindungsgemäßen Mischungen für low Δn-Anwendungen geeignet. Die erfindungsgemäßen Mischungen finden vorzugsweise in reflektiven und transflektiven Anwendungen ihren Einsatz.

Es wurde nun gefunden, dass diese Aufgabe gelöst werden kann, wenn man in Anzeigen erfindungsgemäße Medien verwendet.

Gegenstand der vorliegenden Erfindung ist somit ein flüssigkristallines Medium auf der Basis eines Gemisches von polaren Verbindungen, dadurch gekennzeichnet, dass es eine oder mehrere Verbindungen der allgemeinen Formel I 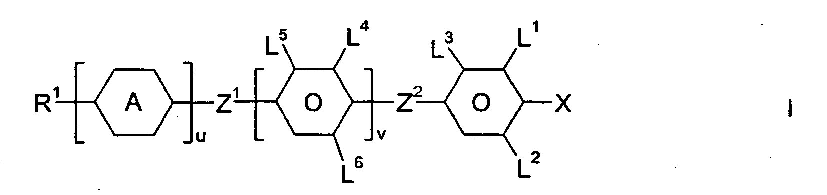 enthält,
worin
- R¹: einen unsubstituierten, einen einfach durch CN oder CF₃ oder einen mindestens einfach durch Halogen substituierten Alkylrest mit 1 bis 12 C-Atomen, wobei in diesen Resten auch eine oder mehrere CH₂-Gruppen jeweils unabhängig voneinander durch -O-, -S-, 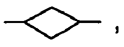 -CH=CH-, -C≡C-, -CO-, -CO-O-, -O-CO- oder -O-CO-O- so ersetzt sein können, dass O-Atome nicht direkt miteinander verknüpft sind, 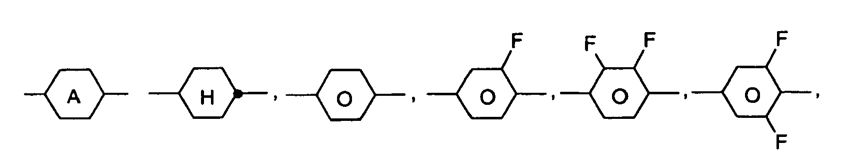 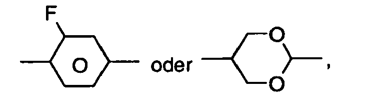
- L¹: F,
- L²⁻⁶: jeweils unabhängig voneinander H oder F,
- Z¹: -CF₂O-,
- Z²: -COO-,
- X: F, Cl, CN, OCN, NCS, SCN, SF₅, unsubstituierter Alkyl- oder Alkoxyrest, halogenierter Alkylrest, halogenierter Alkenylrest, halogenierter Alkoxyrest oder halogenierter Alkenyloxyrest mit bis zu 6 C-Atomen, und
- u: 1 oder 2, und
- v: 1 oder 2
bedeuten.

Gegenstand der Erfindung sind weiterhin die Verbindungen der Formel I. Die Verbindungen der Formel I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R¹ einen Alkylrest oder einen Alkoxyrest bedeutet, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Ethoxy, Propoxy, Butoxy, Pentoxy, Hexoxy oder Heptoxy, ferner, Octyl, Nonyl, Decyl, Undecyl, Dodecyl, Methoxy, Octoxy, Nonoxy, Decoxy oder Undecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R¹ einen Alkylrest bedeutet, in dem eine CH₂-Gruppe durch -CH=CH-ersetzt ist, so kann dieser geradkettig oder verzweigt sein. Vorzugsweise ist er geradkettig und hat 2 bis 10 C-Atome. Er bedeutet demnach besonders bevorzugt Vinyl, Prop-1- oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R¹ einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders bevorzugt Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)propyl, 3-(Ethoxycarbonyl)propyl, 4-(Methoxycarbonyl)-butyl.

Falls R¹ einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders bevorzugt Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl, 8-Methacryloyloxyoctyl, 9-Methacryloyloxynonyl.

Falls R¹ einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position möglich.

Falls R¹ einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen der Formel I, die über für Polymerisationsreaktionen geeignete Flügelgruppen R¹ verfügen, eignen sich zur Darstellung flüssigkristallinen Polymeren.

Verbindungen der Formel I mit verzweigten Flügelgruppen R¹ können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verbindungen der Formel I mit S_{A}-Phasen eignen sich beispielsweise für thermisch adressierte Displays.

Verzweigte Gruppen dieser Art enthalten in der Regel nicht mehr als eine Kettenverzweigung. Bevorzugte verzweigte Reste R¹ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹ einen Alkylrest darstellt, in dem zwei oder mehr CH₂-Gruppen durch -O- und/oder -CO-O- ersetzt sind, so kann dieser geradkettig oder verzweigt sein. Vorzugsweise ist er verzweigt und hat 3 bis 12 C-Atome. Er bedeutet demnach besonders bevorzugt Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonyl)-pentyl, 6,6-Bis-(methoxycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Besonders bevorzugte Verbindungen der Formel I sind ausgewählt aus der Gruppe der folgenden Unterformeln I1, I3, I5-I7, I10, I11, I14 und I15

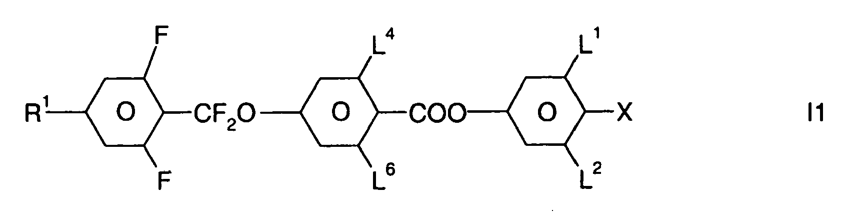

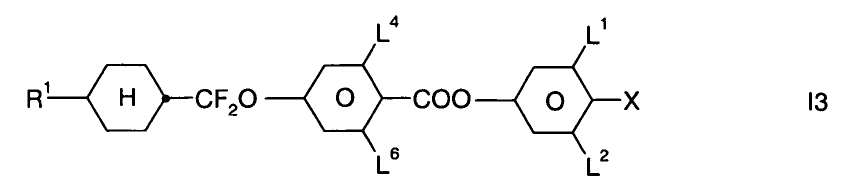

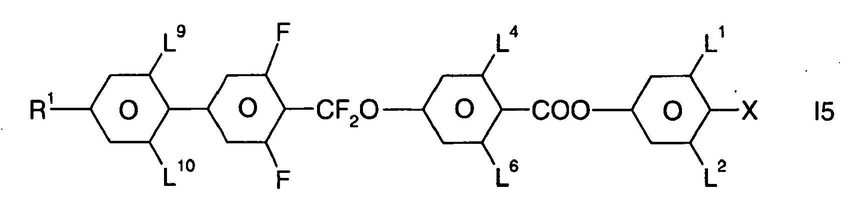

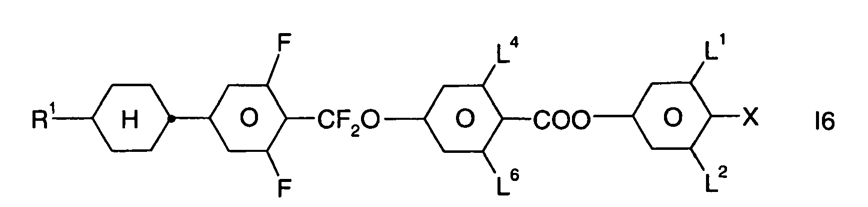

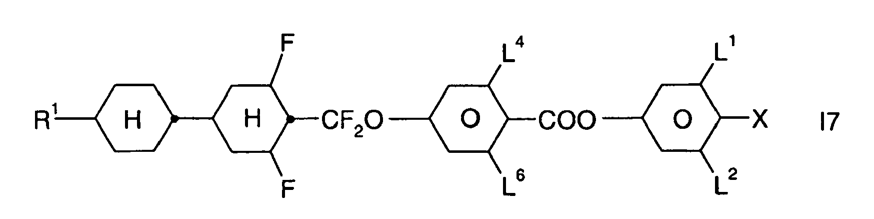

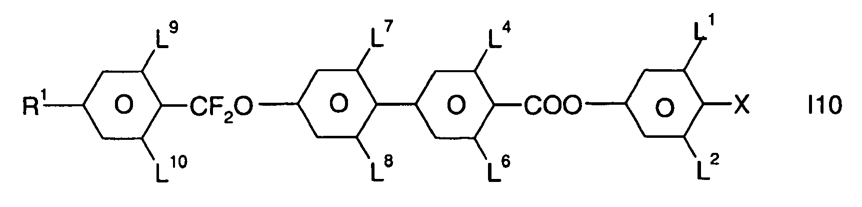

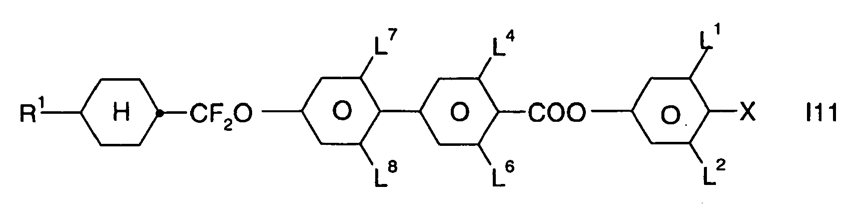

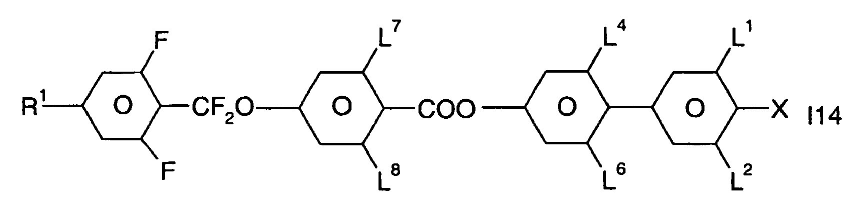

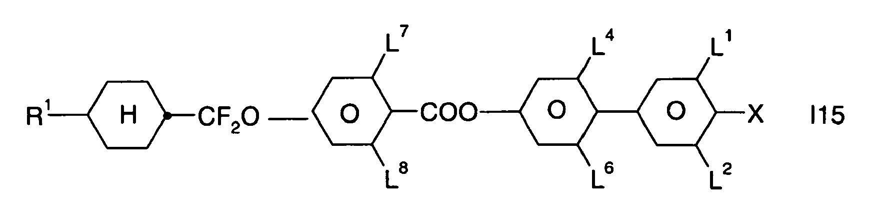

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Vorzugsweise werden die Verbindungen der Formel I wie folgt hergestellt:

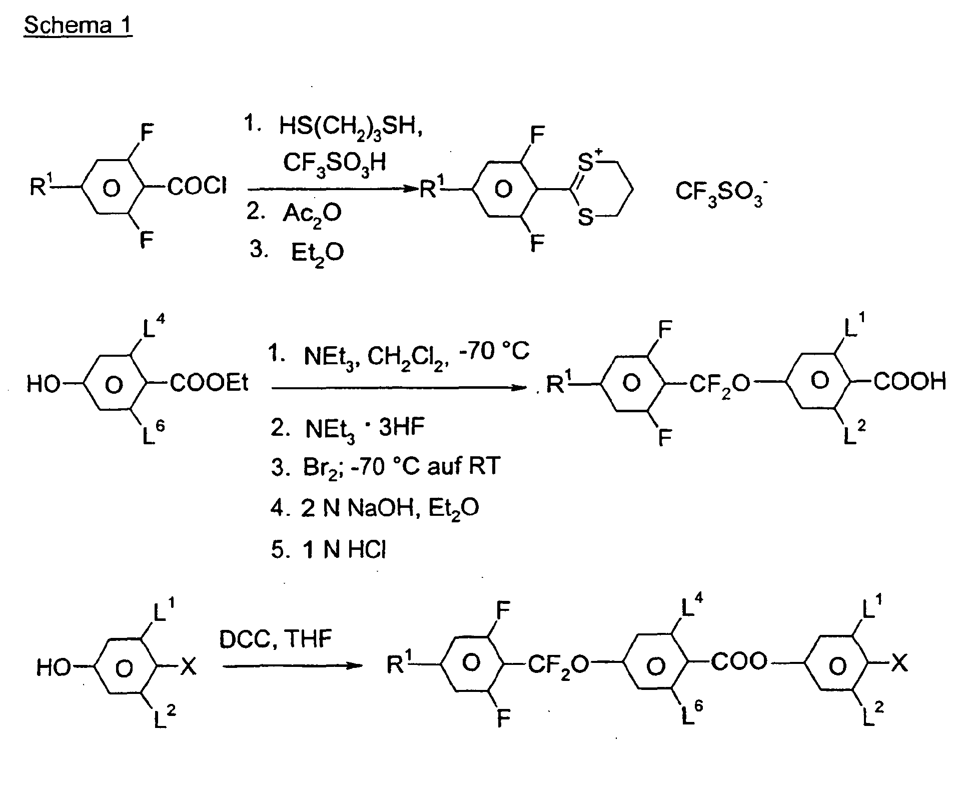

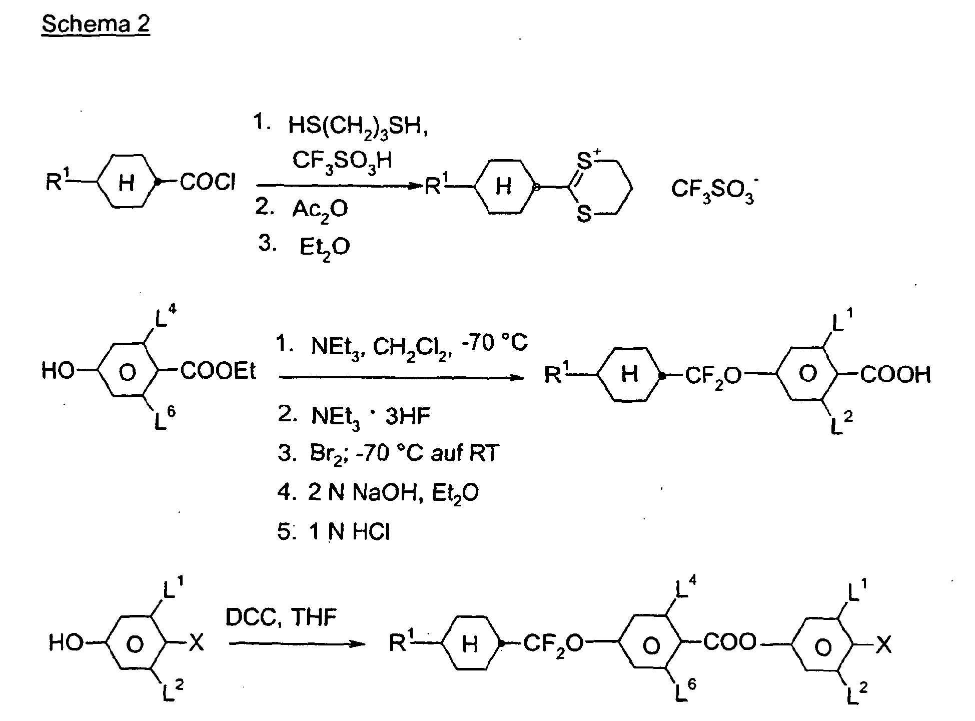

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke. Die erfindungsgemäßen Mischungen sind neben reflektiven Anwendungen ebenfalls für IPS-Anwendungen (In Plane Switching), OCB-Anwendungen (Optically controlled birefringence) und VA-Anwendungen (Vertical Alignment) geeignet.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Rotationsviskosität γ₁, kleinen Δn und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Systeme wie z.B. MLC-6424 weisen zwar ähnliche Eigenschaften wie die erfindungsgemäßen Mischungen auf, besitzen aber deutlich schlechtere Werte für die Rotationsviskosität γ₁.

Andere Mischungs-Systeme besitzen vergleichbare Fließviskositäten ν₂₀ und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C, vorzugsweise bis -30 °C, und besonders bevorzugt bis -40 °C, Klärpunkte oberhalb 80 °C, vorzugsweise oberhalb 90 °C, und besonders bevorzugt oberhalb 100 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb von 2,0 V, vorzugsweise unterhalb von 1,8 V, und besonders bevorzugt unterhalb von 1,7 V.

Es versteht sich, dass durch geeignete Wahl der Komponenten der erfindungsgemäßen Mischungen auch höhere Klärpunkte (z.B. oberhalb 110 °C) bei höheren Schwellenspannung oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm²·s⁻¹, besonders bevorzugt < 50 mm²·s⁻¹. Die Rotationsviskosität γ₁ der erfindungsgemäßen Mischungen bei 20 °C ist vorzugsweise < 180 mPa·s, besonders bevorzugt < 150 mPa·s. Der nematische Phasenbereich ist vorzugsweise mindestens 90 °C, besonders bevorzugt mindestens 100°. Vorzugsweise erstreckt sich dieser Bereich mindestens von -20° bis +80°.

Messungen des "Capacity Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle der erfindungsgemäßen Verbindungen der Formel I Cyanophenylcyclohexane der Formel 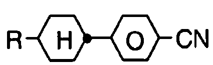 oder Ester der Formel

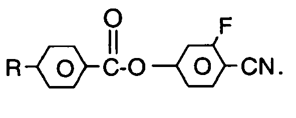

Auch die UV-Stabilität der erfindungsgemäßen Mischungen ist erheblich besser, d. h. sie zeigen eine deutlich kleinere Abnahme des HR unter UV-Belastung.

Vorzugsweise basieren die erfindungsgemäßen Medien auf mehreren (vorzugsweise zwei oder mehr) Verbindungen der Formel I, d.h. der Anteil dieser Verbindungen ist 5-95 %, vorzugsweise 10-60 % und besonders bevorzugt im Bereich von 15-50 %.

Die einzelnen Verbindungen der Formeln 11 bis XVIII und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Das Medium enthält ein oder mehrere Verbindungen der Formeln 12, I3, I5, I6, I8, I9, I11-I15, I18, I19, I21, I22, I24, I25 und I27-I31: 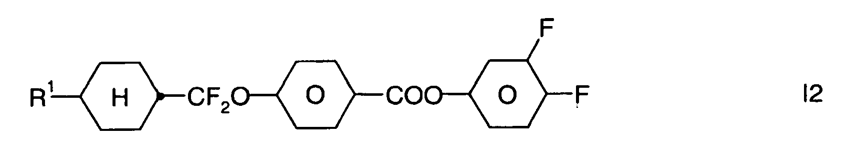 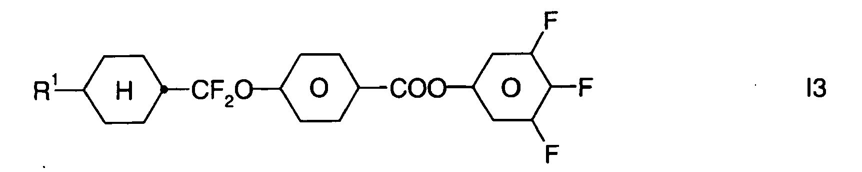 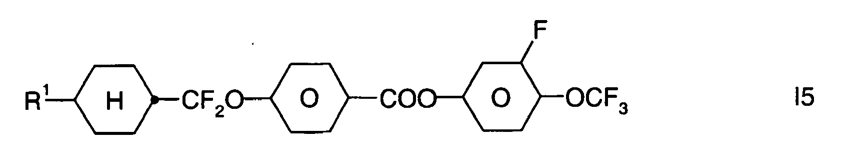 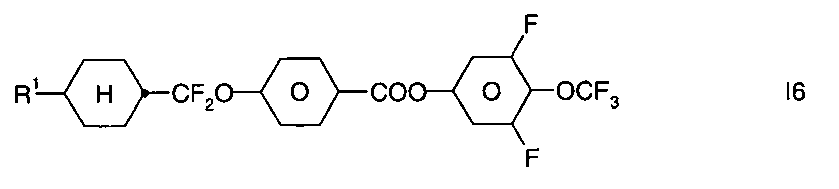 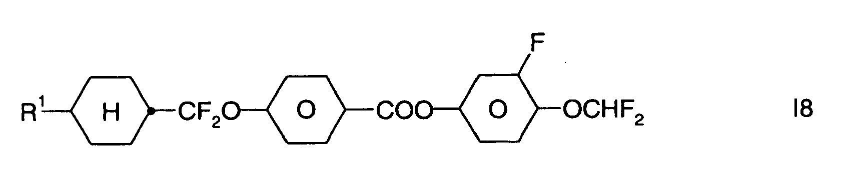 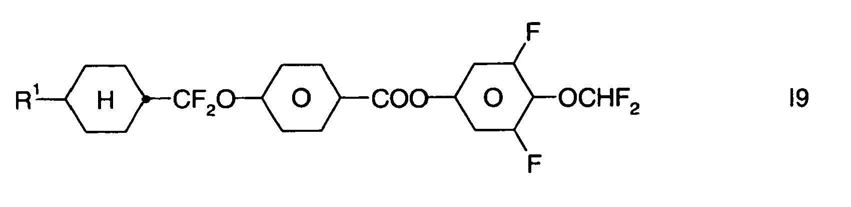 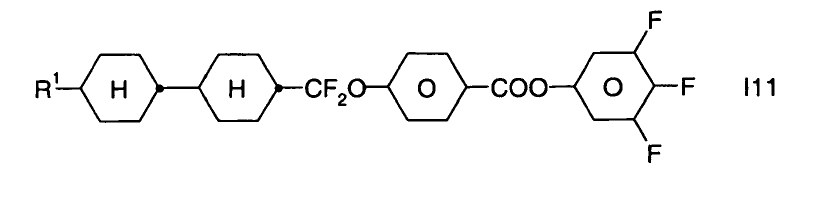 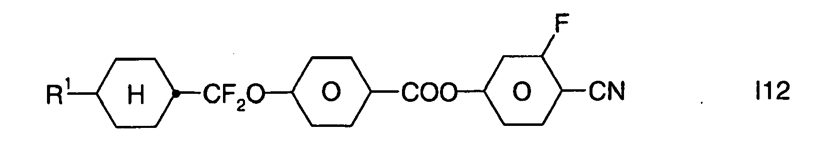 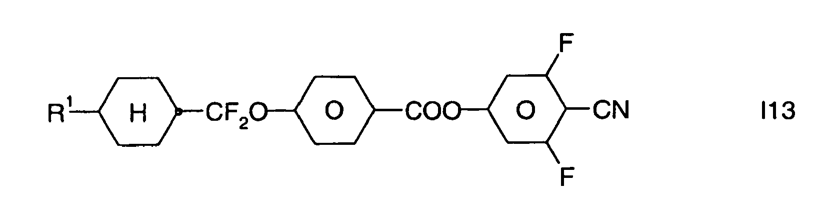 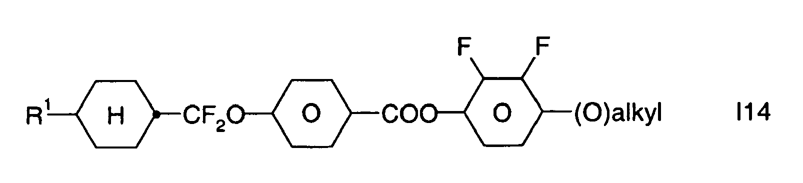 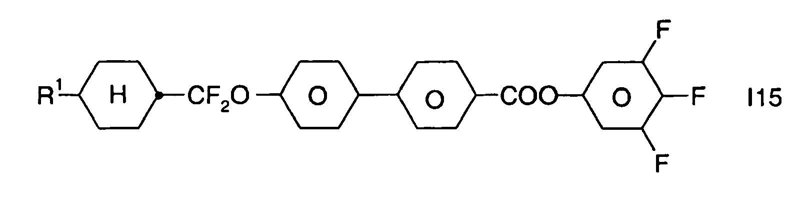 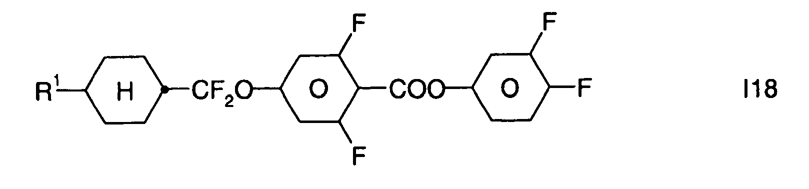 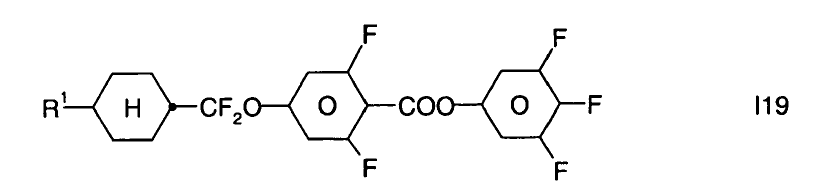 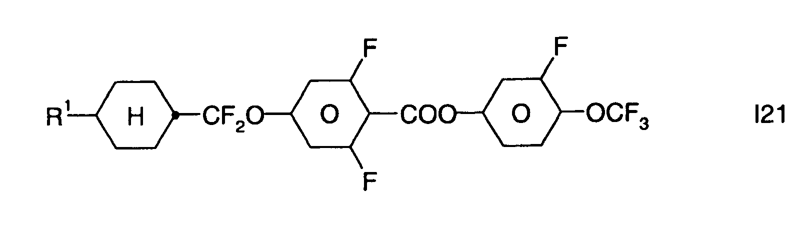 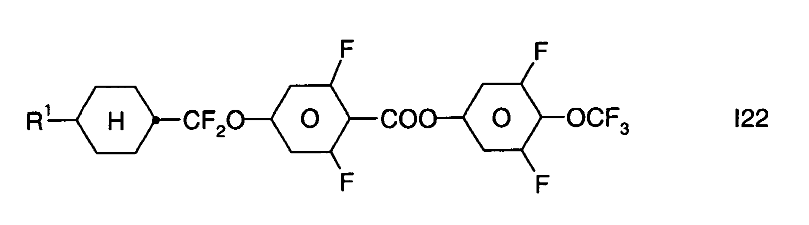 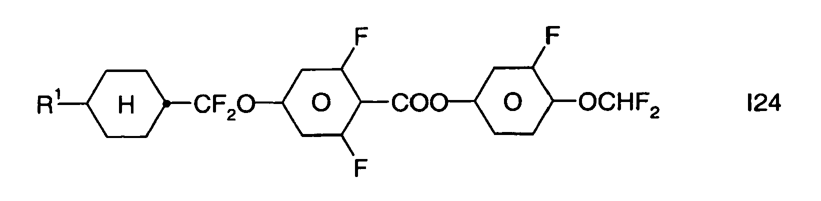 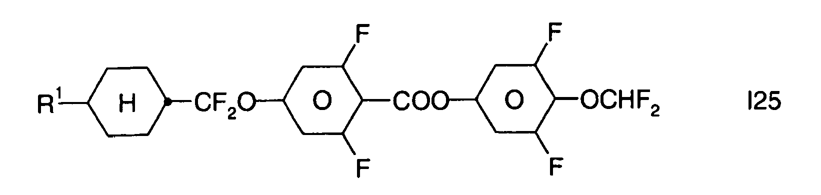 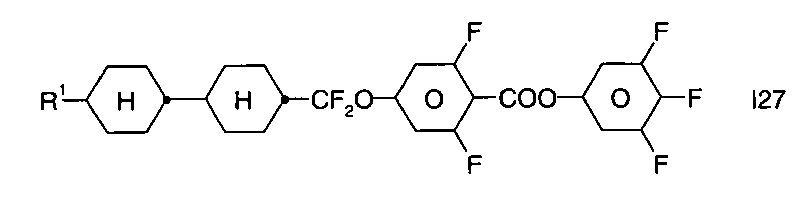 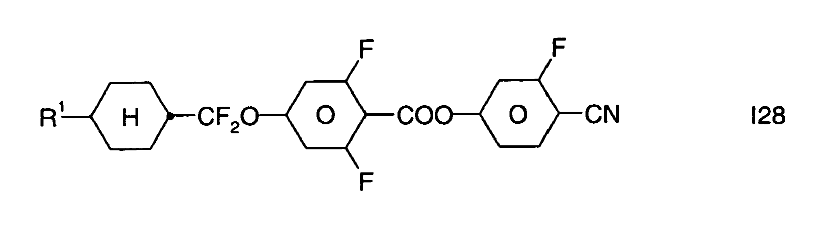 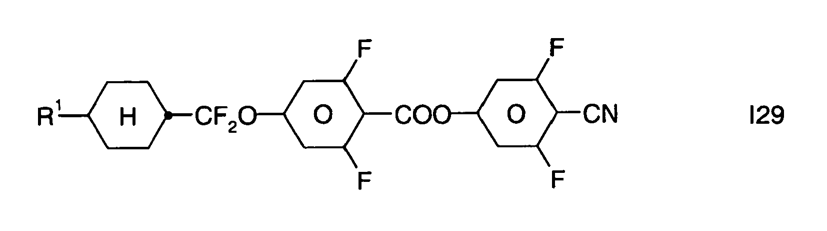 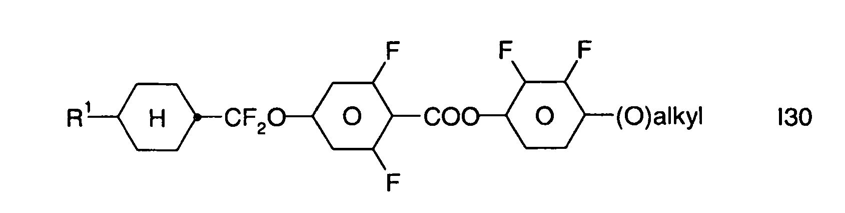 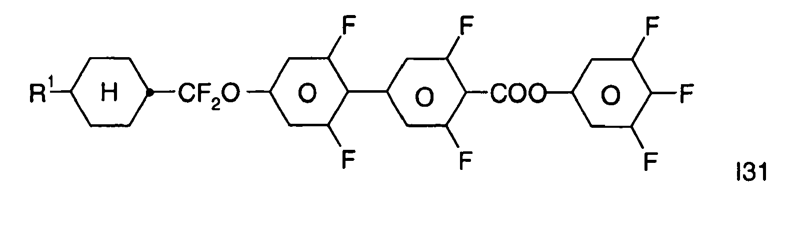
- X bedeutet vorzugsweise F, Cl, CN, OCN, NCS, SCN, SF₅, OCH₃, CH₃, OC₂H₅, C₂H₅, OC₃H₇, C₃H₇, CF₃, C₂F₅, C₃F₇, CF₂H, OCF₃, OCF₂H, OCFHCF₃, OCFHCH₂F, OCFHCHF₂, OCF₂CH₃, OCF₂CH₂F, OCF₂CHF₂, OCF₂CF₂CF₂H, OCF₂CF₂CH₂F, OCFHCF₂CF₃, OCFHCF₂CHF₂, OCFHCFHCF₃, OCH₂CF₂CF₃, OCF₂CF₂CF₃, OCF₂CFHCHF₂, OCF₂CH₂CHF₂, OCFHCF₂CHF₂, OCFHCFHCHF₂, OCFHCH₂CF₃, OCH₂CFHCF₃, OCH₂CF₂CHF₂, OCF₂CFHCH₃, OCF₂CH₂CHF₂, OCFHCF₂CH₃, OCFHCFHCHF₂, OCFHCH₂CF₃, OCH₂CF₂CHF₂, OCH₂CFHCHF₂, OCF₂CH₂CH₃, OCFHCFHCH₃, OCFHCH₂CHF₂, OCH₂CF₂CH₃, OCH₂CFHCHF₂, OCH₂CH₂CHF₂, OCHFCH₂CH₃, OCH₂CFHCH₃, OCH₂CH₂CHF₂, OCClFCF₃, OCClFCClF₂, OCClFCHF₂, OCFHCCl₂F, OCClFCHF₂, OCClFCClF₂, OCF₂CHCl₂, OCF₂CHCl₂, OCF₂CCl₂F, OCF₂CClFH, OCF₂CClF₂, OCF₂CF₂CClF₂, OCF₂CF₂CCl₂F, OCClFCF₂CF₃, OCClFCF₂CHF₂, OCClFCF₂CClF₂, OCClFCFHCF₃, OCClFCClFCF₃, OCCl₂CF₂CF₃, OCClHCF₂CF₃, OCClFCF₂CF₃, OCClFCClFCF₃, OCF₂CClFCHF₂, OCF₂CF₂CCl₂F, OCF₂CCl₂CHF₂, OCF₂CH₂CClF₂, OCClFCF₂CFH₂, OCFHCF₂CCl₂F, OCClFCFHCHF₂, OCClFCClFCF₂H, OCFHCFHCClF₂, OCClFCH₂CF₃, OCFHCCl₂CF₃, OCCl₂CFHCF₃, OCH₂CClFCF₃, OCCl₂CF₂CF₂H, OCH₂CF₂CClF₂, OCF₂CCIFCH₃, OCF₂CFHCCl₂H, OCF₂CCI₂CFH₂, OCF₂CH₂CCl₂F, OCClFCF₂CH₃, OCFHCF₂CCl₂H, OCClFCClFCHF₂, OCFHCFHCCl₂F, OCClFCH₂CF₃, OCFHCCl₂CF₃, OCCl₂CF₂CFH₂, OCH₂CF₂CCl₂F, OCCl₂CFHCF₂H, OCClHCClFCF₂H, OCF₂CClHCClH₂, OCF₂CH₂CCl₂H, OCClFCFHCH₃, OCF₂CClFCCl₂H, OCClFCH₂CFH₂, OCFHCCl₂CFH₂, OCCl₂CF₂CH₃, OCH₂CF₂CClH₂, OCCl₂CFHCFH₂, OCH₂CClFCFCl₂, OCH₂CH₂CF₂H, OCClHCClHCF₂H, OCH₂CCl₂CF₂H, OCClFCH₂CH₃, OCFHCH₂CCl₂H, OCClHCFHCClH₂, OCH₂CFHCCl₂H, OCCl₂CH₂CF₂H, OCH₂CCl₂CF₂H, CH=CF₂, OCH=CF₂, CF=CF₂, OCF=CF₂, CF=CHF, OCF=CHF, CH=CHF, OCH=CHF, CF₂CH₂CF₃, CF₂CHFCF₃ insbesondere F, Cl, CN, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, CH=CF₂, OCH₃, OC₂H₅ oder OC₃H₇
- Das Medium enthält zusätzlich eine oder mehrere Verbindungen ausgewählt aus der Gruppe bestehend aus den allgemeinen Formeln II bis VIII: 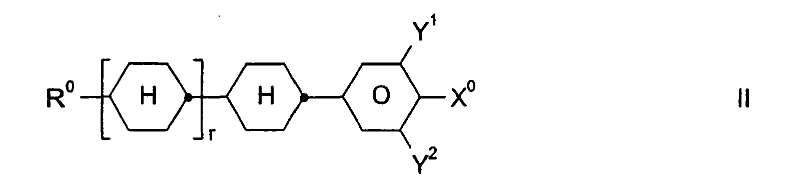 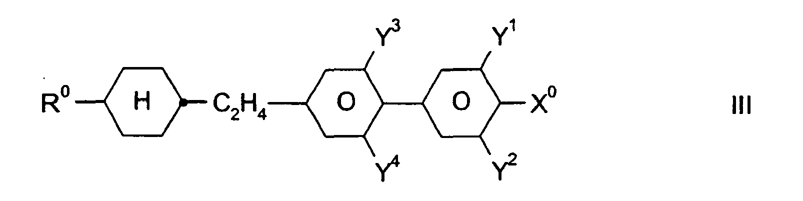 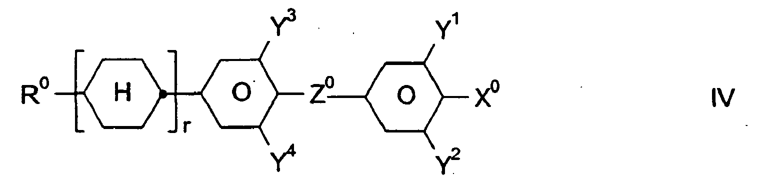 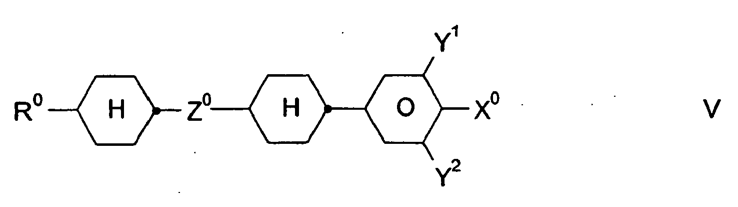 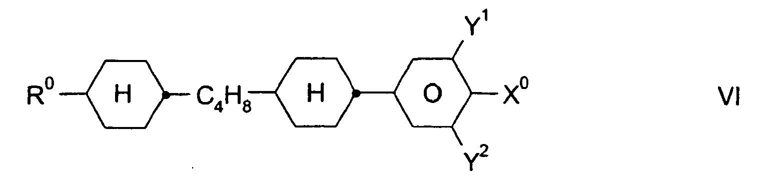 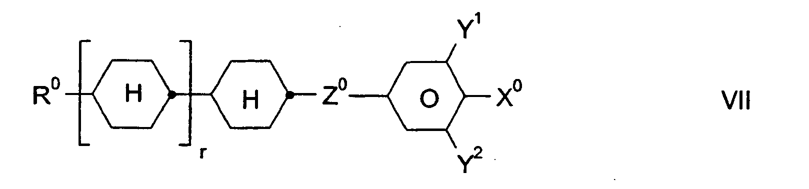 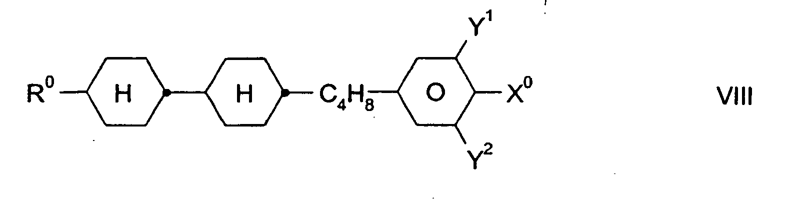
worin die einzelnen Reste die folgenden Bedeutungen haben:
- R⁰: n-Alkyl, Oxaalkyl, Alkoxy, Fluoralkyl oder Alkenyl mit jeweils bis zu 9 C-Atomen
- X⁰: F, Cl, halogeniertes Alkyl, halogeniertes Alkenyl, halogeniertes Alkenyloxy oder halogeniertes Alkoxy mit 1 bis 6 C-Atomen,
- Z⁰: -C₂H₄-, -CH=CH-, -CH₂O-, -COO-, -OCH₂-, -OCF₂-, -CF₂O-,-C₂F₄-, -CF=CF-, -CH₂CF₂- oder CF₂CH₂-,
- Y¹, Y², Y³ und Y⁴: jeweils unabhängig voneinander H oder F,
- r: 0 oder 1,

Die Verbindung der Formel IV ist vorzugsweise 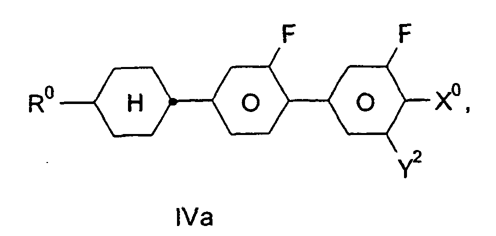 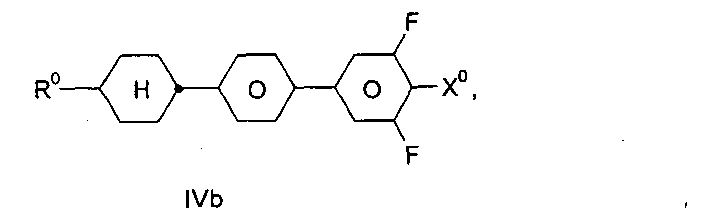 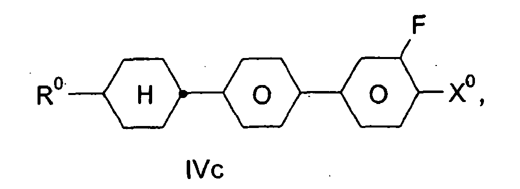 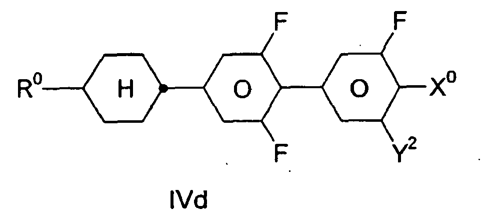 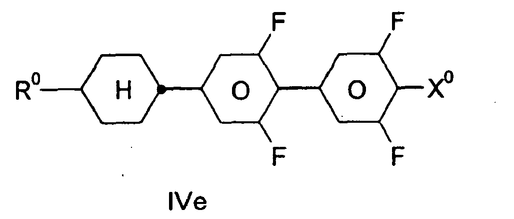 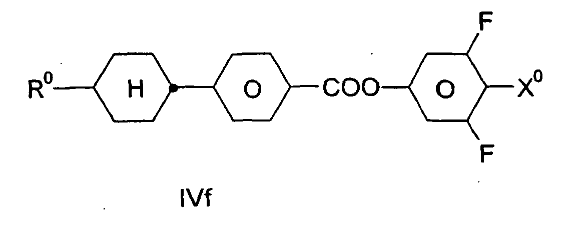 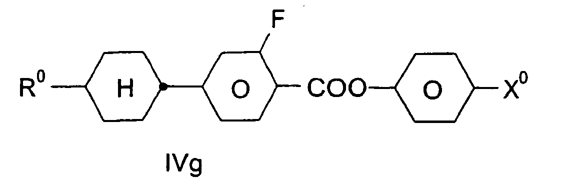 oder 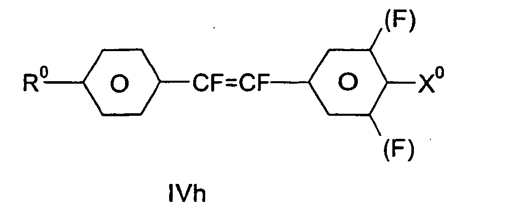
- Das Medium enthält zusätzlich ein oder mehrere Dioxane der Formeln D1 bis D4, 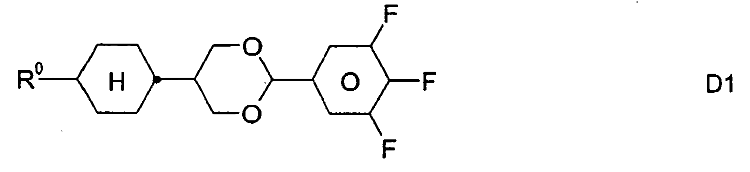 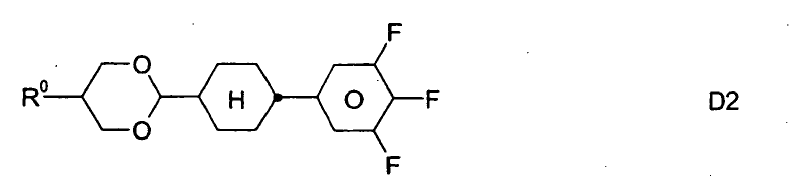 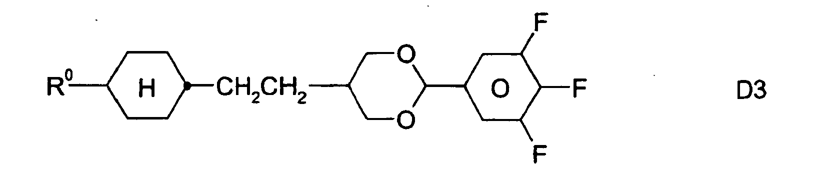 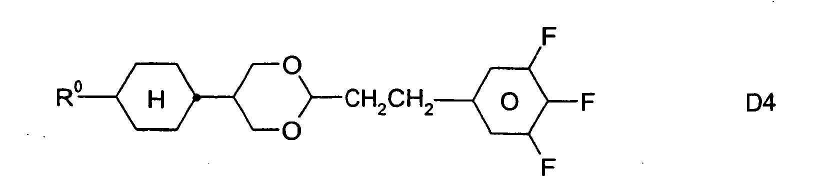 worin R⁰ die oben angegebenen Bedeutungen hat.
- Das Medium enthält zusätzlich eine oder mehrere Verbindungen ausgewählt aus der Gruppe bestehend aus den allgemeinen Formeln IX bis XVIII: 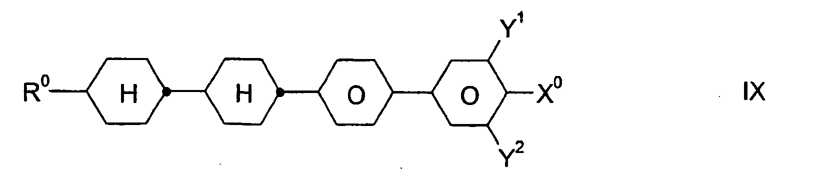 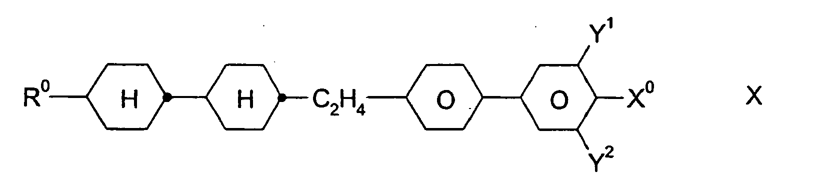 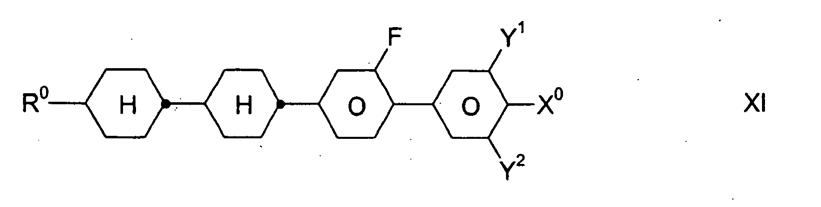 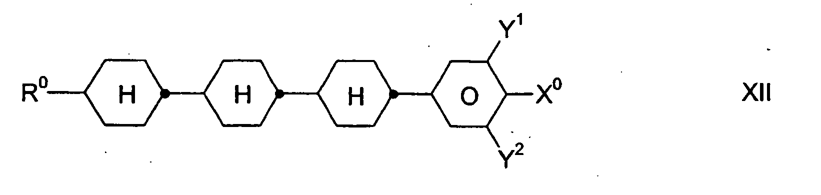 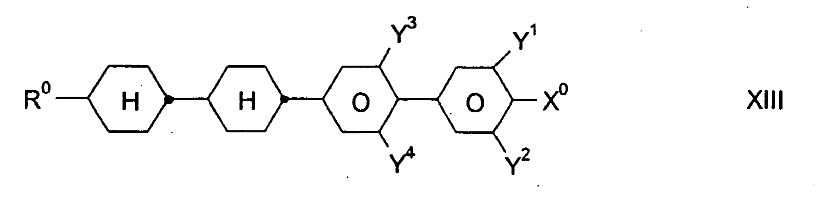 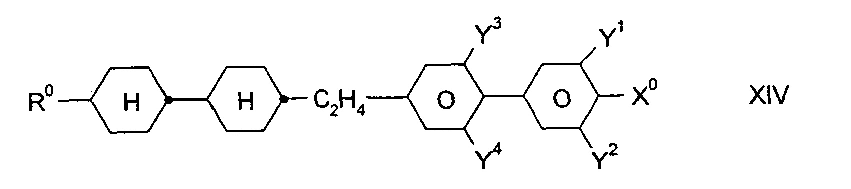 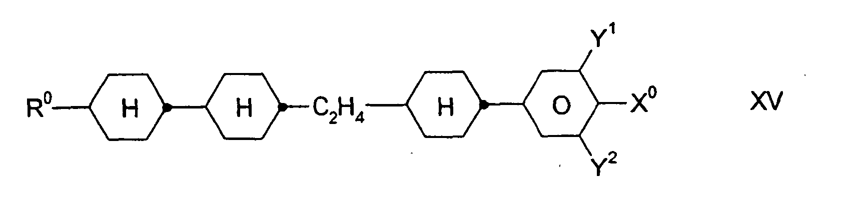 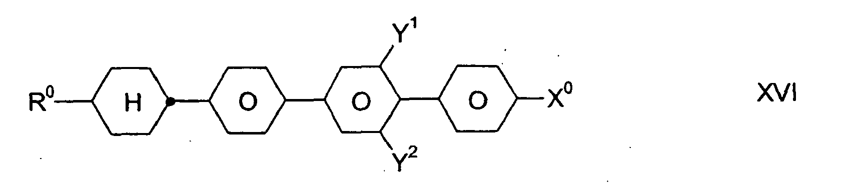 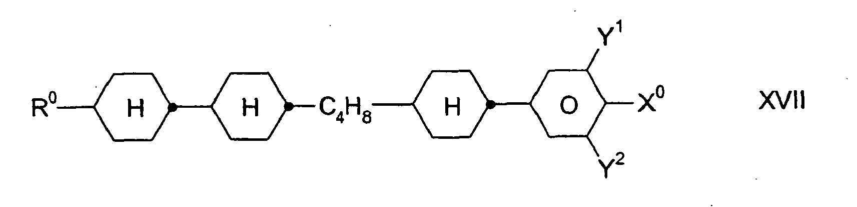 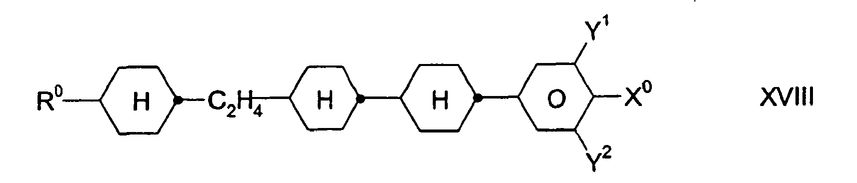 worin R⁰, X⁰, Y¹ und Y² jeweils unabhängig voneinander eine der in Anspruch 2 angegebenen Bedeutungen haben. Y³ undY⁴ bedeuten jeweils unabhängig voneinander H oder F. Vorzugsweise bedeutet X⁰ F, Cl, CF₃, OCF₃, OCHF₂. R⁰ ist vorzugsweise Alkyl, Oxaalkyl, Fluoralkyl, Alkoxy oder Alkenyl mit jeweils bis zu 6 C-Atomen.
- Das Medium enthält zusätzlich eine oder mehrere Verbindungen mit annellierten Ringen der Formeln A-1 bis A-6 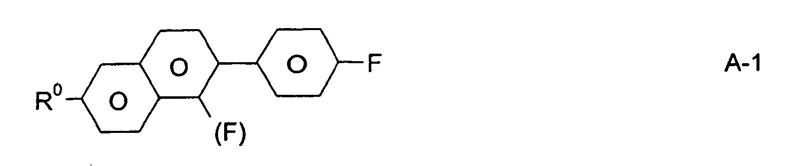 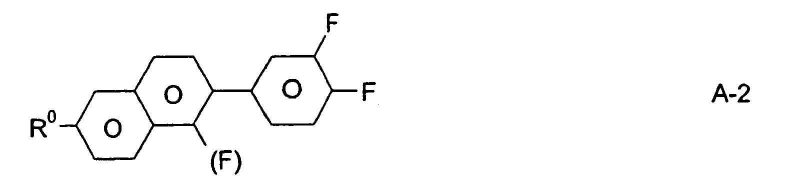 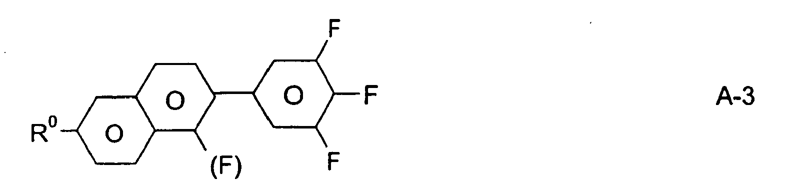 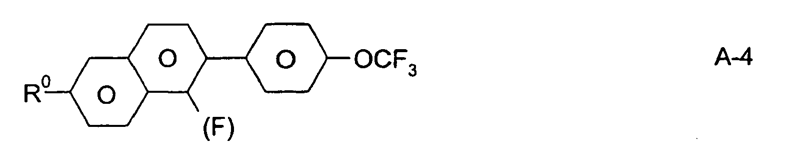 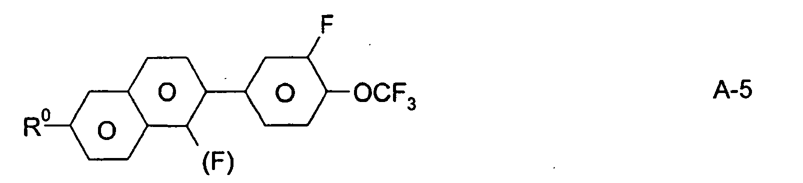 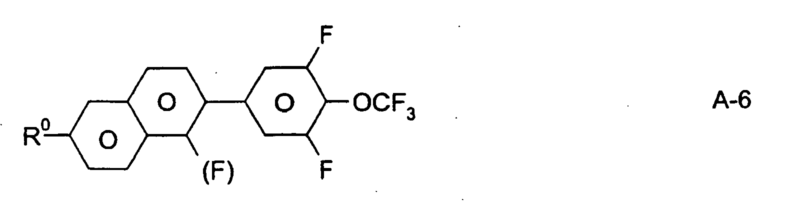 worin R⁰ die in Anspruch 2 angegebenen Bedeutungen hat.
- Der Anteil der Verbindungen der Formeln A-1 bis A-6 ist 0-20 Gew.%, vorzugsweise 3-15 Gew.%, insbesondere 3-10 Gew.%.
- Der Anteil an Verbindungen der Formeln I bis VIII zusammen beträgt im Gesamtgemisch mindestens 30 Gew.-%, vorzugsweise mindestens 50 Gew.%;
- Der Anteil an Verbindungen der Formel I beträgt im Gesamtgemisch 1 bis 50 Gew.%, vorzugsweise 2 bis 30 Gew.% und besonders bevorzugt 5 bis 25 Gew.%;
- Der Anteil an Verbindungen der Formeln II bis VIII im Gesamtgemisch beträgt 20 bis 80 Gew.%; 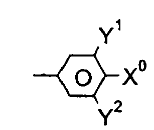 ist vorzugsweise 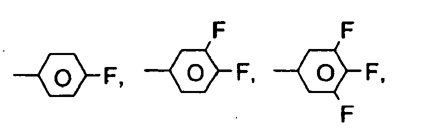 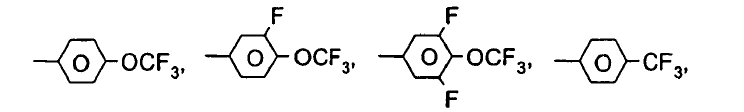 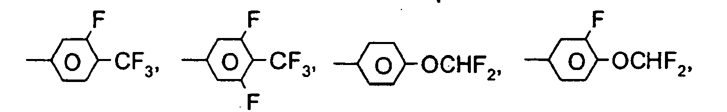 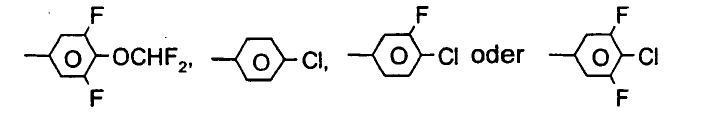
- Das Medium enthält eine oder mehrere Verbindungen der Formeln II, III, IV, V, VI, VII oder VIII;
- R⁰ ist geradkettiges Alkyl oder Alkenyl mit 2 bis 7 C-Atomen;
- Das Medium besteht im wesentlichen aus Verbindungen der Formeln I bis VIII;
- Das Medium enthält vorzugsweise ein, zwei oder drei Verbindungen der Formel I;
- Das Medium enthält ein Gemisch aus Verbindungen der Formel I,
worin R¹ Methyl, Ethyl, n-C₃H₇, n-C₄H₉, n-C₅H₁₁ oder n-C₆H₁₁ bedeutet;
- Das Medium enthält weitere Verbindungen, vorzugsweise ausgewählt aus der folgenden Gruppe bestehend aus den allgemeinen Formeln XIX bis XXII: 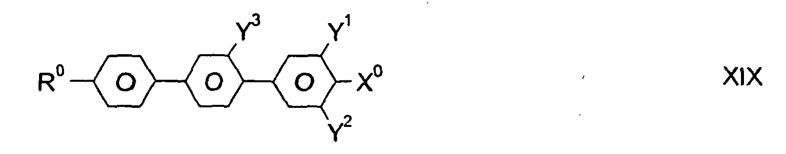 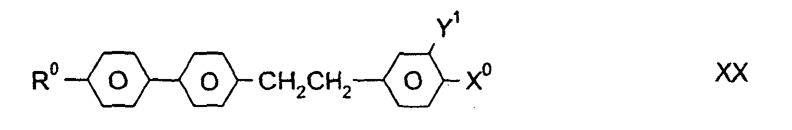 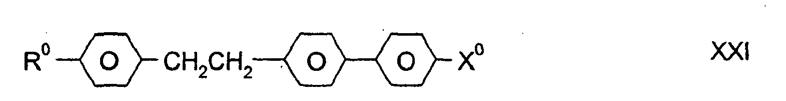 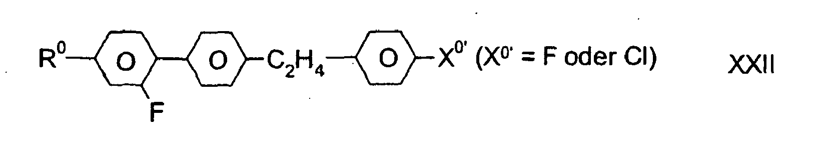 worin R⁰, X⁰, Y¹, Y² und Y³ die oben angegebene Bedeutung haben und die 1,4-Phenylenringe durch Methyl, CN, Chlor oder Fluor substituiert sein können. Vorzugsweise sind die 1,4-Phenylenringe ein- oder mehrfach durch Fluoratome substituiert.
- Das Medium enthält vorzugsweise carbocyclische Zweikernverbindungen der Formel XXIII 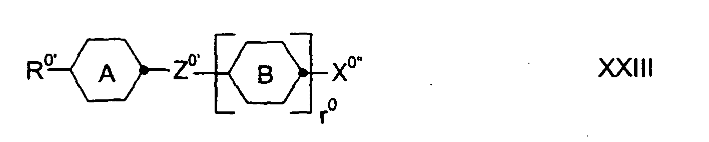 wobei 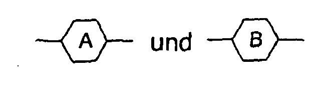 jeweils unabhängig voneinander, 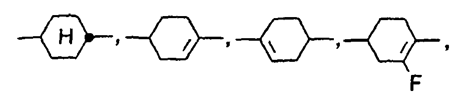 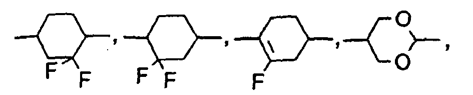 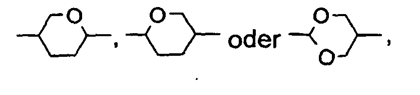
   - Z^{0'}: Einfachbindung, -C₂H₄-, -C₄H₈-, -COO-,-CH₂O-, -OCH₂-, -O-CO-, -CF₂O- oder -OCF₂-,
   - r⁰: 1 oder 2,
   - P^{0'}: die für R⁰ angegebenen Bedeutungen haben, und
   - X^{0"}: OCF₃, F, Cl, CF₃, Alkyl, Alkoxy oder Alkenyl
   bedeuten.
- Bevorzugte Unterformeln der Formel XXIII sind

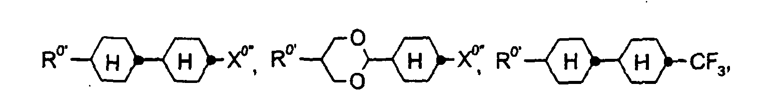

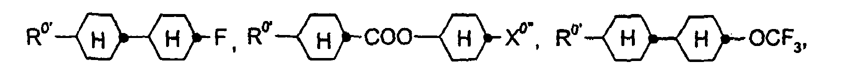

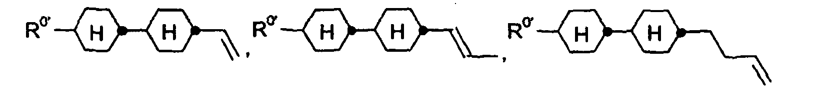

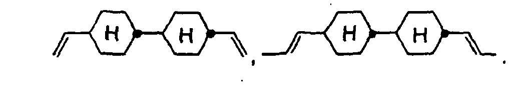

Ganz besonders bevorzugte Unterformeln der Formel XXIII sind 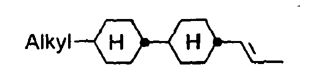 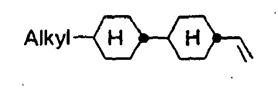 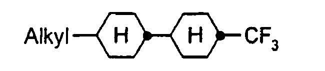 wobei
Alkyl ein geradkettiger Alkylrest mit 1-8 C-Atomen, insbesondere mit 2-5 C-Atomen ist.
- Das Medium enthält vorzugsweise zwei oder drei Verbindungen der Formel XXIII.
- Der Anteil der Verbindungen der Formel XXIII im erfindungsgemäßen Medium beträgt 5-40 Gew.%, insbesondere 5-35 Gew.%.
- Das Gewichtsverhältnis I: (II + III + IV + V + VI + VII + VIII) ist vorzugsweise 1 : 10 bis 10: 1.
- Das Medium besteht im wesentlichen aus Verbindungen ausgewählt aus der Gruppe bestehend aus den allgemeinen Formeln I bis XVIII.

Der Ausdruck "Alkyl" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Besonders Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formel II, III, IV, V, VI, VII und/oder VIII zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben einer oder mehreren Verbindungen der Formel I eine oder mehrere Verbindungen der Formel IV enthalten, insbesondere Verbindungen der Formel IVa und/oder IVd, worin X⁰ F, OCHF₂ oder OCF₃ bedeutet. Die Verbindungen der Formeln I bis VIII sind farblos, stabil und untereinander und mit anderen Flüssigkristallmaterialien gut mischbar. Weiterhin zeichnen sich die erfindungsgemäßen Mischungen durch sehr hohe Klärpunkte aus, wobei die Werte für die Rotationsviskosität γ₁ vergleichsweise niedrig sind.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI + VII + VIII hängt weitgehend von den gewünschten Eigenschaften, von der Wahl der Komponenten der Formeln I, II, III, IV, V, VI, VII und/oder VIII und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XVIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XVIII ist.

In einer besonders bevorzugten Ausführungsform enthalten die erfindungsgemäßen Medien Verbindungen der Formel II bis VIII (vorzugsweise II, III und/oder IV, insbesondere IVa), worin X⁰ F, OCF₃, OCHF₂, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formel I und der Formel IVa zeichnen sich durch ihre niedrigen Schwellenspannungen aus.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe, Stabilisatoren oder chirale Dotierstoffe zugesetzt werden.

C bedeutet eine kristalline, S eine smektische, S_{C} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2fachen Wert von V₁₀. Δn bezeichnet die optische Anisotropie und nₒ den Brechungsindex. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m bedeuten vorzugsweise 0, 1, 2, 3, 4, 5, 6 oder 7. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |
| V-n | CH₂=CH | CₙH₂ₙ₊₁ | H | H |

Bevorzugte Mischungskomponenten des erfindungsgemäßen Mischungskonzeptes finden sich in den Tabellen A und B:

**Tabelle A:**

| |
|---|
| 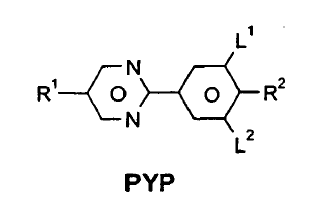 |
| 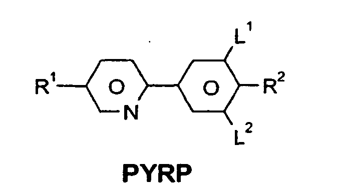 |
| 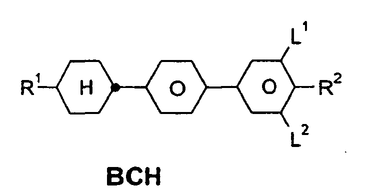 |
| 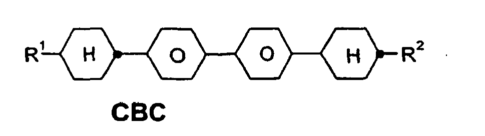 |
| 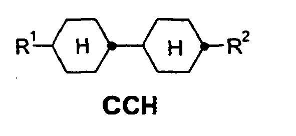 |
| 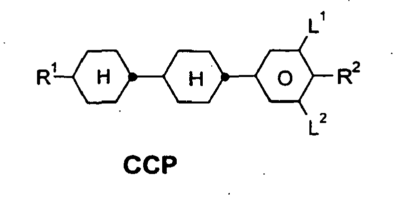 |
| 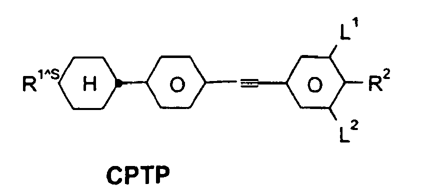 |
| 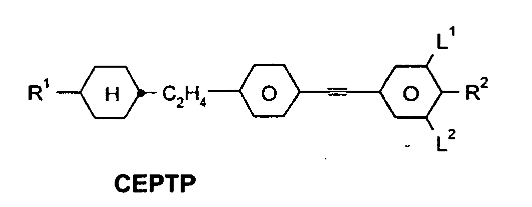 |
| 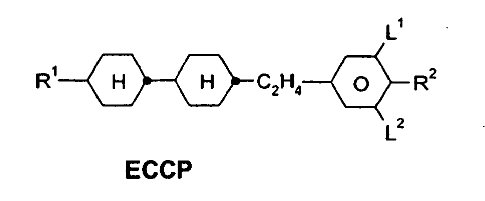 |
| 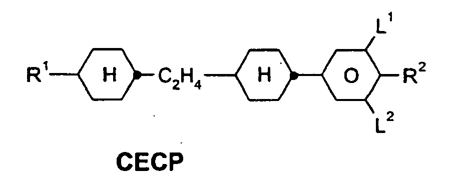 |
| 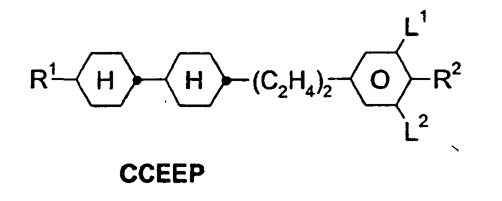 |
| 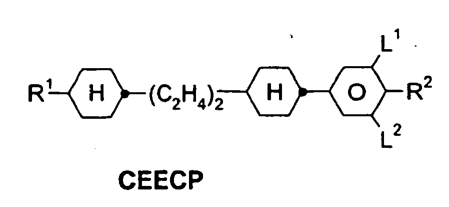 |
| 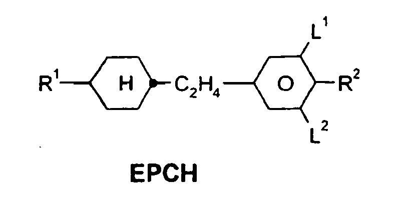 |
| 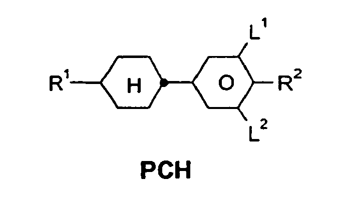 |
| 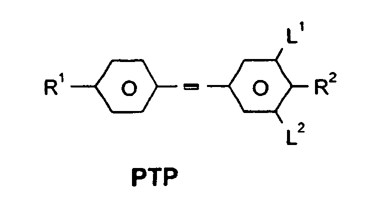 |
| 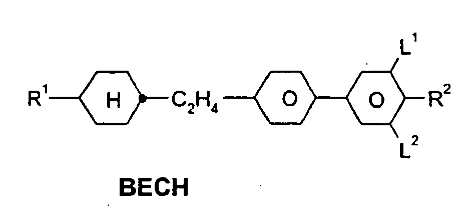 |
| 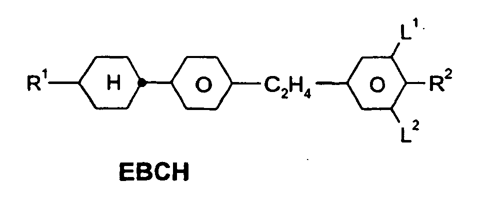 |
| 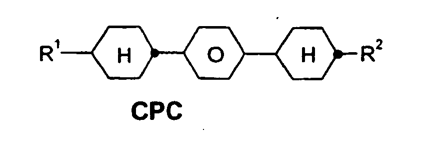 |
| 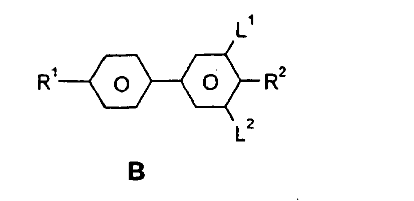 |
| 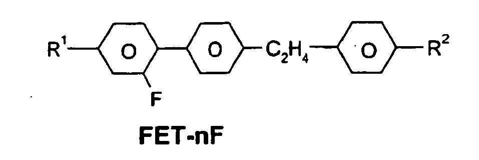 |
| 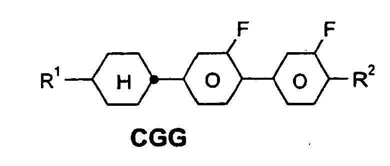 |
| 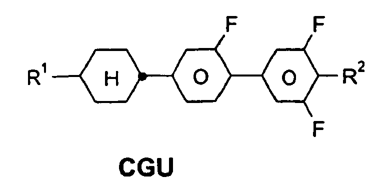 |
| 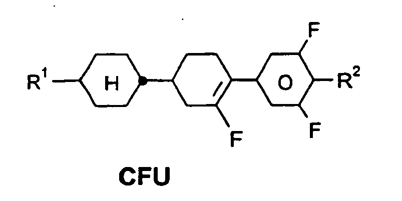 |

**Tabelle B:**

| |
|---|
| 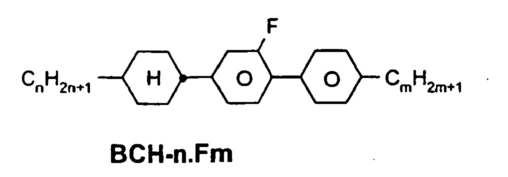 |
| 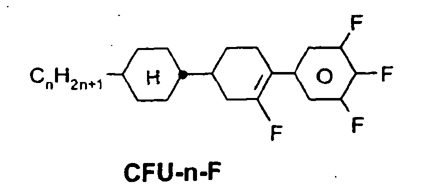 |
| 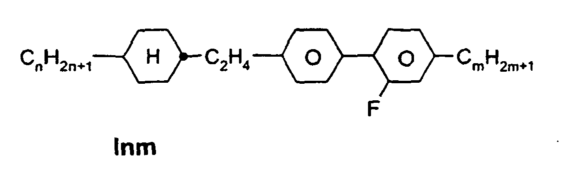 |
| 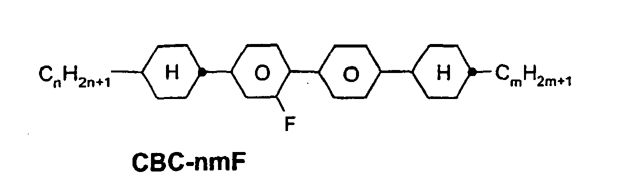 |
| 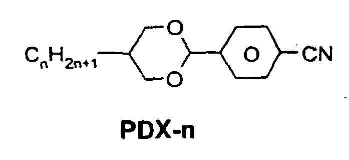 |
| 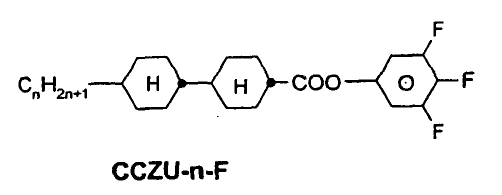 |
| 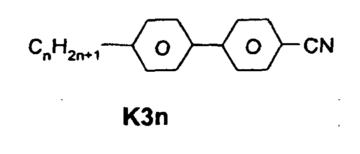 |
| 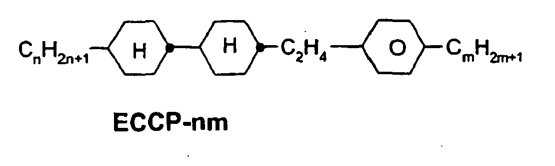 |
| 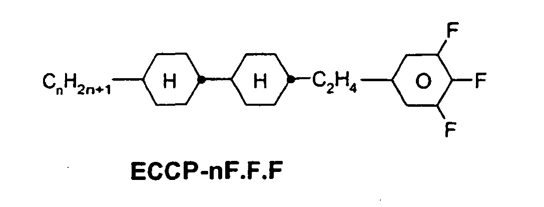 |
| 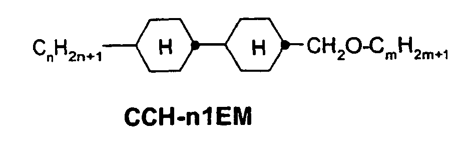 |
| 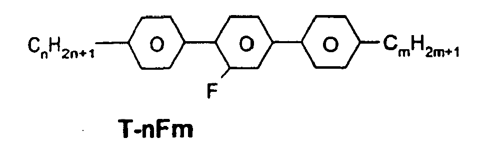 |
| 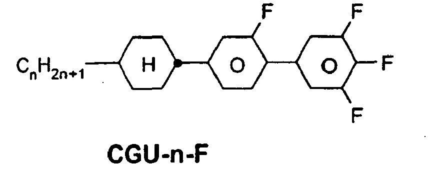 |
| 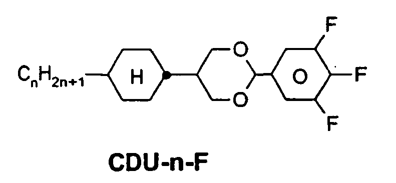 |
| 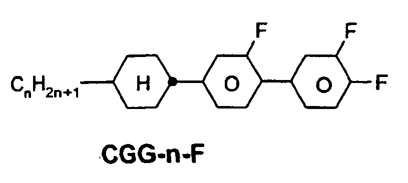 |
| 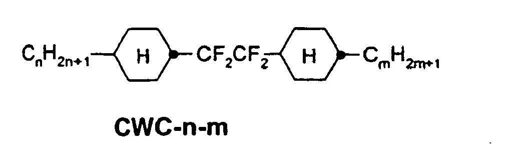 |
| 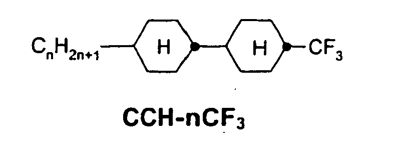 |
| 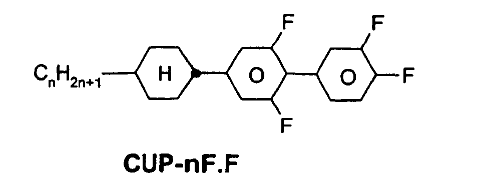 |
| 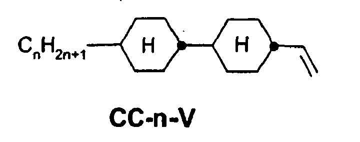 |
| 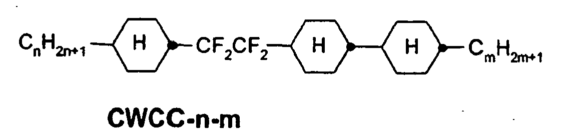 |
| 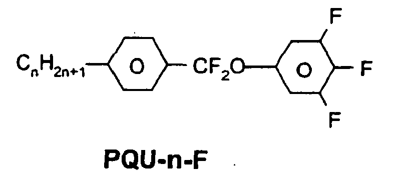 |
| 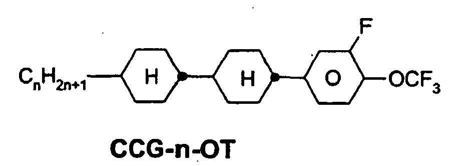 |
| 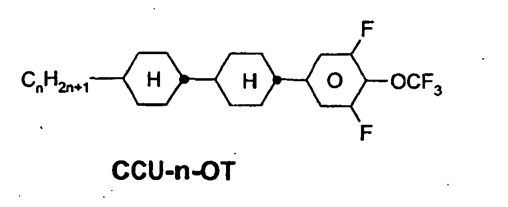 |
| 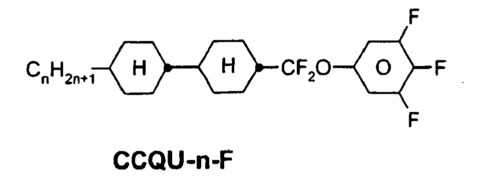 |
| 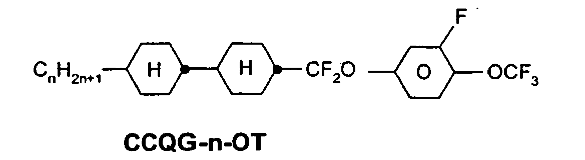 |
| 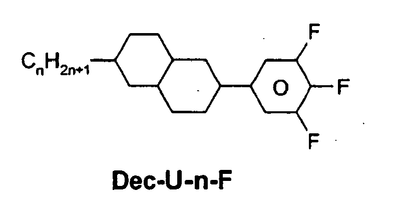 |
| 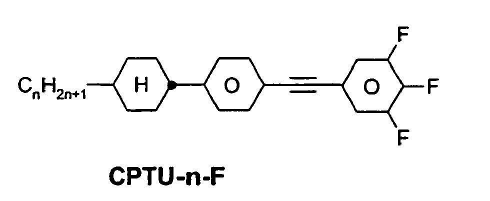 |
| 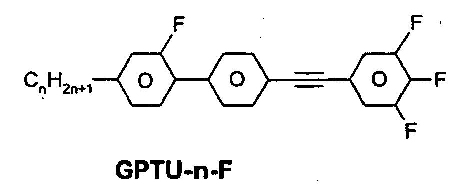 |
| 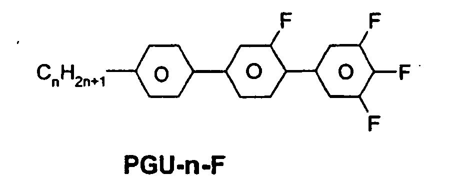 |
| 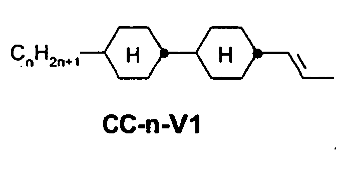 |
| 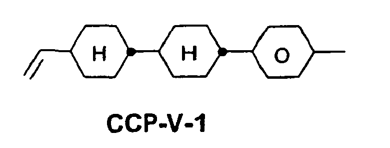 |
| 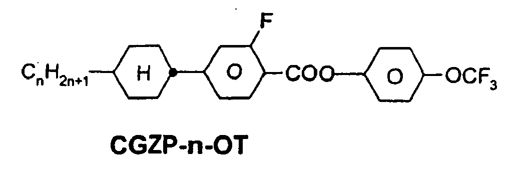 |
| 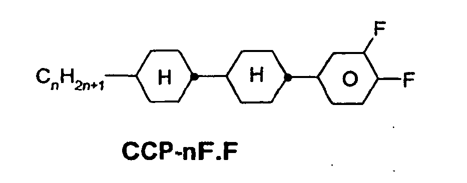 |
| 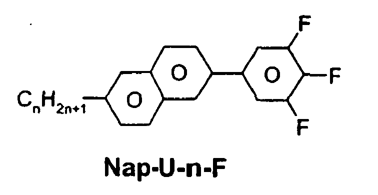 |
| 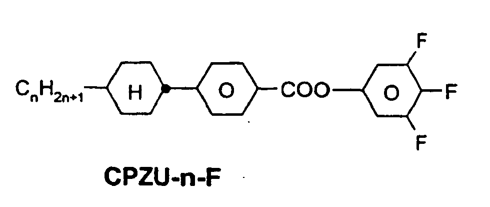 |
| 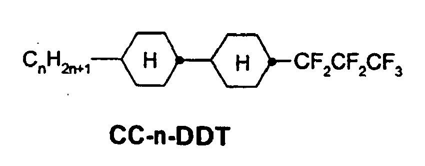 |
| 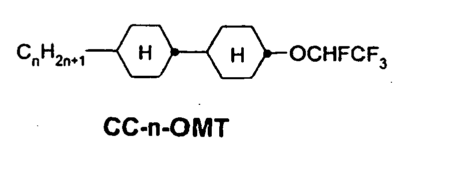 |
| 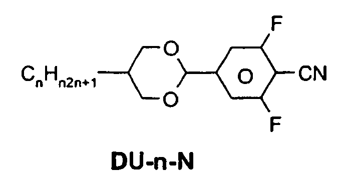 |
| 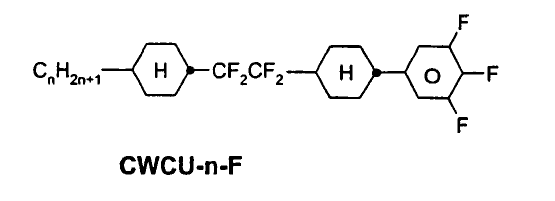 |
| 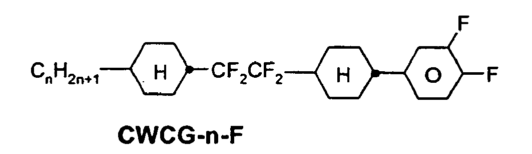 |
| 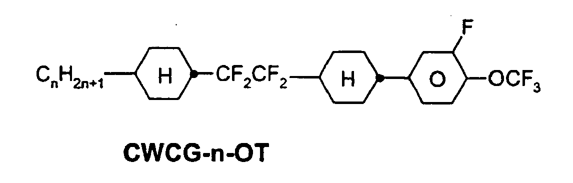 |
| 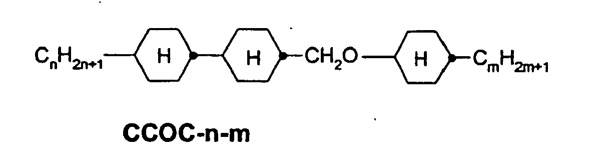 |
| 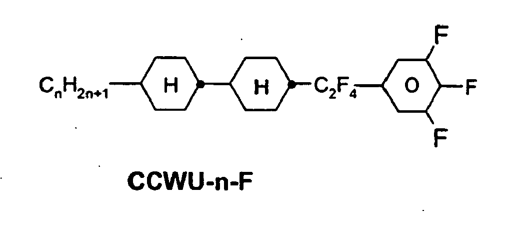 |
| 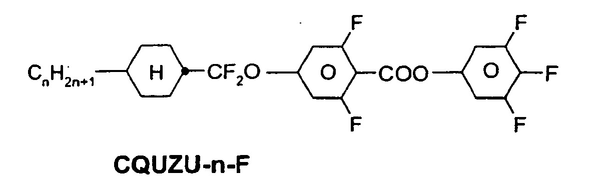 |
| 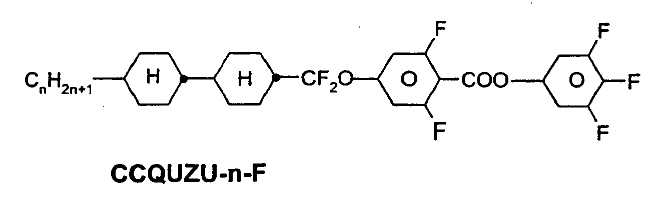 |
| 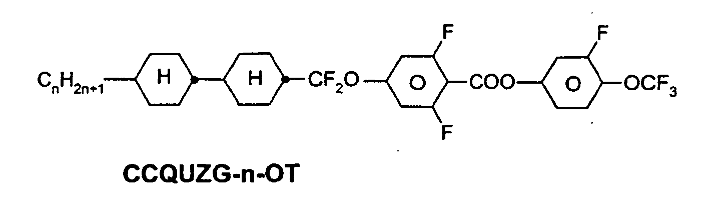 |
| 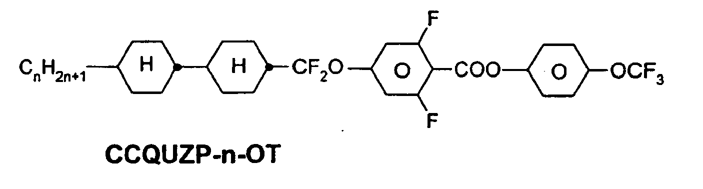 |
| 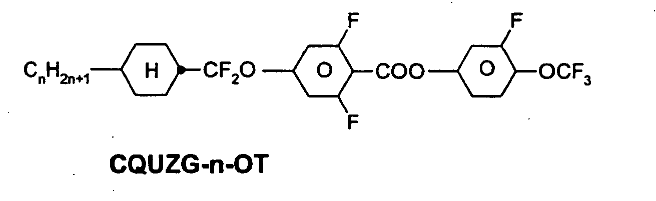 |

**Tabelle C:**

| In der Tabelle C werden mögliche Dotierstoffe angegeben, die in der Regel den erfindungsgemäßen Mischungen zugesetzt werden. |
|---|
| 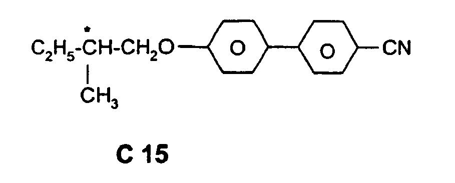 |
| 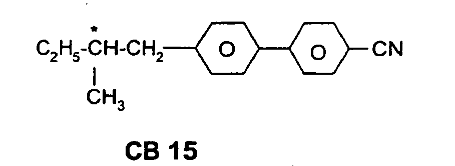 |
| 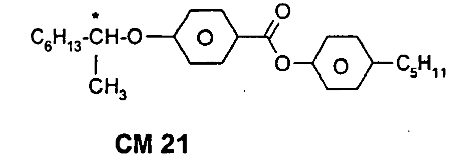 |
| 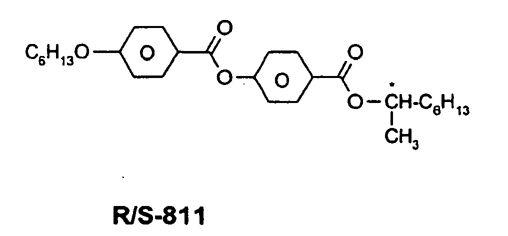 |
| 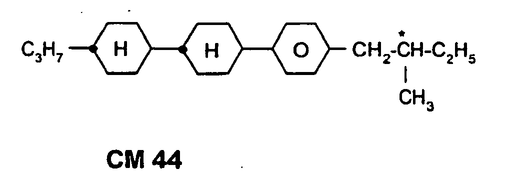 |
| 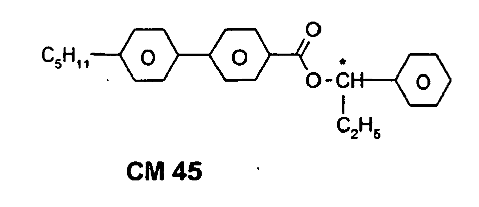 |
| 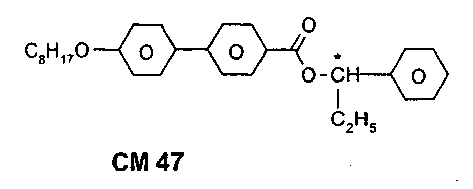 |
| 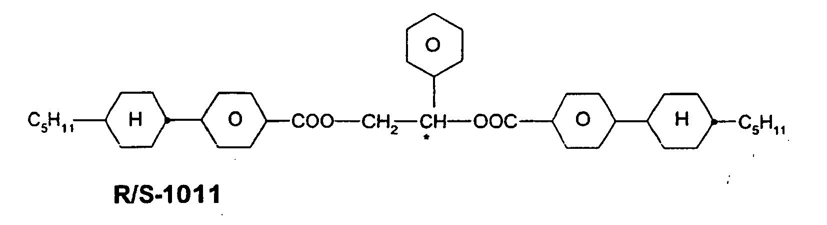 |
| 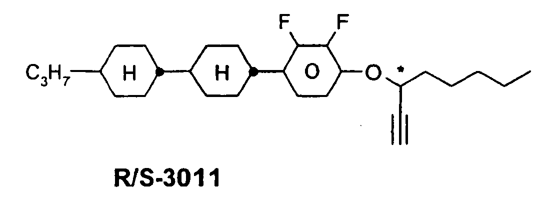 |
| 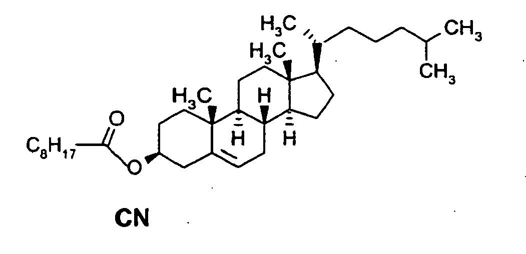 |
| 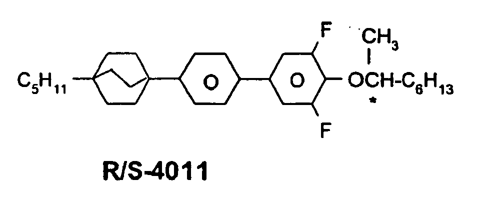 |
| 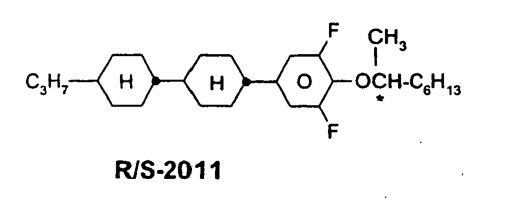 |

**Tabelle D:**

| Stabilisatoren, die beispielsweise den erfindungsgemäßen Mischungen zugesetzt werden können, werden nachfolgend genannt. |
|---|
| 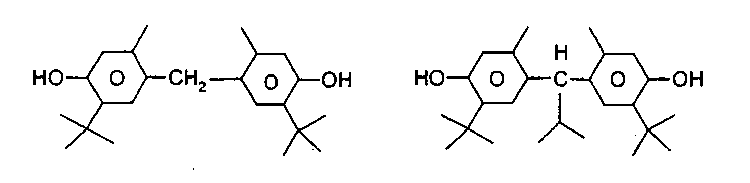 |
| 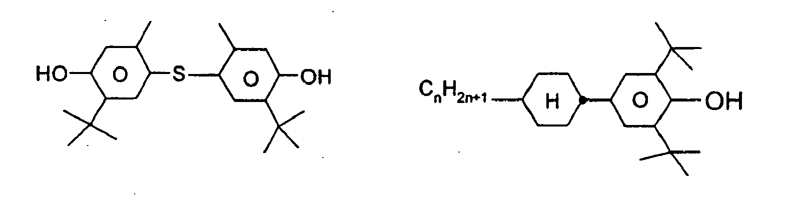 |
| 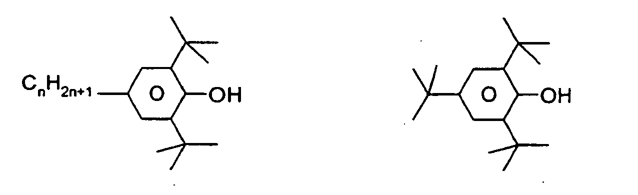 |
| 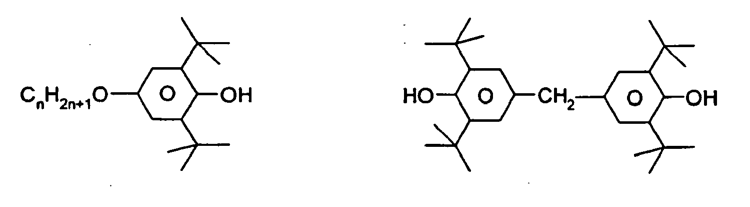 |
| 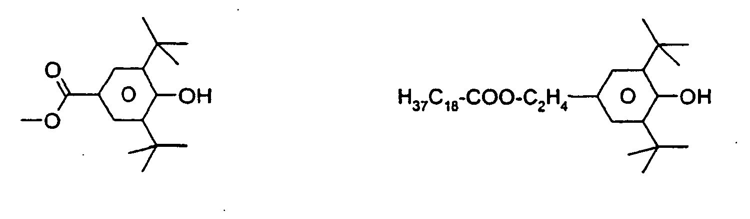 |
| 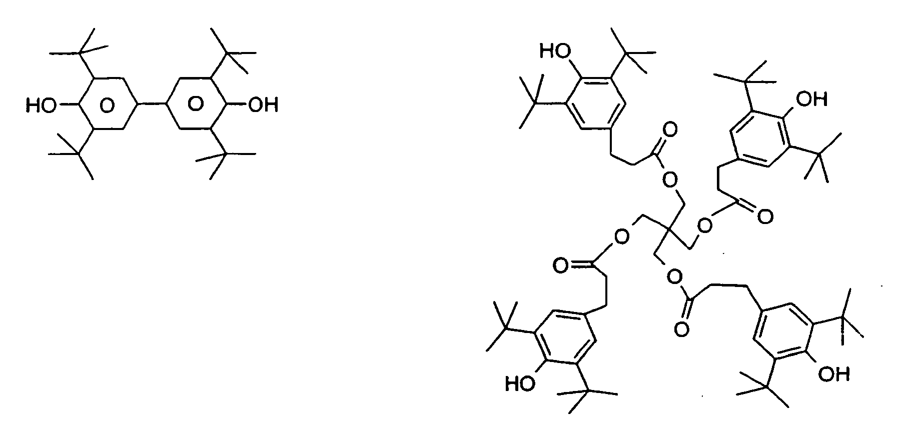 |
| 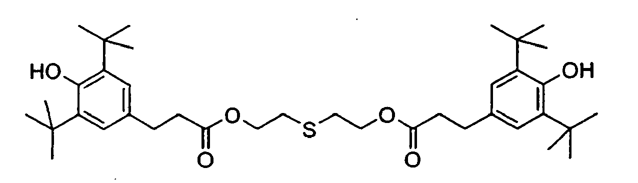 |
| 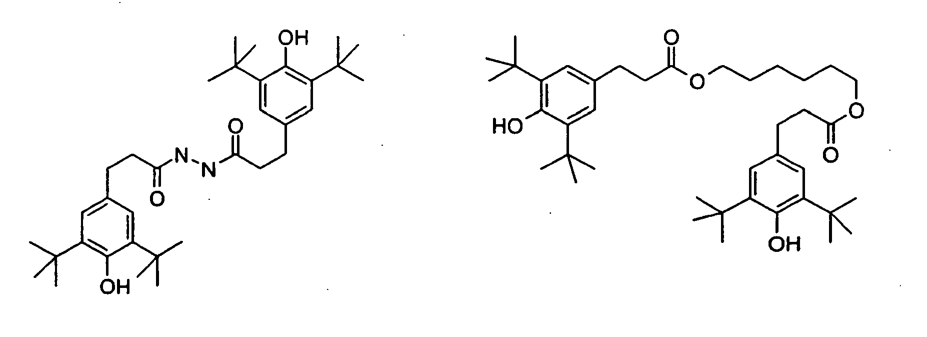 |
| 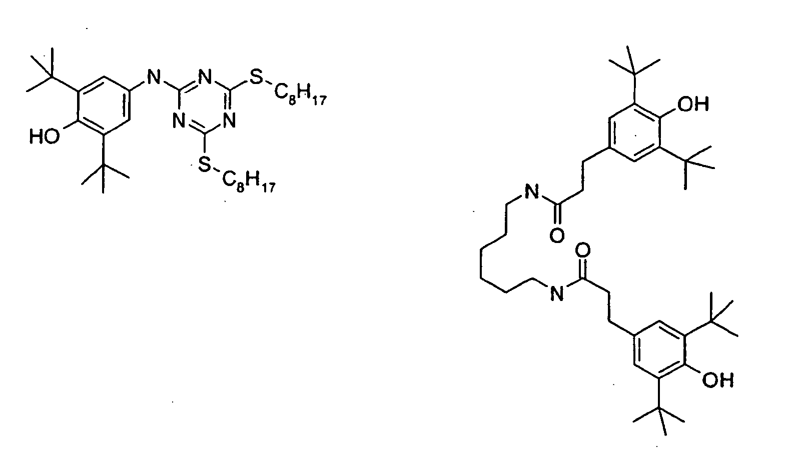 |
| 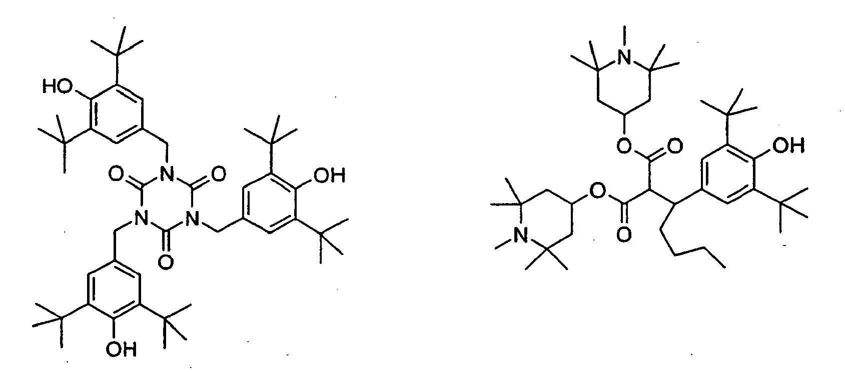 |
| 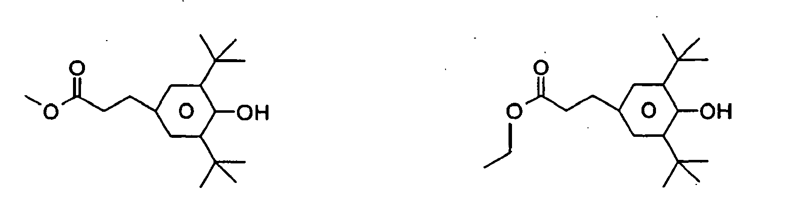 |
| 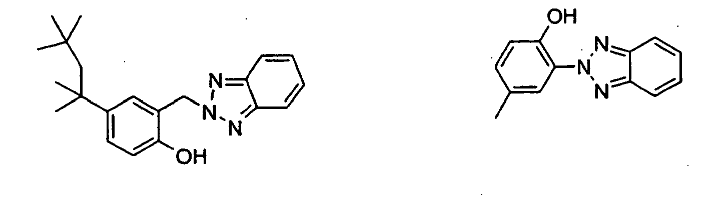 |
| 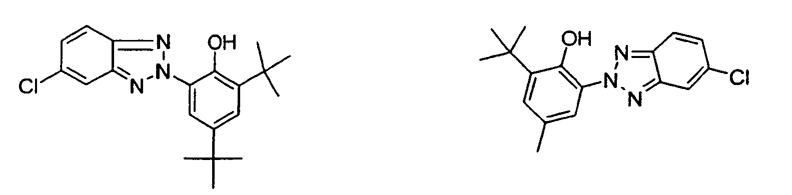 |
| 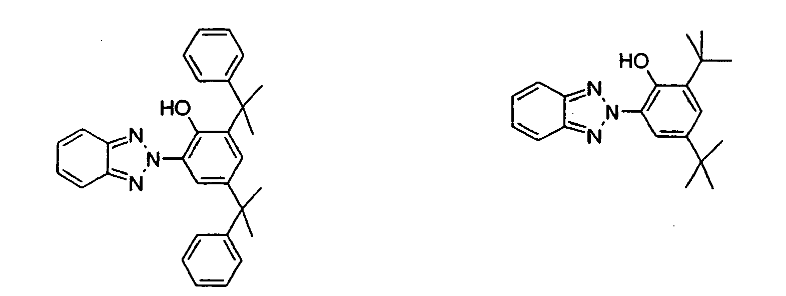 |
| 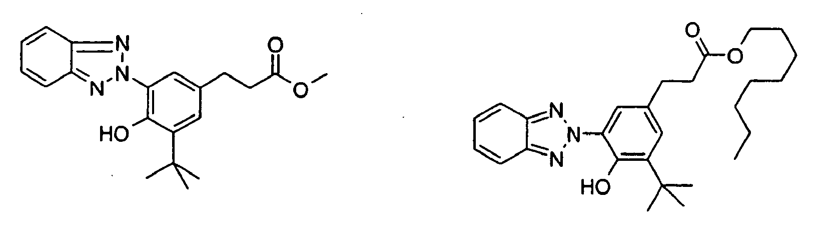 |
| 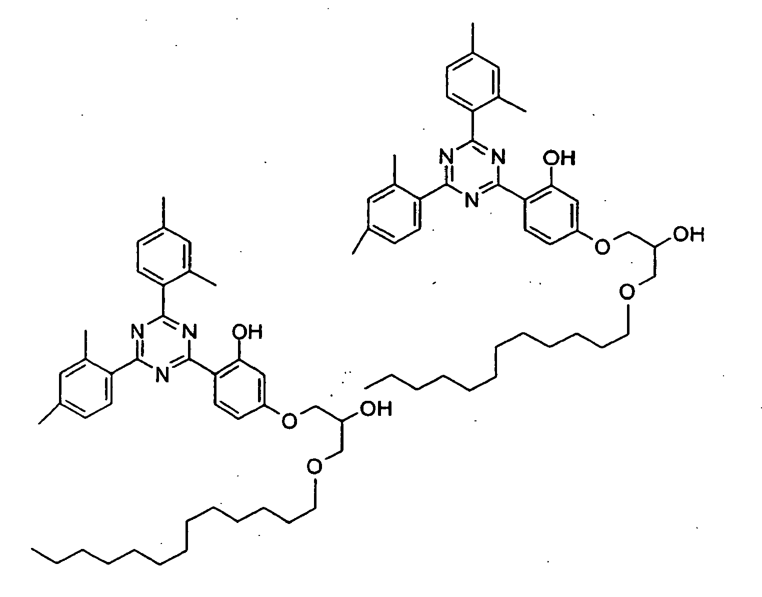 |
| 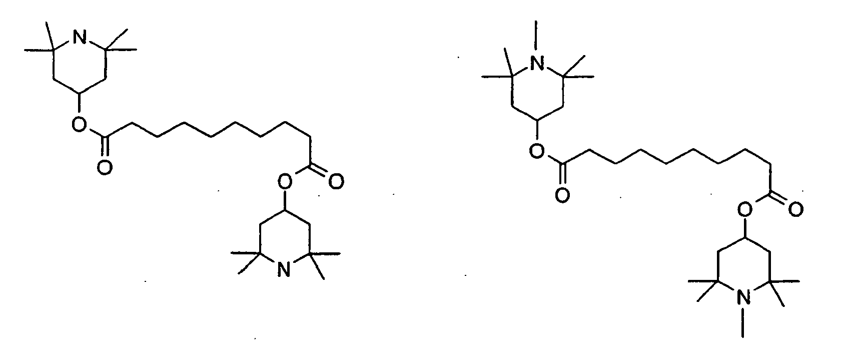 |

Besonders bevorzugte Mischungen enthalten neben einer oder mehreren Verbindungen der Formel I ein, zwei, drei, vier, fünf oder mehr Verbindungen aus Tabelle B.

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C). Die Fließviskosität ν₂₀ (mm²/sec) und die Rotationsviskosität γ₁ (mPa·s) wurden jeweils bei 20 °C bestimmt.

In den Beispielen bedeutet "Übliche Aufarbeitung" man gibt gegebenenfalls Wasser hinzu, extrahiert mit Dichlormethan, Diethylether, Methyltert.Butylether oder Toluol, trennt ab, trocknet die organische Phase, dampft ein und reinigt das Produkt durch Destillation unter reduziertem Druck oder Kristallisation und/oder Chromatographie. Folgende Abkürzungen werden verwendet:

| | |
|---|---|
| n-BuLi | 1,6 molare Lösung von n-Butyllithium in n-Hexan |
| DMAP | 4-(Dimethylamino)-pyridin |
| THF | Tetrahydrofuran |
| DCC | N,N'-Dicyclohexylcarbodiimid |
| RT | Raumtemperatur |

### Beispiel 1

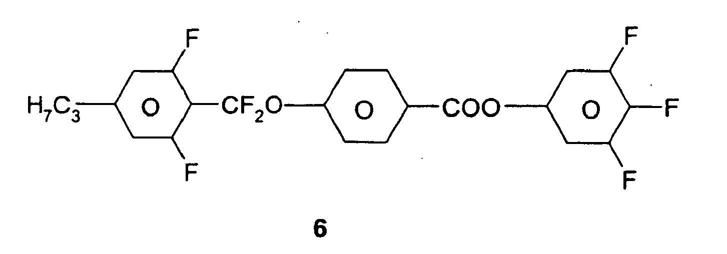

### Schritt 1.1

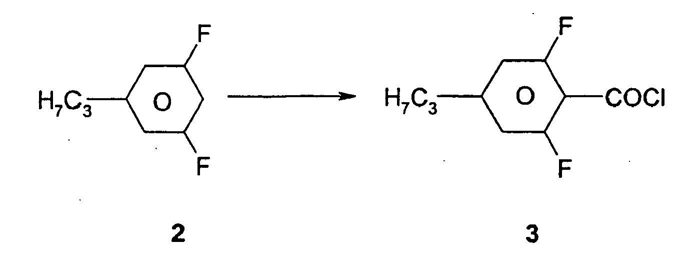

Eine Lösung von 0,2 mol **2** in 300 ml THF wird bei -40 °C mit 0,21 mol Lithiumdiisopropylamid (LDA; 1 M in THF) behandelt. Nach 0,5 h wird ein kräftiger Strom CO₂ eingeleitet. Die Reaktionsmischung wird in 1,5 l eiskalte 1 N HCl gegossen. Die Lösung wird mit CH₂Cl₂ extrahiert, die vereinten organischen Extrakte über Na₂SO₄ getrocknet und zur Trockene eingedampft. Zur Reinigung wird das Rohprodukt aus Toluol umkristallisiert. Die so erhaltene Carbonsäure wird in 200 ml SOCl₂ gelöst und nach Zusatz von 0,1 ml DMF für 3 h zum Sieden erhitzt. Das überschüssige SOCl₂ wird destillativ entfernt.

### Schritt 1.2

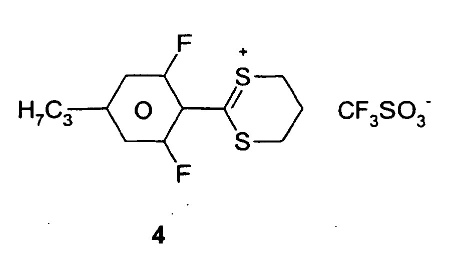

0,1 mol **3** werden bei 0 °C zuerst mit 0,11 mol Propan-1,3-dithiol, dann mit 0,25 mol Trifluormethansulfonsäure versetzt. Die Mischung wird unter Eiskühlung 1 h gerührt, dann lässt man langsam 0,4 mol Acetanhydrid zulaufen. Nach einer weitren Stunde fügt man 500 ml Diethylether zu, saugt das ausgefallene Dithianyliumsalz 4 ab und trocknet es im Vakuum: Ausbeute 82 %.

### Schritt 1.3

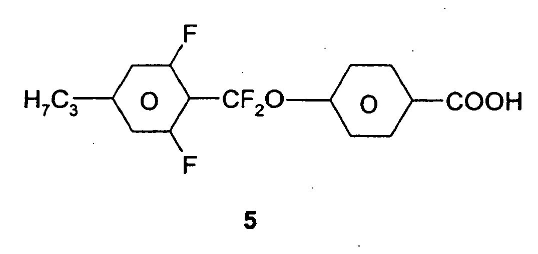

Eine Suspension von 0,1 mol **4** in 300 ml CH₂Cl₂ wird auf -70 °C gekühlt und tropfenweise mit einer Mischung von 0,15 mol 4-Hydroxybenzoesäureethylester, 0,17 mol NEt₃ und 100 ml CH₂Cl₂ versetzt. Nach 5 min tropft man zuerst 0,5 mol NEt₃ · 3HF zu, und nach weiteren 5 min 0,5 mol Br₂. Man rührt 1 h bei -70 °C, lässt dann auf Raumtemperatur kommen und gießt die orange-gelbe Lösung in eiskalte 0,1 N NaOH. Die Mischung wird mit CH₂Cl₂ extrahiert, die vereinten organischen Extrakte werden über Na₂SO₄ getrocknet und zur Trockene einrotiert. Der rohe Ester wird zur weiteren Reinigung in n-Heptan gelöst und über eine Kieselgelfritte filtriert.

Das Produkt wird 1 h bei Raumtemperatur in einer Mischung aus 200 ml Ethanol und 50 ml 1 N NaOH gerührt. Dann säuert man mit konz. HCl an und fällt das Produkt durch Zugabe von 500 ml Wasser aus.

### Schritt 1.4

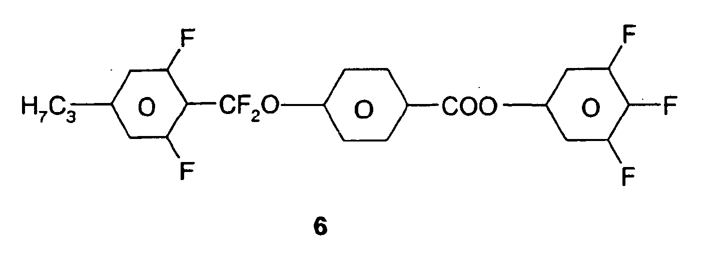

Eine Lösung von 50 mmol **5**, 55 mmol 3,4,5-Trifluorphenol, 55 mmol Dicyclohexylcarbodiimid (DCC) und 5 mmol 4-Dimethylaminopyridin (DMAP) in 200 ml THF wird 18 h bei Raumtemperatur gerührt und wie üblich wässrig aufgearbeitet. Das Rohprodukt wird mit Heptan/Essigester 9:1 an Kieselgel chromatographiert und anschließend aus n-Heptan umkristallisiert.

Analog werden die folgenden Verbindungen der Formel 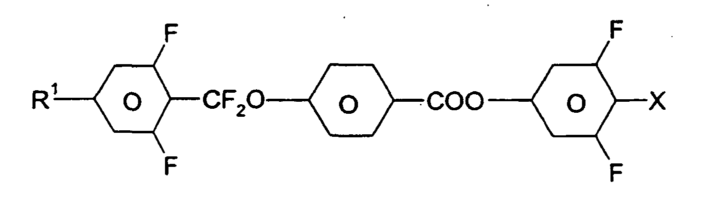 hergestellt:

| R¹ | X |
|---|---|
| CH₃ | F |
| C₂H₅ | F |
| n-C₄H₉ | F |
| n-C₅H₁₁ | F |
| n-C₆H₁₃ | F |
| n-C₇H₁₅ | F |
| CH₂=CH | F |
| CH₃CH=CH | F |
| CH₂=CHCH₂CH₂ | F |
| CH₃CH=CHCH₂CH₂ | F |
| CH₃ | OCF₃ |
| C₂H₅ | OCF₃ |
| n-C₃H₇ | OCF₃ |
| n-C₄H₉ | OCF₃ |
| n-C₅H₁₁ | OCF₃ |
| n-C₆H₁₃ | OCF₃ |
| n-C₇H₁₅ | OCF₃ |
| CH₂=CH | OCF₃ |
| CH₃CH=CH | OCF₃ |
| CH₂=CHCH₂CH₂ | OCF₃ |
| CH₃CH=CHCH₂CH₂ | OCF₃ |
| CH₃ | OCHF₂ |
| C₂H₅ | OCHF₂ |
| n-C₃H₇ | OCHF₂ |
| n-C₄H₉ | OCHF₂ |
| n-C₅H₁₁ | OCHF₂ |
| n-C₆H₁₃ | OCHF₂ |
| n-C₇H₁₅ | OCHF₂ |
| CH₂=CH | OCHF₂ |
| CH₃CH=CH | OCHF₂ |
| CH₂=CHCH₂CH₂ | OCHF₂ |
| CH₃CH=CHCH₂CH₂ | OCHF₂ |
| CH₃ | CF₃ |
| C₂H₅ | CF₃ |
| n-C₃H₇ | CF₃ |
| n-C₄H₉ | CF₃ |
| n-C₅H₁₁ | CF₃ |
| n-C₆H₁₃ | CF₃ |
| n-C₇H₁₅ | CF₃ |
| CH₂=CH | CF₃ |
| CH₃CH=CH | CF₃ |
| CH₂=CHCH₂CH₂ | CF₃ |
| CH₃CH=CHCH₂CH₂ | CF₃ |
| CH₃ | OCHFCF₃ |
| C₂H₅ | OCHFCF₃ |
| n-C₃H₇ | OCHFCF₃ |
| n-C₄H₉ | OCHFCF₃ |
| n-C₅H₁₁ | OCHFCF₃ |
| n-C₆H₁₃ | OCHFCF₃ |
| n-C₇H₁₅ | OCHFCF₃ |
| CH₂=CH | OCHFCF₃ |
| CH₃CH=CH | OCHFCF₃ |
| CH₂=CHCH₂CH₂ | OCHFCF₃ |
| CH₃CH=CHCH₂CH₂ | OCHFCF₃ |
| CH₃ | OCH₂CHFCF₃ |
| C₂H₅ | OCH₂CHFCF₃ |
| n-C₃H₇ | OCH₂CHFCF₃ |
| n-C₄H₉ | OCH₂CHFCF₃ |
| n-C₅H₁₁ | OCH₂CHFCF₃ |
| n-C₆H₁₃ | OCH₂CHFCF₃ |
| n-C₇H₁₅ | OCH₂CHFCF₃ |
| CH₂=CH | OCH₂CHFCF₃ |
| CH₃CH=CH | OCH₂CHFCF₃ |
| CH₂=CHCH₂CH₂ | OCH₂CHFCF₃ |
| CH₃CH=CHCH₂CH₂ | OCH₂CHFCF₃ |
| CH₃ | OCF₂CHFCF₃ |
| C₂H₅ | OCF₂CHFCF₃ |
| n-C₃H₇ | OCF₂CHFCF₃ |
| n-C₄H₉ | OCF₂CHFCF₃ |
| n-C₅H₁₁ | OCF₂CHFCF₃ |
| n-C₆H₁₃ | OCF₂CHFCF₃ |
| n-C₇H₁₅ | OCF₂CHFCF₃ |
| CH₂=CH | OCF₂CHFCF₃ |
| CH₃CH=CH | OCF₂CHFCF₃ |
| CH₂=CHCH₂CH₂ | OCF₂CHFCF₃ |
| CH₃CH=CHCH₂CH₂ | OCF₂CHFCF₃ |
| CH₃ | SF₄ |
| C₂H₅ | SF₄ |
| n-C₃H₇ | SF₄ |
| n-C₄H₉ | SF₄ |
| n-C₅H₁₁ | SF₄ |
| n-C₆H₁₃ | SF₄ |
| n-C₇H₁₅ | SF₄ |
| CH₂=CH | SF₄ |
| CH₃CH=CH | SF₄ |
| CH₂=CHCH₂CH₂ | SF₄ |
| CH₃CH=CHCH₂CH₂ | SF₄ |
| CH₃ | CN |
| C₂H₅ | CN |
| n-C₃H₇ | CN |
| n-C₄H₉ | CN |
| n-C₅H₁₁ | CN |
| n-C₆H₁₃ | CN |
| n-C₇H₁₅ | CN |
| CH₂=CH | CN |
| CH₃CH=CH | CN |
| CH₂=CHCH₂CH₂ | CN |
| CH₃CH=CHCH₂CH₂ | CN |

### Beispiel 2

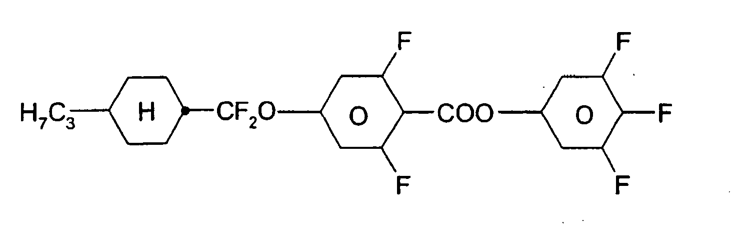

### Schritt 2.1

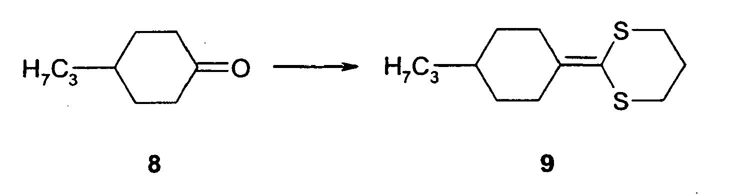

2,858 mol 2-Trimethylsilyl-1,3-dithian werden in 1,5 l abs. THF vorgelegt und bei -70 °C wird 2,868 mol BuLi (15%ige Lösung) innerhalb von 0,5 h zugetropft. Man lässt langsam auf Raumtemperatur erwärmen und bei -70 °C wird 2,852 mol **8** in 1 l abs. THF zugetropft. Das Reaktionsgemisch wird über Nacht bei Raumtemperatur gerührt, auf Eis gegeben und mit Methyl-tert.-Butyl-Ether extrahiert. Die vereinigten organischen Phasen werden mit gesättigter Natriumchloridlösung gewaschen, mit Natriumsulfat getrocknet, filtriert und eingeengt. Der Rückstand wird im Vakum destilliert. Sdp. 150 - 160 °C (1 mbar)

### Schritt 2.2

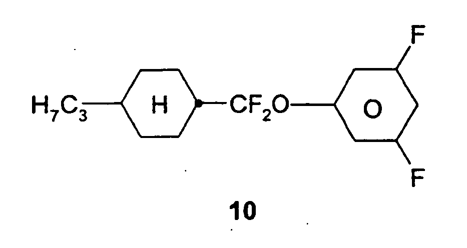

0,325 mol **9** werden in 400 ml Dichlormethan gelöst und unter Eiskühlung werden 0,330 mol Trifluormethansulfonsäure zugetropft. Nach 15 Minuten wird die Kühlung entfernt und 0,5 h bei Raumtemperatur gerührt. Anschließend wird auf 70 °C gekühlt und eine Mischung aus 0,575 mol Triethylamin, 0,490 mol 3,5-Difluorphenol in 200 ml Dichlormethan hinzugegeben und 1 h bei -70 °C gerührt. Dann wird mit 1,613 mol Triethylaminhydrofluorid versetzt und nach 5 Minuten werden 1,609 mol 1 ,3-Dibrom-5,5-dimethylhydanthoin suspendiert in 200 ml Dichlormethan langsam zugegeben. Man rührt 1 h, lässt das Reaktionsgemisch auf -20 °C erwärmen und gibt die orangefarbene Lösung unter Rühren auf eine Mischung aus Eis und 500 ml Natronlauge. Die organischen Phasen werden abgetrennt und die wässrige Phase wird mit Dichlormethan extrahiert. Zuletzt wird wie üblich aufgearbeitet. Das Produkt wird über Kieselgel (n-Heptan/Essigester 10:1) gefrittet. Das Eluat wird zuletzt eingeengt.

### Schritt 2.3

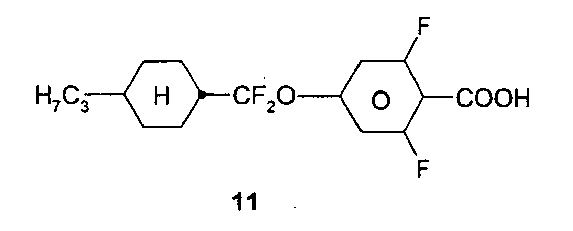

0,106 mol **10** in 500 ml abs. THF werden bei -70 °C in einer Stickstoffatmosphäre mit 0,19 mol Butyllithium (15%ige Lösung) versetzt. Nach beendeter Zugabe rührt man 1 h und schüttet das Reaktionsgemisch auf Trockeneis. Man lässt das Reaktionsgemisch auf 0 °C erwärmen, versetzt mit 50 ml Wasser und säuert mit 25 ml konz. Salzsäure an. Nach Zugabe von 50 ml Methyl-tert.butylether wird die wässrige Phase abgetrennt und mit Methyl-tert.butylether extrahiert. Die vereinigten organischen Phasen werden wie üblich aufgearbeitet. Das Produkt wird aus n-Heptan (Toluol 2:1) umkristallisiert.

### Schritt 2.4

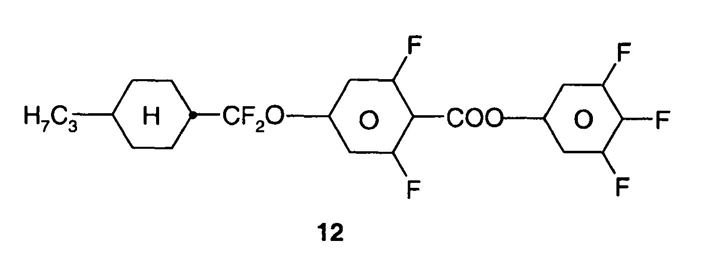

18,66 mol **11**, 18,91 mmol 3,4,5-Trifluorphenol in 120 ml Dichlormethan werden auf 5 °C gekühlt. Nach Zugabe von N,N'-Dicyclohexylcarbodiimid in 30 ml Dichlormethan wird über Nacht bei Raumtemperatur gerührt. Nach Zugabe von 3,174 mmol Oxalsäure-Dihydrat wird 1 h nachgerührt. Der Bodensatz wird abgesaugt und die Lösung wird eingeengt. Der Rückstand wird in n-Heptan/Methyl-tert.butylether gelöst und über eine Kieselgelsäule filtriert. Das Eluat wird eingeengt und der Rückstand aus n-Heptan umkristallisiert. K 61 N 71,6 I; Δn = 0,0870; Δε = 24,5

Analog werden die folgenden Verbindungen der Formel 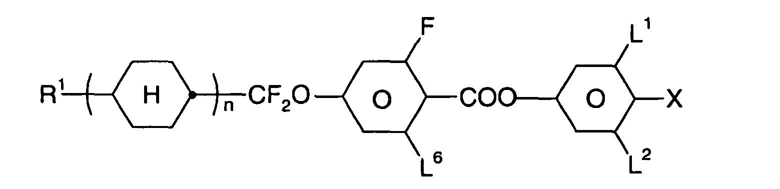 hergestellt (für L¹ = H nur als Vergleichsversuch):

| R¹ | n | X | L¹ | L² | L⁶ |
|---|---|---|---|---|---|
| CH₃ | 1 | F | F | F | F |
| C₂H₅ | 1 | F | F | F | F |
| n-C₄H₉ | 1 | F | F | F | F |
| n-C₅H₁₁ | 1 | F | F | F | F |
| n-C₆H₁₃ | 1 | F | F | F | F |
| n-C₇H₁₅ | 1 | F | F | F | F |
| CH₂=CH | 1 | F | F | F | F |
| CH₃CH=CH | 1 | F | F | F | F |
| CH₂=CHCH₂CH₂ | 1 | F | F | F | F |
| CH₃-CH=CHCH₂CH₂ | 1 | F | F | F | F |
| CH₃ | 1 | OCF₃ | F | F | F |
| C₂H₅ | 1 | OCF₃ | F | F | F |
| n-C₃H₇ | 1 | OCF₃ | F | F | F |
| n-C₄H₉ | 1 | OCF₃ | F | F | F |
| n-C₅H₁₁ | 1 | OCF₃ | F | F | F |
| n-C₆H₁₃ | 1 | OCF₃ | F | F | F |
| n-C₇H₁₅ | 1 | OCF₃ | F | F | F |
| CH₂=CH | 1 | OCF₃ | F | F | F |
| CH₃CH=CH | 1 | OCF₃ | F | F | F |
| CH₂=CHCH₂CH₂ | 1 | OCF₃ | F | F | F |
| CH₃-CH=CHCH₂CH₂ | 1 | OCF₃ | F | F | F |
| CH₃ | 1 | OCHF₂ | F | F | F |
| C₂H₅ | 1 | OCHF₂ | F | F | F |
| n-C₃H₇ | 1 | . OCHF₂ | F | F | F |
| n-C₄H₉ | 1 | OCHF₂ | F | F | F |
| n-C₅H₁₁ | 1 | OCHF₂ | F | F | F |
| n-C₆H₁₃ | 1 | OCHF₂ | F | F | F |
| n-C₇H₁₅ | 1 | OCHF₂ | F | F | F |
| CH₂=CH | 1 | OCHF₂ | F | F | F |
| CH₃CH=CH | 1 | OCHF₂ | F | F | F |
| CH₂=CHCH₂CH₂ | 1 | OCHF₂ | F | F | F |
| CH₃-CH=CHCH₂CH₂ | 1 | OCHF₂ | F | F | F |
| CH₃ | 1 | OC₂F₅ | F | F | F |
| C₂H₅ | 1 | OC₂F₅ | F | F | F |
| n-C₃H₇ | 1 | OC₂F₅ | F | F | F |
| n-C₄H₉ | 1 | OC₂F₅ | F | F | F |
| n-C₅H₁₁ | 1 | OC₂F₅ | F | F | F |
| n-C₆H₁₃ | 1 | OC₂F₅ | F | F | F |
| n-C₇H₁₅ | 1 | OC₂F₅ | F | F | F |
| CH₂=CH | 1 | OC₂F₅ | F | F | F |
| CH₃CH=CH | 1 | OC₂F₅ | F | F | F |
| CH₂=CHCH₂CH₂ | 1 | OC₂F₅ | F | F | F |
| CH₃-CH=CHCH₂CH₂ | 1 | OC₂F₅ | F | F | F |
| CH₃ | 1 | OCH₂CF₂CF₃ | F | F | F |
| C₂H₅ | 1 | OCH₂CF₂CF₃ | F | F | F |
| n-C₃H₇ | 1 | OCH₂CF₂CF₃ | F | F | F |
| n-C₄H₉ | 1 | OCH₂CF₂CF₃ | F | F | F |
| n-C₅H₁₁ | 1 | OCH₂CF₂CF₃ | F | F | F |
| n-C₆H₁₃ | 1 | OCH₂CF₂CF₃ | F | F | F |
| n-C₇H₁₅ | 1 | OCH₂CF₂CF₃ | F | F | F |
| CH₂=CH | 1 | OCH₂CF₂CF₃ | F | F | F |
| CH₃CH=CH | 1 | OCH₂CF₂CF₃ | F | F | F |
| CH₂=CHCH₂CH₂ | 1 | OCH₂CF₂CF₃ | F | F | F |
| CH₃-CH=CHCH₂CH₂ | 1 | OCH₂CF₂CF₃ | F | F | F |
| CH₃ | 1 | F | F | H | F |
| C₂H₅ | 1 | F | F | H | F |
| n-C₃H₇ | 1 | F | F | H | F K 62 N 92,7 I; Δε = 18,9; Δn = 0,1040 |
| n-C₄H₉ | 1 | F | F | H | F |
| n-C₅H₁₁ | 1 | F | F | H | F |
| n-C₆H₁₃ | 1 | F | F | H | F |
| n-C₇H₁₅ | 1 | F | F | H | F |
| CH₂=CH | 1 | F | F | H | F |
| CH₃CH=CH | 1 | F | F | H | F |
| CH₂=CHCH₂CH₂ | 1 | F | F | H | F |
| CH₃-CH=CHCH₂CH₂ | 1 | F | F | H | F |
| CH₃ | 1 | OCF₃ | F | H | F |
| C₂H₅ | 1 | OCF₃ | F | H | F |
| n-C₃H₇ | 1 | OCF₃ | F | H | F K 53 S_{A} (42) N 110,9, I; Δε = 21,5; Δn = 0,1030 |
| n-C₄H₉ | 1 | OCF₃ | F | H | F |
| n-C₅H₁₁ | 1 | OCF₃ | F | H | F |
| n-C₆H₁₃ | 1 | OCF₃ | F | H | F |
| n-C₇H₁₅ | 1 | OCF₃ | F | H | F |
| CH₂=CH | 1 | OCF₃ | F | H | F |
| CH₃CH=CH | 1 | OCF₃ | F | H | F |
| CH₂=CHCH₂CH₂ | 1 | OCF₃ | F | H | F |
| CH₃-CH=CHCH₂CH₂ | 1 | OCF₃ | F | H | F |
| CH₃ | 1 | OCHF₂ | F | H | F |
| C₂H₅ | 1 | OCHF₂ | F | H | F |
| n-C₃H₇ | 1 | OCHF₂ | F | H | F |
| n-C₄H₉ | 1 | OCHF₂ | F | H | F |
| n-C₅H₁₁ | 1 | OCHF₂ | F | H | F |
| n-C₆H₁₃ | 1 | OCHF₂ | F | H | F |
| n-C₇H₁₅ | 1 | OCHF₂ | F | H | F |
| CH₂=CH | 1 | OCHF₂ | F | H | F |
| CH₃CH=CH | 1 | OCHF₂ | F | H | F |
| CH₂=CHCH₂CH₂ | 1 | OCHF₂ | F | H | F |
| CH₃-CH=CHCH₂CH₂ | 1 | OCHF₂ | F | H | F |
| CH₃ | 1 | OC₂F₅ | F | H | F |
| C₂H₅ | 1 | OC₂F₅ | F | H | F |
| n-C₃H₇ | 1 | OC₂F₅ | F | H | F |
| n-C₄H₉ | 1 | OC₂F₅ | F | H | F |
| n-C₅H₁₁ | 1 | OC₂F₅ | F | H | F |
| n-C₆H₁₃ | 1 | OC₂F₅ | F | H | F |
| n-C₇H₁₅ | 1 | OC₂F₅ | F | H | F |
| CH₂=CH | 1 | OC₂F₅ | F | H | F |
| CH₃CH₂=CH | 1 | OC₂F₅ | F | H | F |
| CH₂=CHCH₂CH₂ | 1 | OC₂F₅ | F | H | F |
| CH₃-CH=CHCH₂CH₂ | 1 | OC₂F₅ | F | H | F |
| CH₃ | 1 | OCH₂CF₂CF₃ | F | H | F |
| C₂H₅ | 1 | OCH₂CF₂CF₃ | F | H | F |
| n-C₃H₇ | 1 | OCH₂CF₂CF₃ | F | H | F |
| n-C₄H₉ | 1 | OCH₂CF₂CF₃ | F | H | F |
| n-C₅H₁₁ | 1 | OCH₂CF₂CF₃ | F | H | F |
| n-C₆H₁₃ | 1 | OCH₂CF₂CF₃ | F | H | F |
| n-C₇H₁₅ | 1 | OCH₂CF₂CF₃ | F | H | F |
| CH₂=CH | 1 | OCH₂CF₂CF₃ | F | H | F |
| CH₃CH=CH | 1 | OCH₂CF₂CF₃ | F | H | F |
| CH₂=CHCH₂CH₂ | 1 | OCH₂CF₂CF₃ | F | H | F |
| CH₃-CH=CHCH₂CH₂ | 1 | OCH₂CF₂CF₃ | F | H | F |
| CH₃ | 1 | F | H | H | F |
| C₂H₅ | 1 | F | H | H | F |
| n-C₃H₇ | 1 | F | H | H | F |
| n-C₄H₉ | 1 | F | H | H | F |
| n-C₅H₁₁ | 1 | F | H | H | F |
| n-C₆H₁₃ | 1 | F | H | H | F |
| n-C₇H₁₅ | 1 | F | H | H | F |
| CH₂=CH | 1 | F | H | H | F |
| CH₃CH=CH | 1 | F | H | H | F |
| CH₂=CHCH₂CH₂ | 1 | F | H | H | F |
| CH₃-CH=CHCH₂CH₂ | 1 | F | H | H | F |
| CH₃ | 1 | OCF₃ | H | H | F |
| C₂H₅ | 1 | OCF₃ | H | H | F |
| n-C₃H₇ | 1 | OCF₃ | H | H | F K 47 S_{A} 51 N 127,2 I Δε = 17,8; Δn = 0,1090 |
| n-C₄H₉ | 1 | OCF₃ | H | H | F |
| n-C₅H₁₁ | 1 | OCF₃ | H | H | F |
| n-C₆H₁₃ | 1 | OCF₃ | H | H | F |
| n-C₇H₁₅ | 1 | OCF₃ | H | H | F |
| CH₂=CH- | 1 | OCF₃ | H | H | F |
| CH₃CH=CH | 1 | OCF₃ | H | H | F |
| CH₂=CHCH₂CH₂ | 1 | OCF₃ | H | H | F |
| CH₃-CH=CHCH₂CH₂ | 1 | OCF₃ | H | H | F |
| CH₃ | 1 | OCHF₂ | H | H | F |
| C₂H₅ | 1 | OCHF₂ | H | H | F |
| n-C₃H₇ | 1 | OCHF₂ | H | H | F |
| n-C₄H₉ | 1 | OCHF₂ | H | H | F |
| n-C₅H₁₁ | 1 | OCHF₂ | H | H | F |
| n-C₆H₁₃ | 1 | OCHF₂ | H | H | F |
| n-C₇H₁₅ | 1 | OCHF₂ | H | H | F |
| CH₂=CH | 1 | OCHF₂ | H | H | F |
| CH₃CH=CH | 1 | OCHF₂ | H | H | F |
| CH₂₌CHCH₂CH₂ | 1 | OCHF₂ | H | H | F |
| CH₃-CH=CHCH₂CH₂ | 1 | OCHF₂ | H | H | F |
| CH₃ | 1 | OC₂F₅ | H | H | F |
| C₂H₅ | 1 | OC₂F₅ | H | H | F |
| n-C₃H₇ | 1 | OC₂F₅ | H | H | F |
| n-C₄H₉ | 1 | OC₂F₅ | H | H | F |
| n-C₅H₁₁ | 1 | OC₂F₅ | H | H | F |
| n-C₆H₁₃ | 1 | OC₂F₅ | H | H | F |
| n-C₇H₁₅ | 1 | OC₂F₅ | H | H | F |
| CH₂=CH | 1 | OC₂F₅ | H | H | F |
| CH₃CH=CH | 1 | OC₂F₅ | H | H | F |
| CH₂=CHCH₂CH₂ | 1 | OC₂F₅ | H | H | F |
| CH₃-CH=CHCH₂CH₂ | 1 | OC₂F₅ | H | H | F |
| CH₃ | 1 | OCH₂CF₂CF₃ | H | H | F |
| C₂Hₛ | 1 | OCH₂CF₂CF₃ | H | H | F |
| n-C₃H₇ | 1 | OCH₂CF₂CF₃ | H | H | F |
| n-C₄H₉ | 1 | OCH₂CF₂CF₃ | H | H | F |
| n-C₅H₁₁ | 1 | OCH₂CF₂CF₃ | H | H | F |
| n-C₆H₁₃ | 1 | OCH₂CF₂CF₃ | H | H | F |
| n-C₇H₁₅ | 1 | OCH₂CF₂CF₃ | H | H | F |
| CH₂=CH | 1 | OCH₂CF₂CF₃ | H | H | F |
| CH₃CH₂=CH | 1 | OCH₂CF₂CF₃ | H | H | F |
| CH₂=CHCH₂CH₂ | 1 | OCH₂CF₂CF₃ | H | H | F |
| CH₃-CH=CHCH₂CH₂ | 1 | OCH₂CF₂CF₃ | H | H | F |
| CH₃ | 2 | F | F | F | F |
| C₂H₅ | 2 | F | F | F | F |
| n-C₃H₇ | 2 | F | F | F | F K 95 N 223,2 I; Δε = 24,8; Δn = 0,1060 |
| n-C₄H₉ | 2 | F | F | F | F |
| n-C₃H₇ | 2 | F | F | F | F |
| n-C₅H₁₁ | 2 | F | F | F | F |
| n-C₆H₁₃ | 2 | F | F | F | F |
| n-C₇H₁₅ | 2 | F | F | F | F |
| CH₂=CH | 2 | F | F | F | F |
| CH₃CH=CH | 2 | F | F | F | F |
| CH₂=CHCH₂CH₂ | 2 | F | F | F | F |
| CH₃-CH=CHCH₂CH₂ | 2 | F | F | F | F |
| CH₃ | 2 | OCF₃ | F | F | F |
| C₂H₅ | 2 | OCF₃ | F | F | F |
| n-C₃H₇ | 2 | OCF₃ | F | F | F |
| n-C₄H₉ | 2 | OCF₃ | F | F | F |
| n-C₅H₁₁ | 2 | OCF₃ | F | F | F |
| n-C₆H₁₃ | 2 | OCF₃ | F | F | F |
| n-C₇H₁₅ | 2 | OCF₃ | F | F | F |
| CH₂=CH | 2 | OCF₃ | F | F | F |
| CH₃CH=CH | 2 | OCF₃ | F | F | F |
| CH₂=CHCH₂CH₂ | 2 | OCF₃ | F | F | F |
| CH₃-CH=CHCH₂CH₂ | 2 | OCF₃ | F | F | F |
| CH₃ | 2 | OCHF₂ | F | F | F |
| C₂H₅ | 2 | OCHF₂ | F | F | F |
| n-C₃H₇ | 2 | OCHF₂ | F | F | F |
| n-C₄H₉ | 2 | OCHF₂ | F | F | F |
| n-C₅H₁₁ | 2 | OCHF₂ | F | F | F |
| n-C₆H₁₃ | 2 | OCHF₂ | F | F | F |
| n-C₇H₁₅ | 2 | OCHF₂ | F | F | F |
| CH₂=CH | 2 | OCHF₂ | F | F | F |
| CH₃CH=CH | 2 | OCHF₂ | F | F | F |
| CH₂=CHCH₂CH₂ | 2 | OCHF₂ | F | F | F |
| CH₃-CH=CHCH₂CH₂ | 2 | OCHF₂ | F | F | F |
| CH₃ | 2 | OC₂F₅ | F | F | F |
| C₂H₅ | 2 | OC₂F₅ | F | F | F |
| n-C₃H₇ | 2 | OC₂F₅ | F | F | F |
| n-C₄H₉ | 2 | OC₂F₅ | F | F | F |
| n-C₅H₁₁ | 2 | OC₂F₅ | F | F | F |
| n-C₆H₁₃ | 2 | OC₂F₅ | F | F | F |
| n-C₇H₁₅ | 2 | OC₂F₅ | F | F | F |
| CH₂=CH | 2 | OC₂F₅ | F | F | F |
| CH₃CH₌CH | 2 | OC₂F₅ | F | F | F |
| CH₂=CHCH₂CH₂ | 2 | OC₂F₅ | F | F | F |
| CH₃-CH=CHCH₂CH₂ | 2 | OC₂F₅ | F | F | F |
| CH₃ | 2 | OCH₂CF₂CF₃ | F | F | F |
| C₂H₅ | 2 | OCH₂CF₂CF₃ | F | F | F |
| n-C₃H₇ | 2 | OCH₂CF₂CF₃ | F | F | F |
| n-C₄H₉ | 2 | OCH₂CF₂CF₃ | F | F | F |
| n-C₅H₁₁ | 2 | OCH₂CF₂CF₃ | F | F | F |
| n-C₆H₁₃ | 2 | OCH₂CF₂CF₃ | F | F | F |
| n-C₇H₁₅ | 2 | OCH₂CF₂CF₃ | F | F | F |
| CH₂=CH | 2 | OCH₂CF₂CF₃ | F | F | F |
| CH₃CH=CH | 2 | OCH₂CF₂CF₃ | F | F | F |
| CH₂=CHCH₂CH₂ | 2 | OCH₂CF₂CF₃ | F | F | F |
| CH₃-CH=CHCH₂CH₂ | 2 | OCH₂CF₂CF₃ | F | F | F |
| CH₃ | 2 | F | F | H | F |
| C₂H₅ | 2 | F | F | H | F |
| n-C₃H₇ | 2 | F | F | H | F K 90 N 236,4 I; Δε = 18,2; Δn = 0,1210 |
| n-C₄H₉ | 2 | F | F | H | F |
| n-C₅H₁₁ | 2 | F | F | H | F |
| n-C₆H₁₃ | 2 | F | F | H | F |
| n-C₇H₁₅ | 2 | F | F | H | F |
| CH₂=CH | 2 | F | F | H | F |
| CH₃CH=CH | 2 | F | F | H | F |
| CH₂=CHCH₂CH₂ | 2 | F | F | H | F |
| CH₃-CH=CHCH₂CH₂ | 2 | F | F | H | F |
| CH₃ | 2 | OCF₃ | F | H | F |
| C₂H₅ | 2 | OCF₃ | F | H | F |
| n-C₃H₇ | 2 | OCF₃ | F | H | F K 72 N 244,7 I; Δε = 21,0; Δn = 0,1214 |
| n-C₄H₉ | 2 | OCF₃ | F | H | F |
| n-C₅H₁₁ | 2 | OCF₃ | F | H | F |
| n-C₆H₁₃ | 2 | OCF₃ | F | H | F |
| n-C₇H₁₅ | 2 | OCF₃ | F | H | F |
| CH₂=CH | 2 | OCF₃ | F | H | F |
| CH₃CH=CH | 2 | OCF₃ | F | H | F |
| CH₂=CHCH₂CH₂ | 2 | OCF₃ | F | H | F |
| CH₃-CH=CHCH₂CH₂ | 2 | OCF₃ | F | H | F |
| CH₃ | 2 | OCHF₂ | F | H | F |
| C₂H₅ | 2 | OCHF₂ | F | H | F |
| n-C₃H₇ | 2 | OCHF₂ | F | H | F |
| n-C₄H₉ | 2 | OCHF₂ | F | H | F |
| n-C₅H₁₁ | 2 | OCHF₂ | F | H | F |
| n-C₆H₁₃ | 2 | OCHF₂ | F | H | F |
| n-C₇H₁₅ | 2 | OCHF₂ | F | H | F |
| CH₂=CH | 2 | OCHF₂ | F | H | F |
| CH₃CH=CH | 2 | OCHF₂ | F | H | F |
| CH₂=CHCH₂CH₂ | 2 | OCHF₂ | F | H | F |
| CH₃-CH=CHCH₂CH₂ | 2 | OCHF₂ | F | H | F |
| CH₃ | 2 | OC₂F₅ | F | H | F |
| C₂H₅ | 2 | OC₂F₅ | F | H | F |
| n-C₃H₇ | 2 | OC₂F₅ | F | H | F |
| n-C₄H₉ | 2 | OC₂F₅ | F | H | F |
| n-C₅H₁₁ | 2 | OC₂F₅ | F | H | F |
| n-C₆H₁₃ | 2 | OC₂F₅ | F | H | F |
| n-C₇H₁₅ | 2 | OC₂F₅ | F | H | F |
| CH₂=CH | 2 | OC₂F₅ | F | H | F |
| CH₃CH₂=CH | 2 | OC₂F₅ | F | H | F |
| CH₂=CHCH₂CH₂ | 2 | OC₂F₅ | F | H | F |
| CH₃-CH=CHCH₂CH₂ | 2 | OC₂F₅ | F | H | F |
| CH₃ | 2 | OCH₂CF₂CF₃ | F | H | F |
| C₂H₅ | 2 | OCH₂CF₂CF₃ | F | H | F |
| n-C₃H₇ | 2 | OCH₂CF₂CF₃ | F | H | F |
| n-C₄H₉ | 2 | OCH₂CF₂CF₃ | F | H | F |
| n-C₅H₁₁ | 2 | OCH₂CF₂CF₃ | F | H | F |
| n-C₆H₁₃ | 2 | OCH₂CF₂CF₃ | F | H | F |
| n-C₇H₁₅ | 2 | OCH₂CF₂CF₃ | F | H | F |
| CH₂=CH | 2 | OCH₂CF₂CF₃ | F | H | F |
| CH₃CH=CH | 2 | OCH₂CF₂CF₃ | F | H | F |
| CH₂=CHCH₂CH₂ | 2 | OCH₂CF₂CF₃ | F | H | F |
| CH₃-CH=CHCH₂CH₂ | 2 | OCH₂CF₂CF₃ | F | H | F |
| CH₃ | 2 | F | H | H | F |
| C₂H₅ | 2 | F | H | H | F |
| n-C₃H₇ | 2 | F | H | H | F |
| n-C₄H₉ | 2 | F | H | H | F |
| n-C₅H₁₁ | 2 | F | H | H | F |
| n-C₆H₁₃ | 2 | F | H | H | F |
| n-C₇H₁₅ | 2 | F | H | H | F |
| CH₂=CH | 2 | F | H | H | F |
| CH₃CH=CH | 2 | F | H | H | F |
| CH₂=CHCH₂CH₂ | 2 | F | H | H | F |
| CH₃-CH=CHCH₂CH₂ | 2 | F | H | H | F |
| CH₃ | 2 | OCF₃ | H | H | F |
| C₂H₅ | 2 | OCF₃ | H | H | F |
| n-C₃H₇ | 2 | OCF₃ | H | H | F K 67 S_{A} 89 N 254,0 I; Δε = 17,0; Δn = 0,1300 |
| n-C₄H₉ | 2 | OCF₃ | H | H | F |
| n-C₅H₁₁ | 2 | OCF₃ | H | H | F |
| n-C₆H₁₃ | 2 | OCF₃ | H | H | F |
| n-C₇H₁₅ | 2 | OCF₃ | H | H | F |
| CH₂=CH | 2 | OCF₃ | H | H | F |
| CH₃CH=CH | 2 | OCF₃ | H | H | F |
| CH₂=CHCH₂CH₂ | 2 | OCF₃ | H | H | F |
| CH₃-CH=CHCH₂CH₂ | 2 | OCF₃ | H | H | F |
| CH₃ | 2 | OCHF₂ | H | H | F |
| C₂H₅ | 2 | OCHF₂ | H | H | F |
| n-C₃H₇ | 2 | OCHF₂ | H | H | F |
| n-C₄H₉ | 2 | OCHF₂ | H | H | F |
| n-C₅H₁₁ | 2 | OCHF₂ | H | H | F |
| n-C₆H₁₃ | 2 | OCHF₂ | H | H | F |
| n-C₇H₁₅ | 2 | OCHF₂ | H | H | F |
| CH₂=CH | 2 | OCHF₂ | H | H | F |
| CH₃CH=CH | 2 | OCHF₂ | H | H | F |
| CH₂=CHCH₂CH₂ | 2 | OCHF₂ | H | H | F |
| CH₃-CH=CHCH₂CH₂ | 2 | OCHF₂ | H | H | F |
| CH₃ | 2 | OC₂F₅ | H | H | F |
| C₂H₅ | 2 | OC₂F₅ | H | H | F |
| n-C₃H₇ | 2 | OC₂F₅ | H | H | F |
| n-C₄H₉ | 2 | OC₂F₅ | H | H | F |
| n-C₅H₁₁ | 2 | OC₂F₅ | H | H | F |
| n-C₆H₁₃ | 2 | OC₂F₅ | H | H | F |
| n-C₇H₁₅ | 2 | OC₂F₅ | H | H | F |
| CH₂=CH | 2 | OC₂F₅ | H | H | F |
| CH₃CH=CH | 2 | OC₂F₅ | H | H | F |
| CH₂=CHCH₂CH₂ | 2 | OC₂F₅ | H | H | F |
| CH₃-CH=CHCH₂CH₂ | 2 | OC₂F₅ | H | H | F |
| CH₃ | 2 | OCH₂CF₂CF₃ | H | H | F |
| C₂H₅ | 2 | OCH₂CF₂CF₃ | H | H | F |
| n-C₃H₇ | 2 | OCH₂CF₂CF₃ | H | H | F |
| n-C₄H₉ | 2 | OCH₂CF₂CF₃ | H | H | F |
| n-C₅H₁₁ | 2 | OCH₂CF₂CF₃ | H | H | F |
| n-C₆H₁₃ | 2 | OCH₂CF₂CF₃ | H | H | F |
| n-C₇H₁₅ | 2 | OCH₂CF₂CF₃ | H | H | F |
| CH₂=CH | 2 | OCH₂CF₂CF₃ | H | H | F |
| CH₃CH₂=CH | 2 | OCH₂CF₂CF₃ | H | H | F |
| CH₂=CHCH₂CH₂ | 2 | OCH₂CF₂CF₃ | H | H | F |
| CH₃-CH=CHCH₂CH₂ | 2 | OCH₂CF₂CF₃ | H | H | F |

### Mischungsbeispiele

| Beispiel M1 | | | |
|---|---|---|---|
| CCP-30CF₃ | 8,00 % | Klärpunkt [°C]: | 89 |
| CCP-50CF₃ | 8,00 % | Δn [589 nm, 20 °C]: | 0,0902 |
| CCP-20CF₃.F | 12,00 % | Δε [1 kHz, 20 °C]: | 10,5 |
| CCP-30CF₃.F | 12,00 % | γ1 [mPa·s, 20 °C]: | 171 |
| CCP-50CF₃.F | 6,50 % | | |
| CCP-3F.F.F | 10,00 % | | |
| CCP-5F.F.F | 2,00 % | | |
| CGU-2-F | 10,00 % | | |
| CGU-3-F | 10,00 % | | |
| CBC-33F | 4,00 % | | |
| CCP-1F.F.F | 11,00 % | | |
| CQUZU-3-F | 6,50 % | | |

| Beispiel M2 | | | |
|---|---|---|---|
| CCP-2F.F.F | 6,00 % | Klärpunkt [°C]: | 83,5 |
| CCP-20CF₃.F | 12,00 % | Δn [589 nm, 20 °C]: | 0,0881 |
| CCP-30CF₃.F | 8,50 % | Δε [1 kHz, 20 °C]: | 10,9 |
| CCP-20CF₃ | 8,00 % | γ1 [mPa·s, 20 °C]: | 153 |
| CCP-30CF₃ | 8,00 % | | |
| CCP-40CF₃ | 6,00 % | | |
| CCP-50CF₃ | 7,00 % | | |
| CGU-2-F | 10,00 % | | |
| CGU-3-F | 2,50 % | | |
| CCG-V-F | 12,00 % | | |
| CCP-1 F.F.F | 10,00 % | | |
| CQUZU-3-F | 10,00 % | | |

| Beispiel M3 | | | |
|---|---|---|---|
| CCP-20CF₃ | 6,00 % | S → N: | -30,0 °C |
| CCP-30CF₃ | 5,00% | Klärpunkt [°C]: | 80,0 |
| CCP-2F.F.F | 10,00 % | Δn [589 nm, 20 °C]: | 0,1036 |
| CCP-3F.F.F | 11,00 % | γ1 [mPa·s, 20 °C]: | 109 |
| BCH-3F.F.F | 7,00 % | d · Δn [µm, 20 °C]: | 0,50 |
| PGU-2-F | 8,00 % | Verdrillung [°]: | 90 |
| PGU-3-F | 4,00 % | V₁₀: | 1,29 |
| PGU-5-F | 3,00 % | | |
| CCZU-3-F | 14,00 % | | |
| BCH-32 | 5,00 % | | |
| CCH-35 | 5,00 % | | |
| CC-3-V1 | 13,00 % | | |
| CQUZU-3-F | 5,00 % | | |
| PCH-302 | 4,00 % | | |

| Beispiel M4 | | | |
|---|---|---|---|
| BCH-3F.F | 10,80 % | Klärpunkt [°C]: | +88,1 |
| BCH-5F.F | 9,00 % | Δn [589 nm, 20 °C]: | +0,0960 |
| ECCP-30CF₃ | 4,50 % | Δε [1 kHz, 20 °C]: | +7,3 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| CQUZU-3-F | 10,00 % | | |

| Beispiel M5 | | | |
|---|---|---|---|
| BCH-3F.F | 10,80 % | Klärpunkt [°C]: | +101,0 |
| BCH-5F.F | 9,00 % | Δn [589 nm, 20 °C]: | +0,0979 |
| ECCP-30CF₃ | 4,50 % | Δε [1 kHz, 20 °C]: | +7,3 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| CCQUZU-3-F | 10,00 % | | |

| Beispiel M6 | | | |
|---|---|---|---|
| CCH-301 | 11,20 % | Klärpunkt [°C]: | +75,0 |
| CCH-3CF₃ | 6,40 % | Δn [589 nm, 20 °C]: | +0,0665 |
| CCH-501 | 8,80 % | | |
| CCP-2F.F.F | 8,00 % | | |
| CCP-3F.F.F | 10,40 % | | |
| CCP-5F.F.F | 4,00 % | | |
| CCPC-33 | 2,40 % | | |
| CCZU-2-F | 4,00 % | | |
| CCZU-3-F | 13,60 % | | |
| CCZU-5-F | 4,00 % | | |
| CH-33 | 2,40 % | | |
| CH-35 | 2,40 % | | |
| CH-43 | 2,40 % | | |
| CQUZU-3-F | 20,00 % | | |

| Beispiel M7 | | | |
|---|---|---|---|
| BCH-3F.F | 10,80 % | Klärpunkt [°C]: | +102,7 |
| BCH-5F.F | 9,00 % | Δn [589 nm, 20 °C]: | +0,0994 |
| ECCP-30CF₃ | 4,50 % | Δε [1kHz, 20 °C]: | +6,9 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| CCQUZG-3-OT | 9,80 % | | |

| Beispiel M8 | | | |
|---|---|---|---|
| BCH-3F.F | 10,80 % | Klärpunkt [°C]: | +90,9 |
| BCH-5F.F | 9,00 % | Δn [589 nm, 20 °C]: | +0,0976 |
| ECCP-30CF₃ | 4,50 % | Δε [1 kHz, 20 °C]: | +7,0 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| CQUZG-3-OT | 10,00 % | | |

## Patentansprüche

1. Flüssigkristallines Medium auf der Basis eines Gemisches von polaren Verbindungen, **dadurch gekennzeichnet, dass** es eine oder mehrere Verbindungen der allgemeinen Formel I 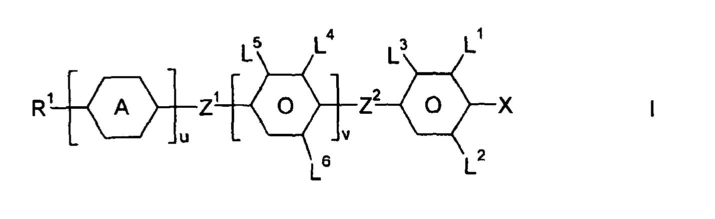 enthält,
worin
R¹ einen unsubstituierten, einen einfach durch CN oder CF₃ oder einen mindestens einfach durch Halogen substituierten Alkylrest mit 1 bis 12 C-Atomen, wobei in diesen Resten auch eine oder mehrere CH₂-Gruppen jeweils unabhängig voneinander durch -O-, -S-, 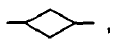 -CH=CH-, -C≡C-, -CO-, -CO-O-, -O-CO-oder -O-CO-O- so ersetzt sein können, dass O-Atome nicht direkt miteinander verknüpft sind, 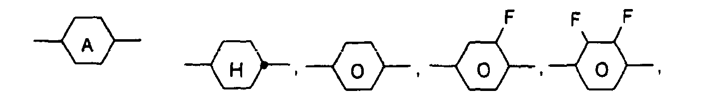 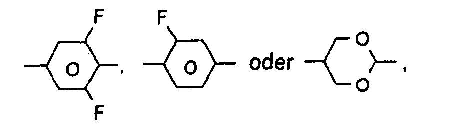
L¹ F,
L²⁻⁶ jeweils unabhängig voneinander H oder F,
Z¹ CF_{2O},
Z² -COO-,
X F, Cl, CN, CN, NCS, SCN, SF₅, unsubstituierter Alkyl-oder Alkoxyrest, halogenierter Alkylrest, halogenierter Alkenylrest, halogenierter Alkoxyrest oder halogenierter Alkenyloxyrest mit bis zu 6 C-Atomen, und
u 1 oder 2, und
v 1 oder 2
bedeuten.

2. Medium nach Anspruch 1, **dadurch gekennzeichnet, dass** es zusätzlich eine oder mehrere Verbindungen ausgewählt aus der Gruppe bestehend aus den allgemeinen Formeln II, III, IV, V, VI, VII und VIII enthält: 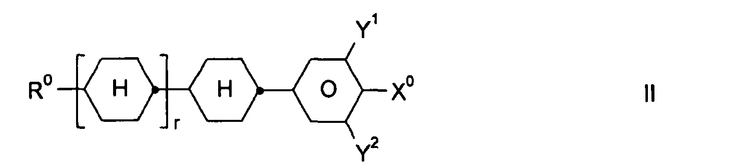 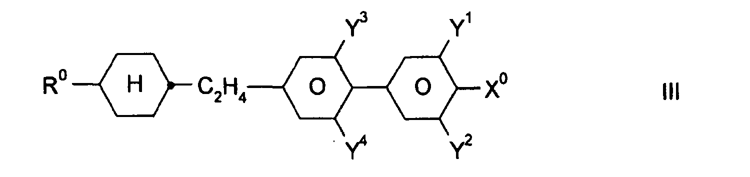 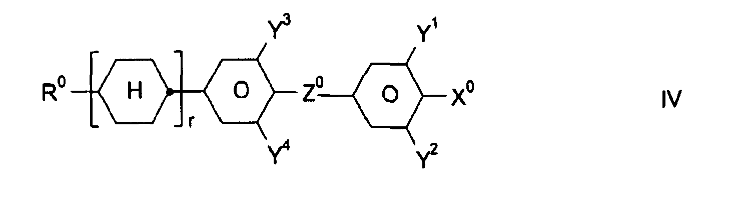 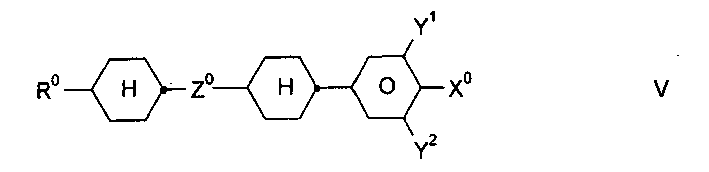 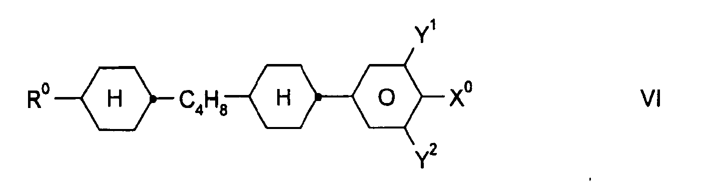 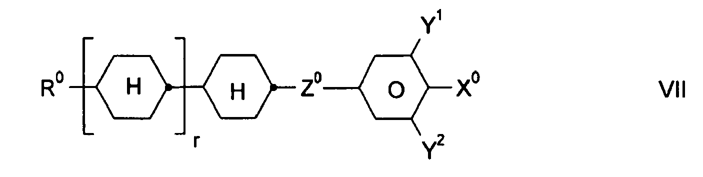 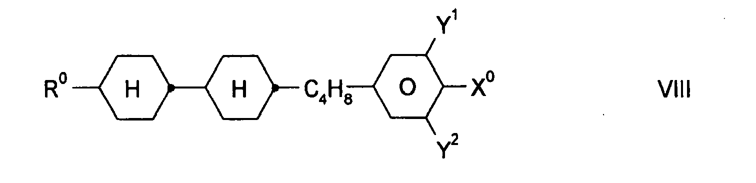 worin die einzelnen Reste die folgenden Bedeutungen haben:
R⁰ n-Alkyl, Alkoxy, Oxaalkyl, Fluoralkyl oder Alkenyl mit jeweils bis zu 9 C-Atomen,
X⁰ F, Cl, halogeniertes Alkyl, halogeniertes Alkenyl, halogeniertes Alkenyloxy oder halogeniertes Alkoxy mit 1 bis 6 C-Atomen,
Z⁰ -C₂H₄-, -CH=CH-, -CH₂O-, -OCH₂-, -COO-, -OCF₂-, -CF₂O- oder -C₂F₄-, -CF=CF-, -CH₂CF₂- oder -CF₂CH₂-,
Y¹⁻⁴ jeweils unabhängig voneinander H oder F,
r 0 oder 1.

3. Medium nach Anspruch 2, **dadurch gekennzeichnet, dass** der Anteil an Verbindungen der Formeln I bis VIII zusammen im Gesamtgemisch mindestens 30 Gew.-% beträgt.

4. Medium nach einem oder mehreren der Ansprüche 1 bis 3, **dadurch gekennzeichnet, dass** der Anteil an Verbindungen der Formel I im Gesamtgemisch 1 bis 50 Gew.-% beträgt.

5. Medium nach einem oder mehreren der Ansprüche 2 bis 4 , **dadurch gekennzeichnet, dass** der Anteil an Verbindungen der Formeln II bis VIII im Gesamtgemisch 20 bis 80 Gew.-% beträgt.

6. Medium nach einem oder mehreren der Ansprüche 1 bis 5, **dadurch gekennzeichnet, dass** es ein oder mehrere Verbindungen der Formel IVa 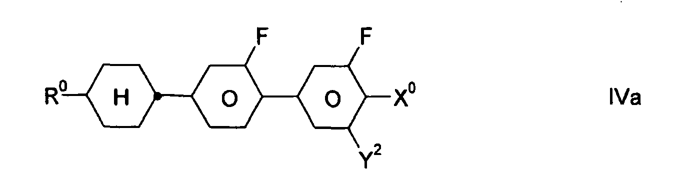 enthält,
worin R⁰, X⁰ und Y² die in Anspruch 2 angegebenen Bedeutungen haben.

7. Medium nach einem oder mehreren der Ansprüche 2 bis 6, **dadurch gekennzeichnet, dass** X⁰ F, OCHF₂ oder OCF₃ und Y² H oder F bedeuten.

8. Medium nach einem oder mehreren der Ansprüche 1 bis 7, **dadurch gekennzeichnet, dass** in der Verbindung der Formel I R¹ geradkettiges Alkyl bedeutet.

9. Flüssigkristalline Verbindungen der Formel I, 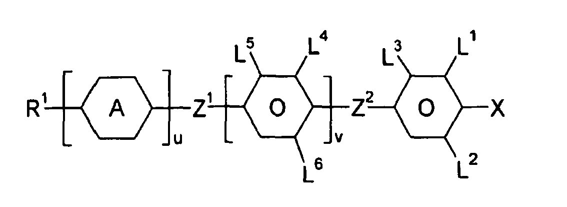 worin
R¹ einen unsubstituierten, einen einfach durch CN oder CF₃ oder einen mindestens einfach durch Halogen substituierten Alkylrest mit 1 bis 12 C-Atomen, wobei in diesen Resten auch eine oder mehrere CH₂-Gruppen jeweils unabhängig voneinander durch -O-, -S-, 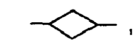 -CH=CH-, -C≡C-, -CO-, -CO-O-, -O-CO-oder -O-CO-O- so ersetzt sein können, dass O-Atome nicht direkt miteinander verknüpft sind, 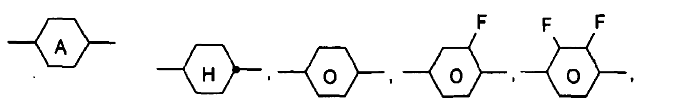 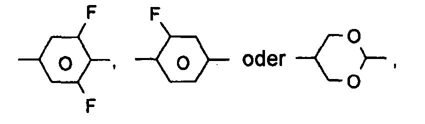
L¹ F,
L²⁻⁶ jeweils unabhängig voneinander H oder F,
Z¹ CF₂O,
Z² -COO-,
X F, Cl, CN, CN, NCS, SCN, SF₅, unsubstituierter Alkyl-oder Alkoxyrest, halogenierter Alkylrest, halogenierter Alkenylrest, halogenierter Alkoxyrest oder halogenierter Alkenyloxyrest mit bis zu 6 C-Atomen, und
u 1 oder 2, und
v 1 oder 2
bedeuten.

10. Flüssigkristalline Verbindungen der Formeln I2, I3, I5, I6, I8, I9, I11 bis I15, I18, I19; I21, I22, I24, I25 und I27 bis I31 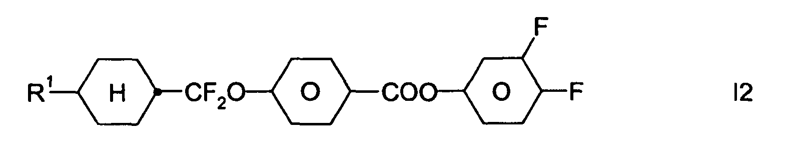 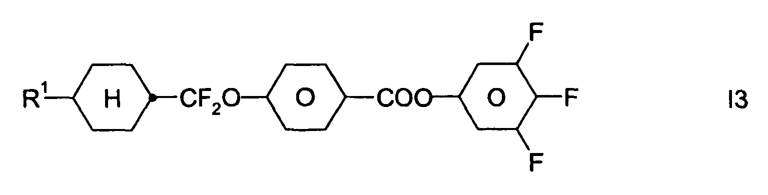 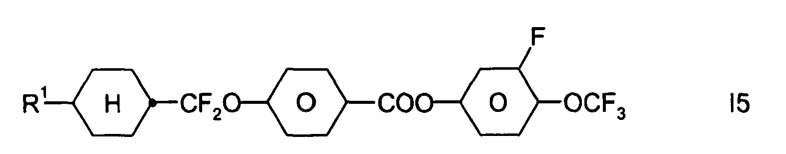 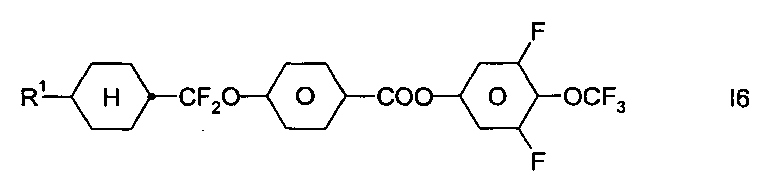 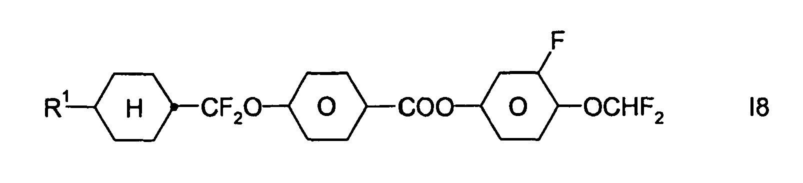 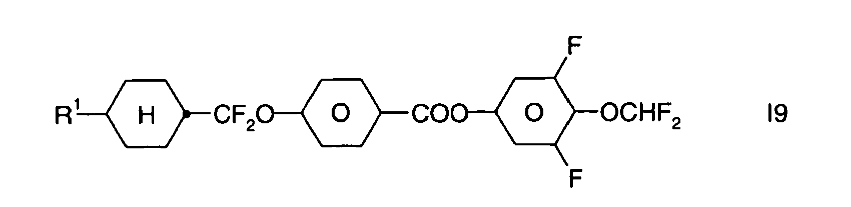 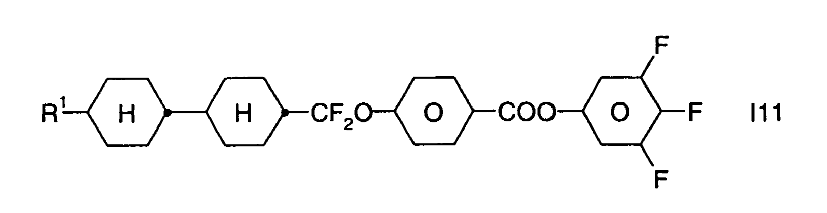 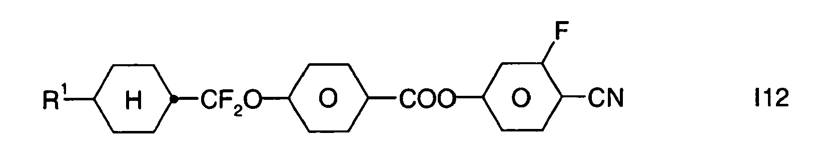 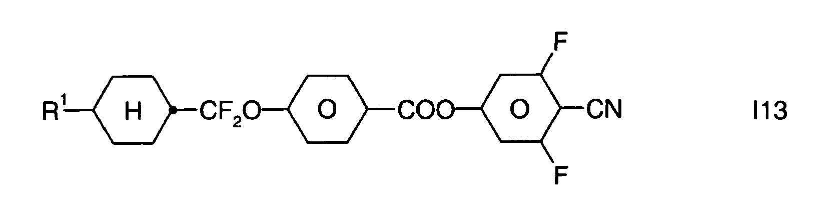 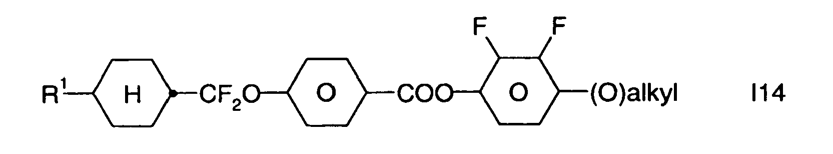 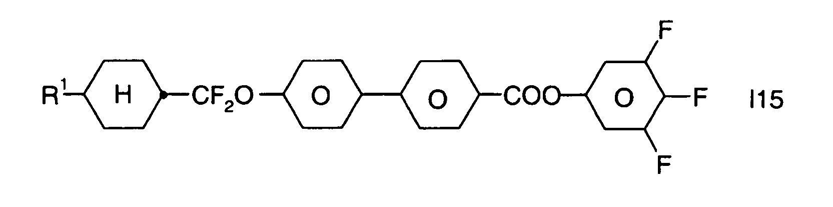 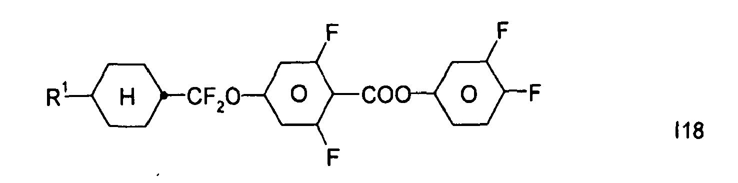 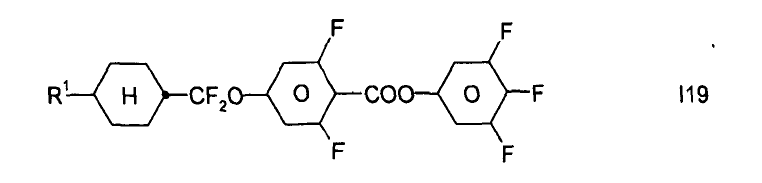 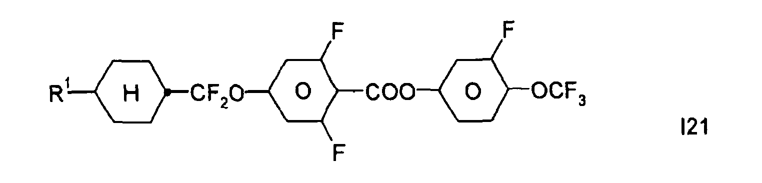 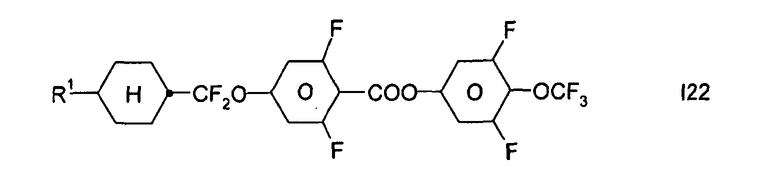 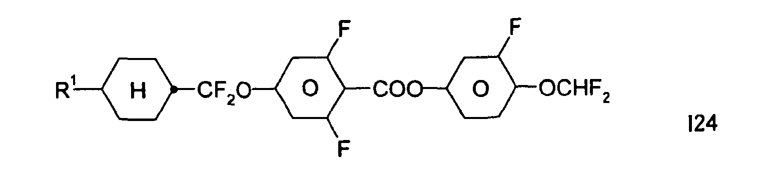 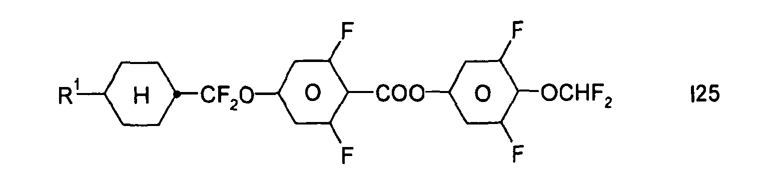 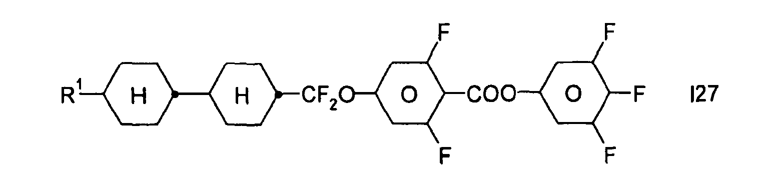 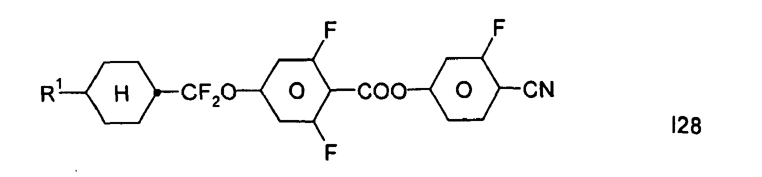 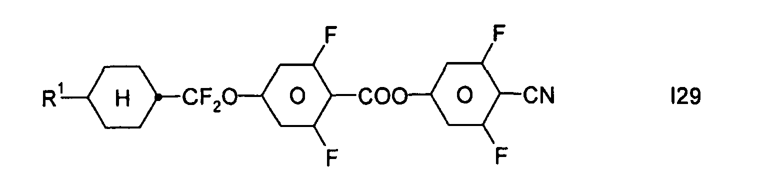 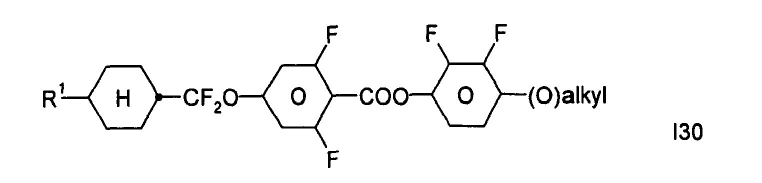 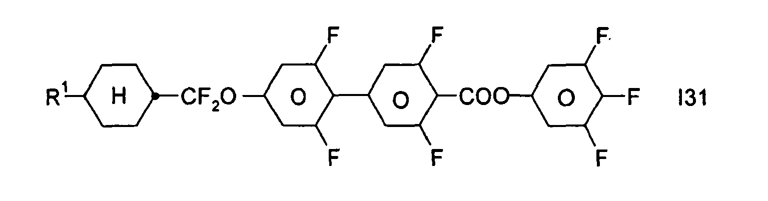 worin
R¹ die in Anspruch 9 angegebenen Bedeutungen hat.

11. Verwendung des flüssigkristallinen Mediums nach einem oder mehreren der Ansprüche 1 bis 8 für elektrooptische Zwecke.

12. Elektrooptische Flüssigkristallanzeige enthaltend ein flüssigkristallines Medium nach einem oder mehreren der Ansprüche 1 bis 8 .

## Claims

1. Liquid-crystalline medium based on a mixture of polar compounds, **characterised in that** it comprises one or more compounds of the general formula I 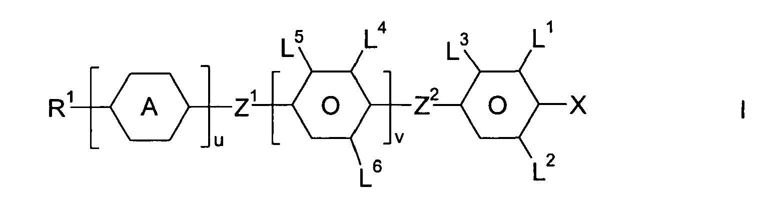 in which
R¹ denotes an alkyl radical having 1 to 12 C atoms which is unsubstituted, monosubstituted by CN or CF₃ or at least monosubstituted by halogen, where one or more CH₂ groups in these radicals may also, in each case independently of one another, be replaced by -O-, -S-, 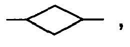 -CH=CH-, -C≡C-, -CO-, -CO-O-, -O-CO- or -O-CO-O- in such a way that O atoms are not linked directly to one another, 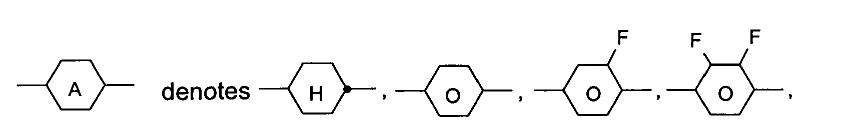 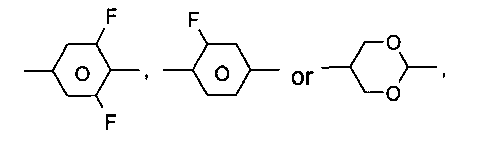
L¹ denotes F,
L²⁻⁶ each, independently of one another, denote H or F,
Z¹ denotes CF₂O,
Z² denotes -COO-,
X denotes F, Cl, CN, OCN, NCS, SCN, SF₅, an unsubstituted alkyl or alkoxy radical, a halogenated alkyl radical, a halogenated alkenyl radical, a halogenated alkoxy radical or a halogenated alkenyloxy radical having up to 6 C atoms, and
u denotes 1 or 2, and
v denotes 1 or 2.

2. Medium according to Claim 1, **characterised in that** it additionally comprises one or more compounds selected from the group consisting of the general formulae II, III, IV, V, VI, VII and VIII: 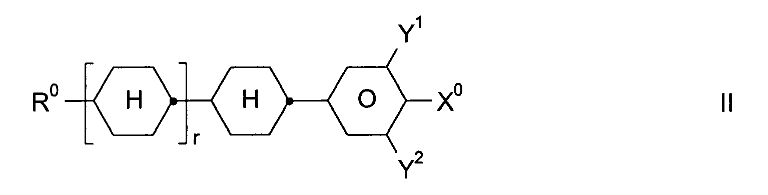 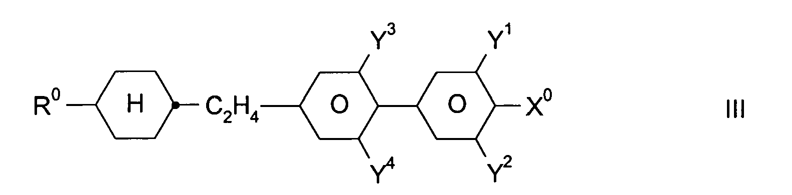 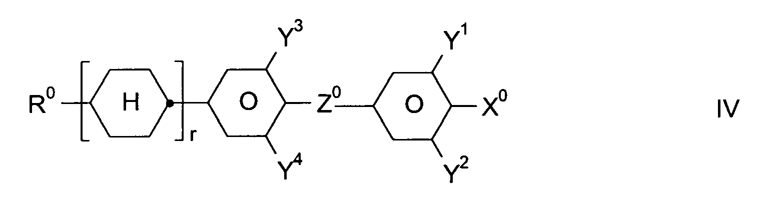 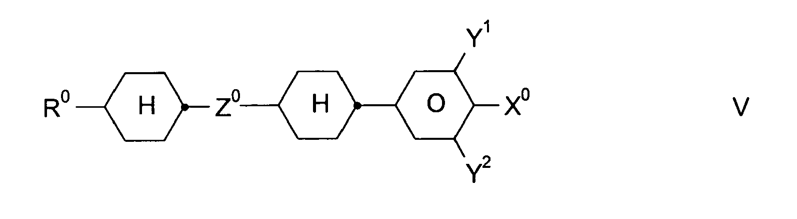 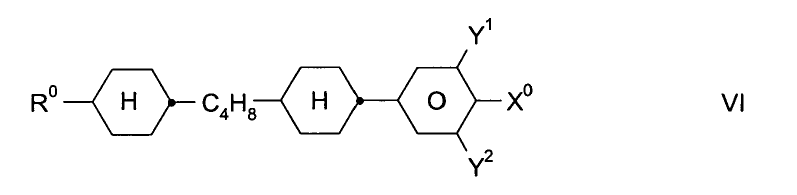 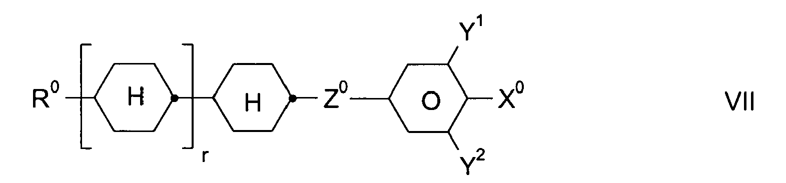 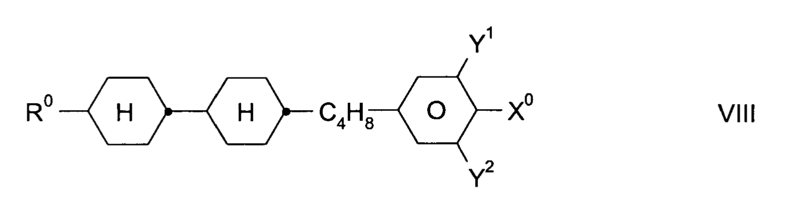 in which the individual radicals have the following meanings:
R⁰: n-alkyl, alkoxy, oxaalkyl, fluoroalkyl or alkenyl, each having up to 9 C atoms,
X⁰: F, Cl, halogenated alkyl, halogenated alkenyl, halogenated alkenyloxy or halogenated alkoxy having 1 to 6 C atoms,
Z⁰: -C₂H₄-, -CH=CH-, -CH₂O-, -OCH₂-, -COO-, -OCF₂-, -CF₂O- or -C₂F₄-, -CF=CF-, -CH₂CF₂- or -CF₂CH₂-,
Y¹⁻⁴: each, independently of one another, H or F,
r: 0 or 1.

3. Medium according to Claim 2, **characterised in that** the proportion of compounds of the formulae I to VIII together in the mixture as a whole is at least 30% by weight.

4. Medium according to one or more of Claims 1 to 3, **characterised in that** the proportion of compounds of the formula I in the mixture as a whole is 1 to 50% by weight.

5. Medium according to one or more of Claims 2 to 4, **characterised in that** the proportion of compounds of the formulae II to VIII in the mixture as a whole is 20 to 80% by weight.

6. Medium according to one or more of Claims 1 to 5, **characterised in that** it comprises one or more compounds of the formula IVa 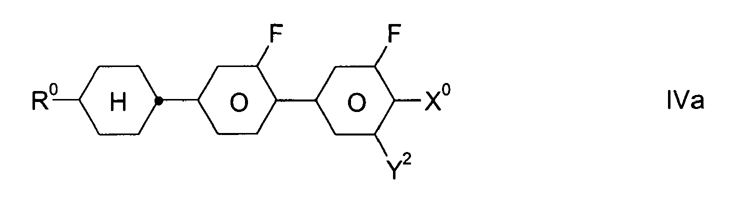 in which R⁰, X⁰ and Y² have the meanings indicated in Claim 2.

7. Medium according to one or more of Claims 2 to 6, **characterised in that** X⁰ denotes F, OCHF₂ or OCF₃, and Y² denotes H or F.

8. Medium according to one or more of Claims 1 to 7, **characterised in that** R¹ in the compound of the formula I denotes straight-chain alkyl.

9. Liquid-crystalline compounds of the formula I 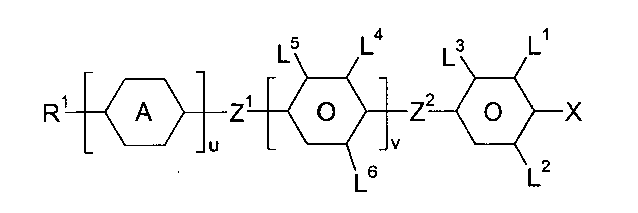 in which
R¹ denotes an alkyl radical having 1 to 12 C atoms which is unsubstituted, monosubstituted by CN or CF₃ or at least monosubstituted by halogen, where one or more CH₂ groups in these radicals may also, in each case independently of one another, be replaced by -O-, -S-, 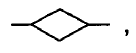 -CH=CH-, -C≡C-, -CO-, -CO-O-, -O-CO- or -O-CO-O- in such a way that O atoms are not linked directly to one another, 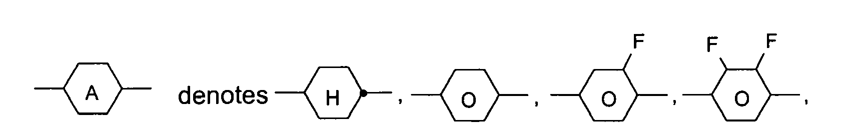 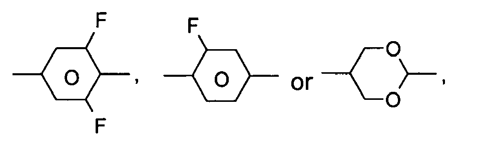
L¹ denotes F,
L²⁻⁶ each, independently of one another, denote H or F,
Z¹ denotes CF₂O,
Z² denotes -COO-,
X denotes F, Cl, CN, OCN, NCS, SCN, SF₅, an unsubstituted alkyl or alkoxy radical, a halogenated alkyl radical, a halogenated alkenyl radical, a halogenated alkoxy radical or a halogenated alkenyloxy radical having up to 6 C atoms, and
u denotes 1 or 2, and
v denotes 1 or 2.

10. Liquid-crystalline compounds of the formulae I2, I3, I5, I6, I8, I9, I11 to I15, I18, I19, I21, I22, I24, I25 and I27 to I31 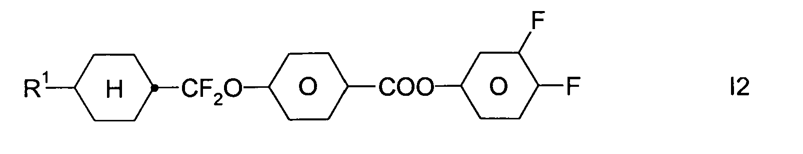 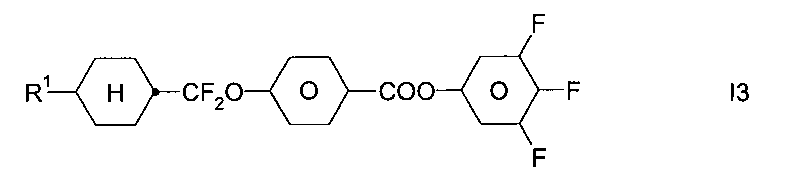 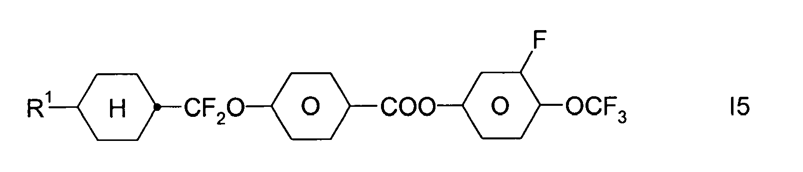 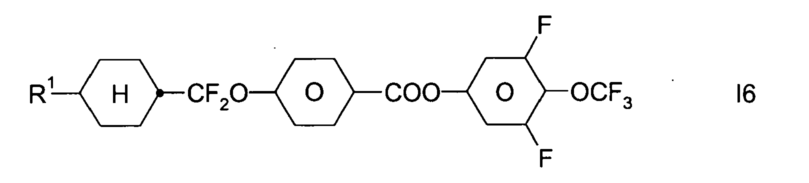 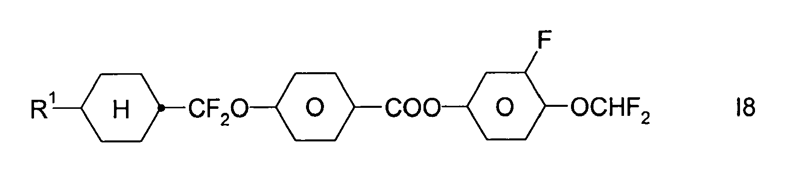 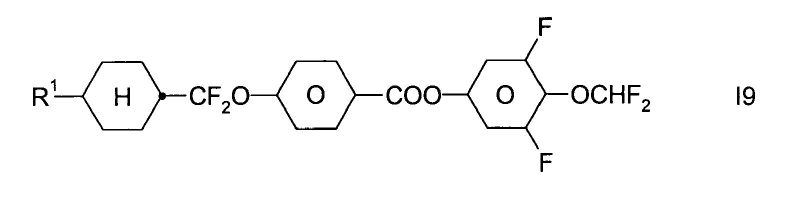 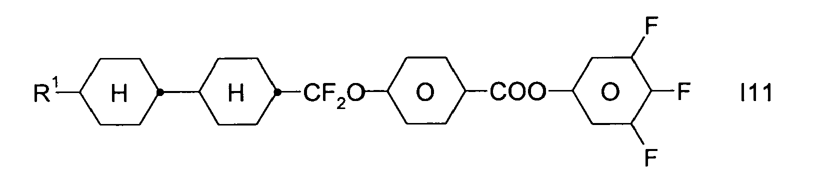 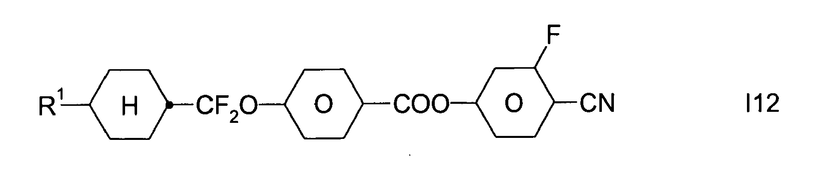 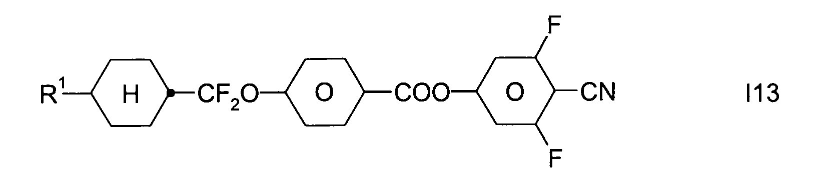 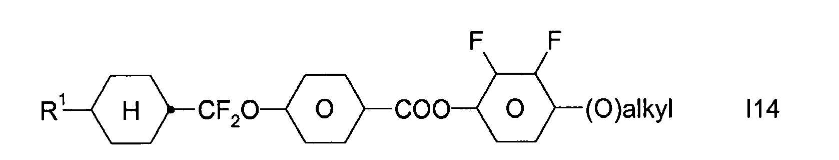 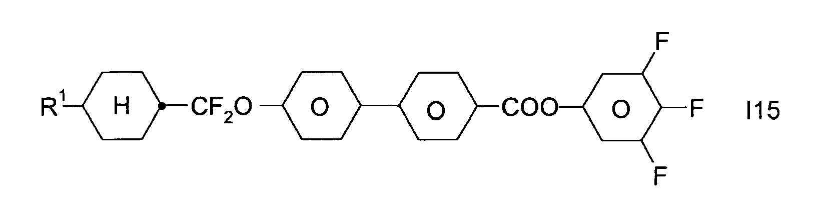 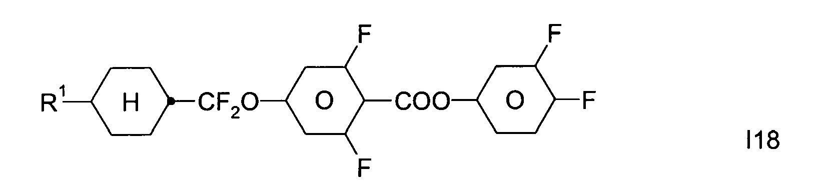 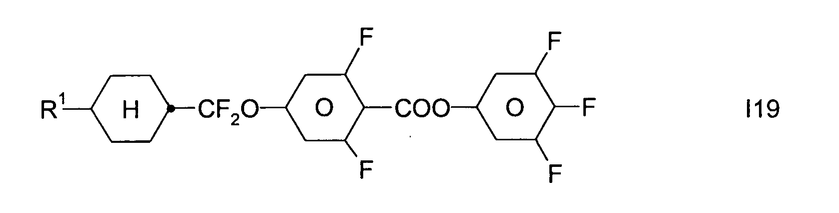 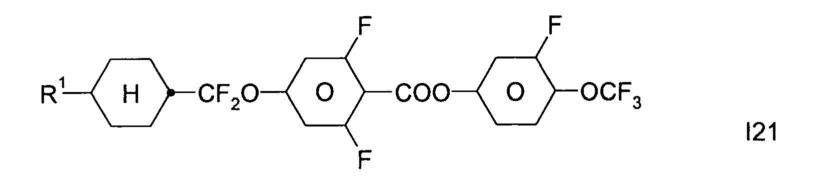 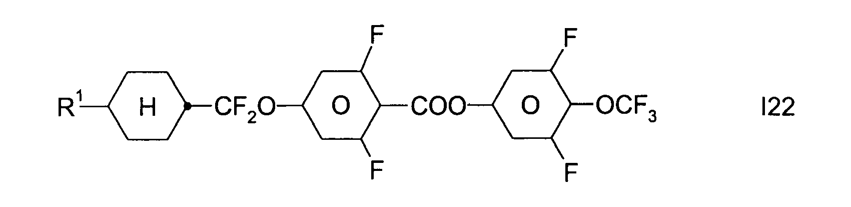 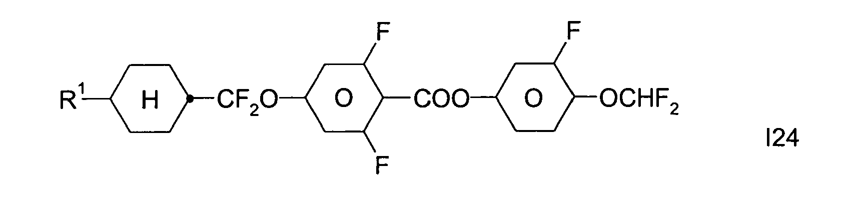 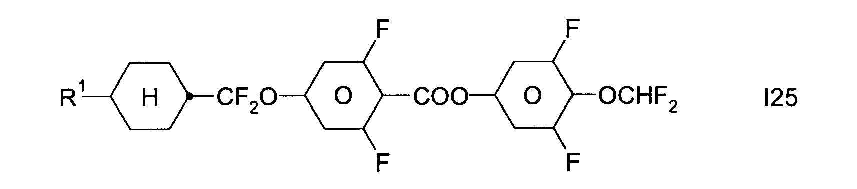 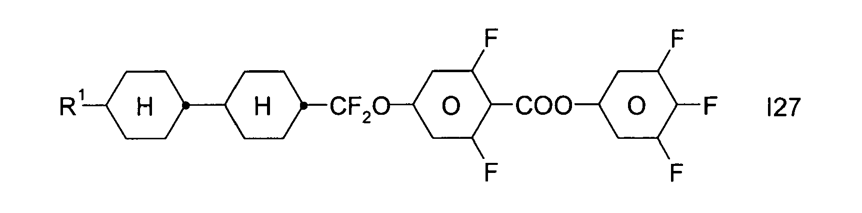 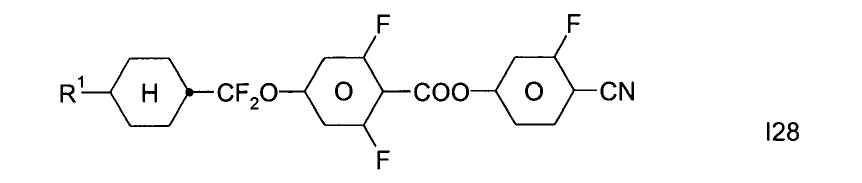 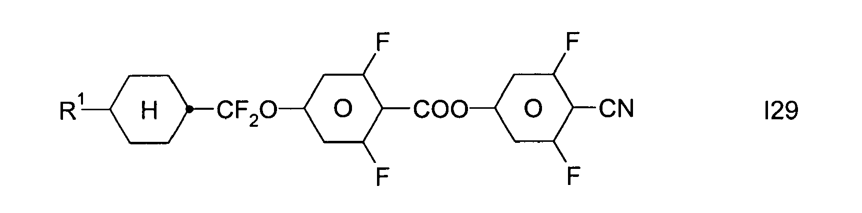 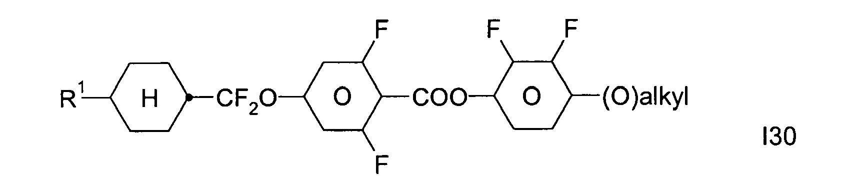 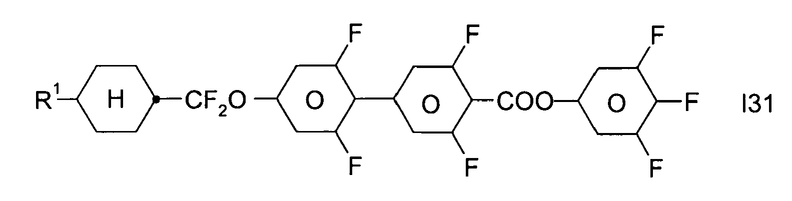 in which
R¹ has the meanings indicated in Claim 9.

11. Use of the liquid-crystalline medium according to one or more of Claims 1 to 8 for electro-optical purposes.

12. Electro-optical liquid-crystal display containing a liquid-crystalline medium according to one or more of Claims 1 to 8.

## Revendications

1. Milieu cristallin liquide basé sur un mélange de composés polaires, **caractérisé en ce qu'**il comprend un ou plusieurs composés de la formule générale I 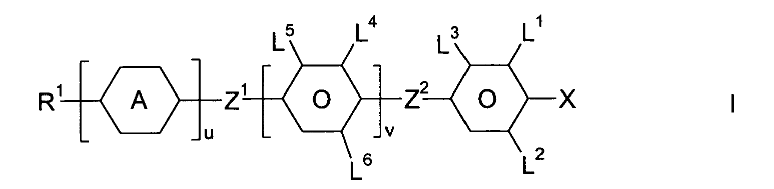 dans laquelle
R¹ représente un radical alkyle comportant de 1 à 12 atomes de C, lequel est non substitué, monosubstitué par CN ou CF₃ ou au moins monosubstitué par halogène, où un ou plusieurs groupes CH₂ dans ces radicaux peuvent également, dans chaque cas indépendamment les uns des autres, être remplacés par -O-, -S-, 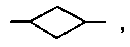 -CH=CH-, -C≡C-, -CO-, -CO-O-, -O-CO-ou -O-CO-O- de telle sorte que des atomes de O ne soient pas liés directement les uns aux autres, 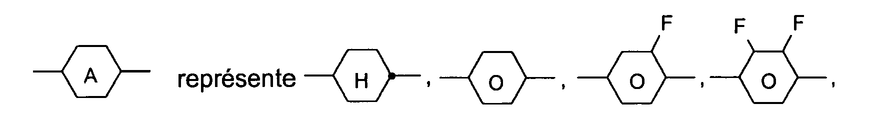 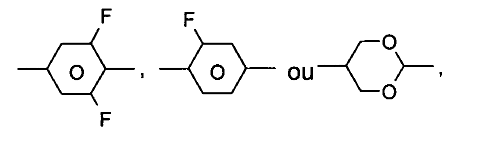
L¹ représente F,
L²⁻⁶ chacun, indépendamment des autres, représente H ou F,
Z¹ représente CF₂O,
Z² représente -COO-,
X représente F, CI, CN, OCN, NCS, SCN, SF₅, un radical alkyle ou alcoxy non substitué, un radical alkyle halogéné, un radical alkényle halogéné, un radical alcoxy halogéné ou un radical alkényloxy halogéné comportant jusqu'à 6 atomes de C, et
u représente 1 ou 2, et
v représente 1 ou 2.

2. Milieu selon la revendication 1, **caractérisé en ce qu'**il comprend additionnellement un ou plusieurs composés choisis parmi le groupe constitué par les formules générales II, III, IV, V, VI, VII et VIII: 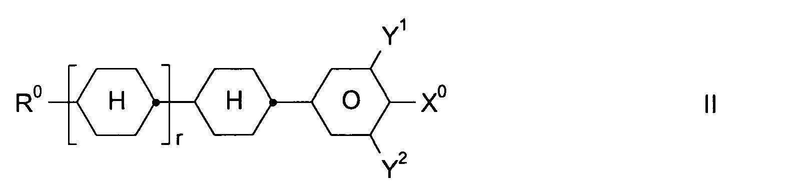 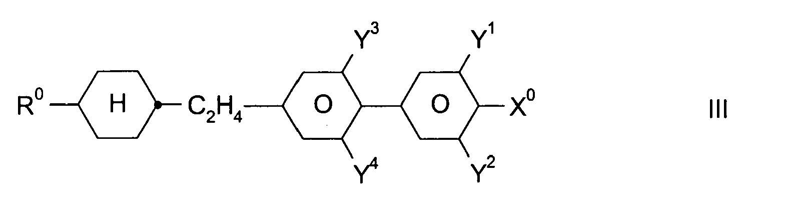 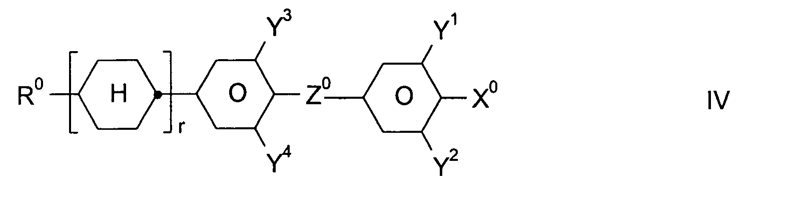 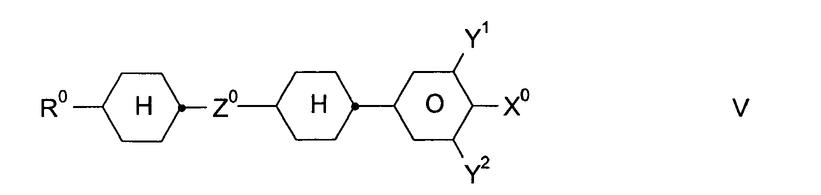 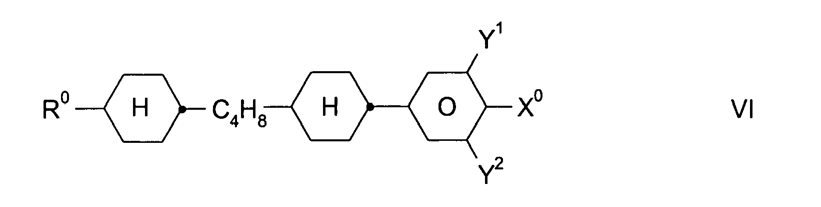 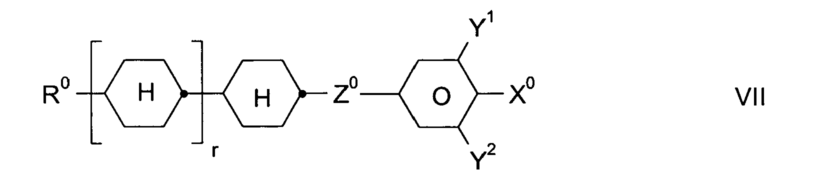 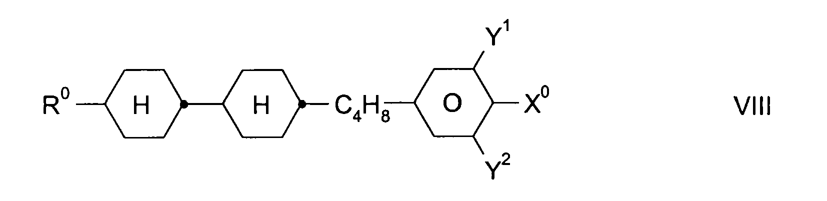 dans lesquelles les radicaux individuels présentent les significations qui suivent:
R⁰: n-alkyle, alcoxy, oxaalkyle, fluoroalkyle ou alkényle, chacun comportant jusqu'à 9 atomes de C,
X⁰: F, CI, alkyle halogéné, alkényle halogéné, alkényloxy halogéné ou alcoxy halogéné comportant de 1 à 6 atomes de C,
Z⁰: -C₂H₄-, -CH=CH-, -CH₂O-, -OCH₂-, -COO-, -OCF₂-, -CF₂O- ou -C₂F₄-, -CF=CF-, -CH₂CF₂- ou -CF₂CH₂-,
Y¹⁻⁴: chacun, indépendamment des autres, H ou F,
r: 0 ou 1.

3. Milieu selon la revendication 2, **caractérisé en ce que** la proportion de composés des formules I à VIII ensemble dans le mélange pris dans sa globalité est d'au moins 30% en poids.

4. Milieu selon une ou plusieurs des revendications 1 à 3, **caractérisé en ce que** la proportion de composés de la formule I dans le mélange pris dans sa globalité est de 1 à 50% en poids.

5. Milieu selon une ou plusieurs des revendications 2 à 4, **caractérisé en ce que** la proportion de composés des formules II à VIII dans le mélange pris dans sa globalité est de 20 à 80% en poids.

6. Milieu selon une ou plusieurs des revendications 1 à 5, **caractérisé en ce qu'**il comprend un ou plusieurs composés de la formule IVa 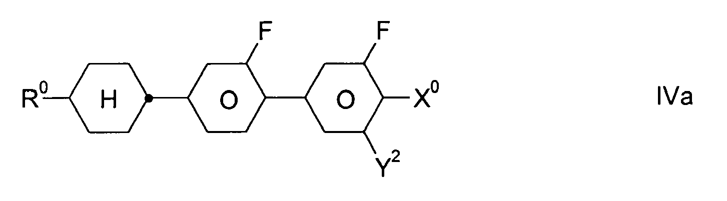 dans laquelle R⁰, X⁰ et Y² présentent les significations indiquées dans la revendication 2.

7. Milieu selon une ou plusieurs des revendications 2 à 6, **caractérisé en ce que** X⁰ représente F, OCHF₂ ou OCF₃, et Y² représente H ou F.

8. Milieu selon une ou plusieurs des revendications 1 à 7, **caractérisé en ce que** R¹ dans le composé de la formule I représente alkyle en chaîne droite.

9. Composés cristallins liquides de la formule I 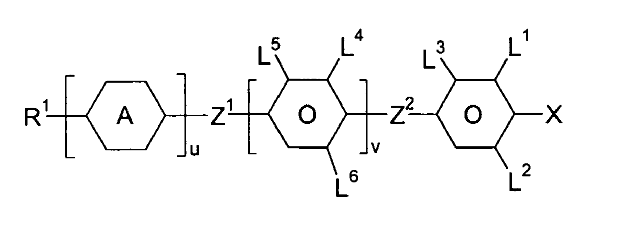 dans laquelle
R¹ représente un radical alkyle comportant de 1 à 12 atomes de C, lequel est non substitué, monosubstitué par CN ou CF₃ ou au moins monosubstitué par halogène, où un ou plusieurs groupes CH₂ dans ces radicaux peuvent également, dans chaque cas indépendamment les uns des autres, être remplacés par -O-, -S-, 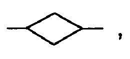 -CH=CH-, -C≡C-, -CO-, -CO-O-, -O-CO-ou -O-CO-O- de telle sorte que des atomes de O ne soient pas liés directement les uns aux autres, 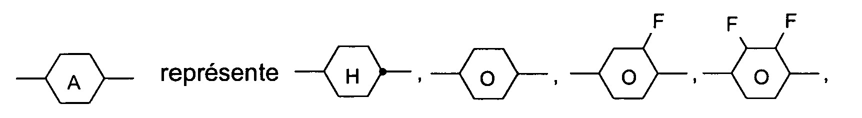 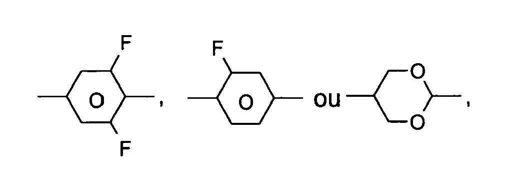
L¹ représente F,
L²⁻⁶ chacun, indépendamment des autres, représente H ou F,
Z¹ représente CF₂O,
Z² représente -COO-,
X représente F, CI, CN, OCN, NCS, SCN, SF₅, un radical alkyle ou alcoxy non substitué, un radical alkyle halogéné, un radical alkényle halogéné, un radical alcoxy halogéné ou un radical alkényloxy halogéné comportant jusqu'à 6 atomes de C, et
u représente 1 ou 2, et
v représente 1 ou 2.

10. Composés cristallins liquides des formules I2, I3, I5, I6, I8, I9, I11 à I15, I18, I19, I21, I22, I24, I25 et I27 à I31 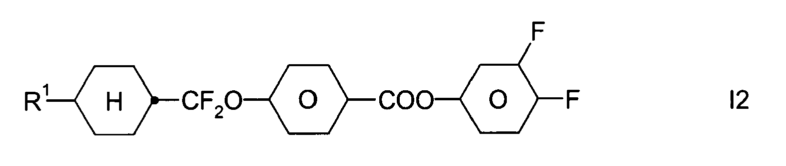 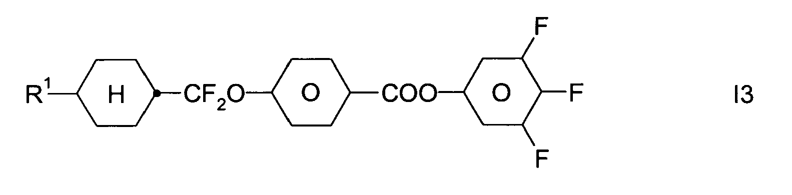 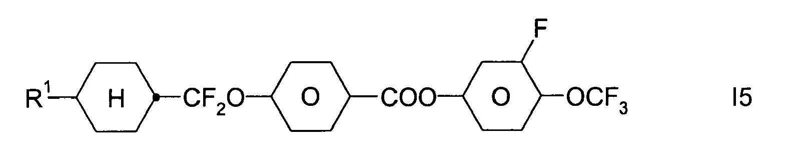 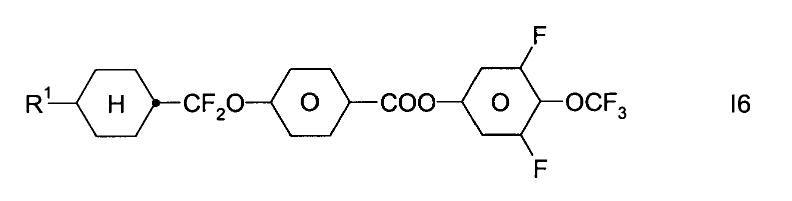 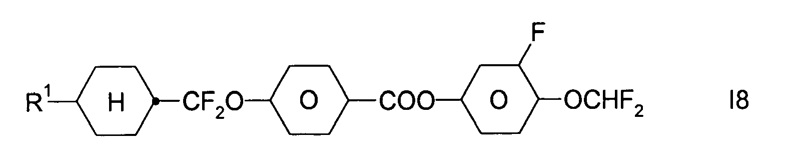 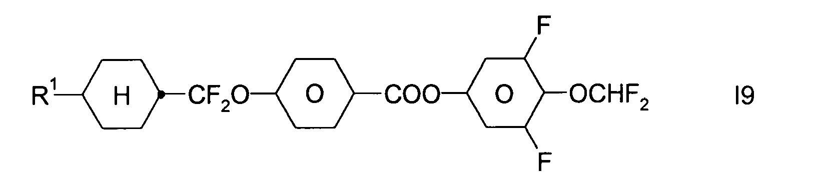 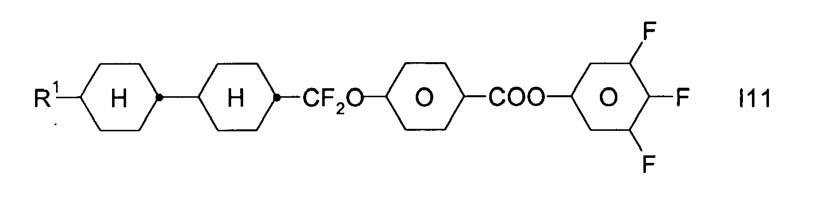 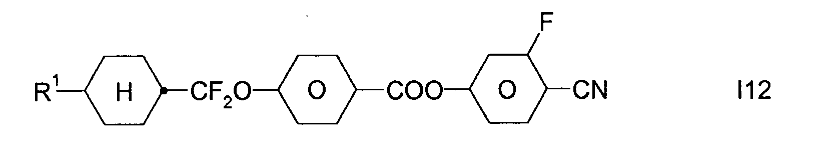 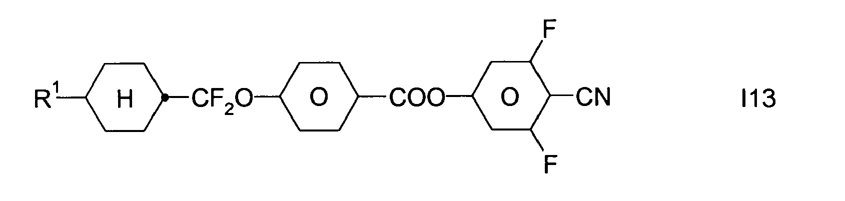 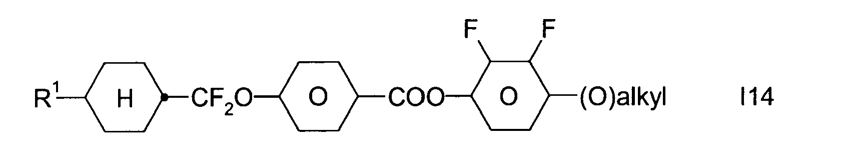 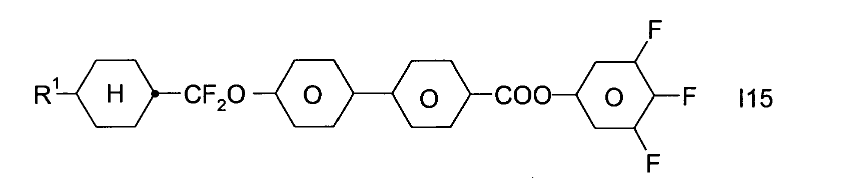 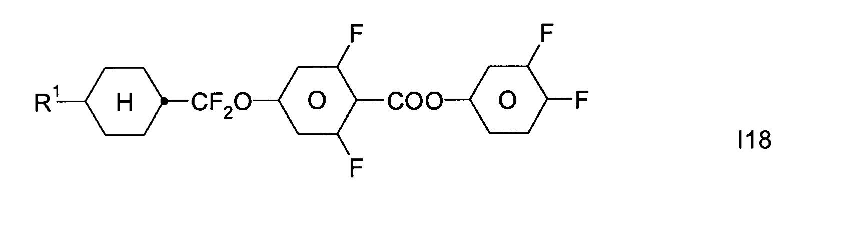 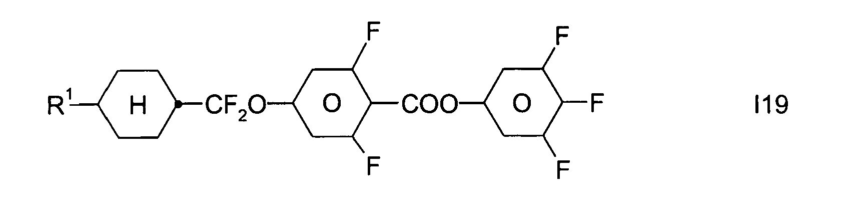 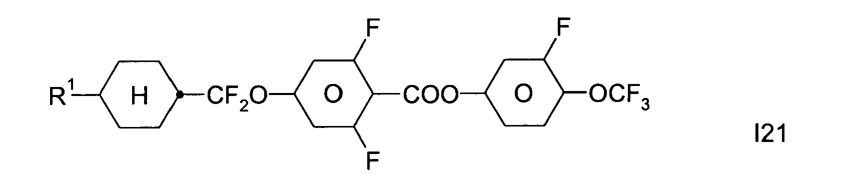 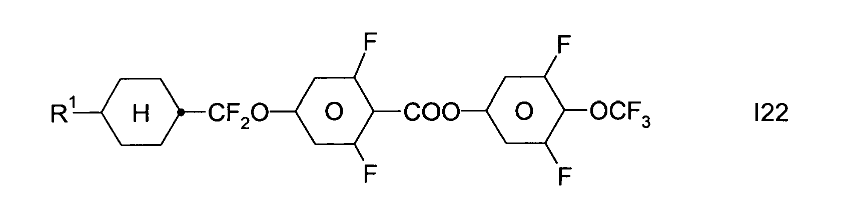 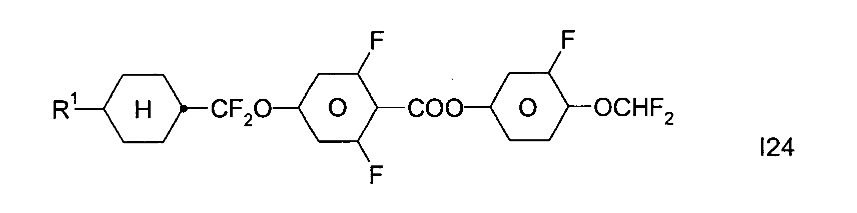 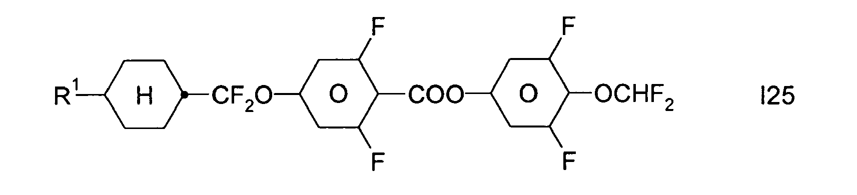 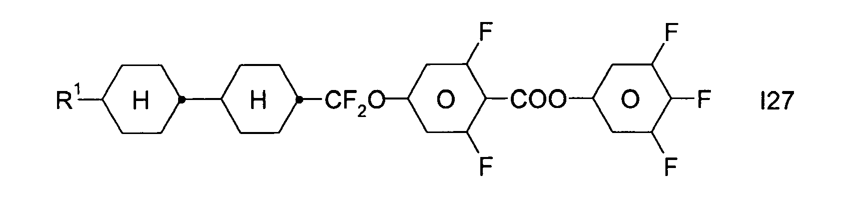 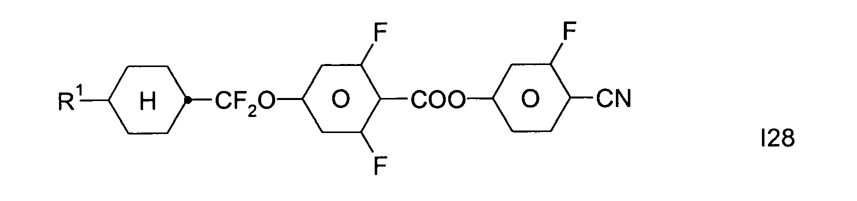 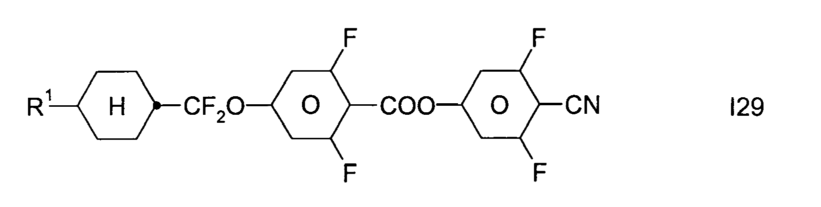 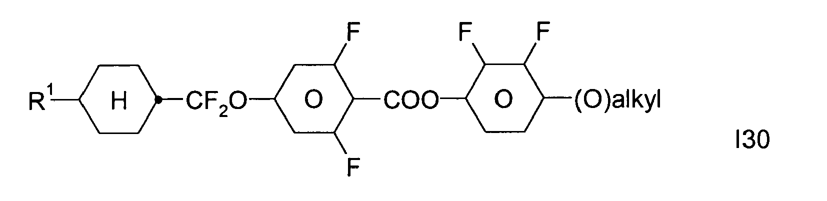 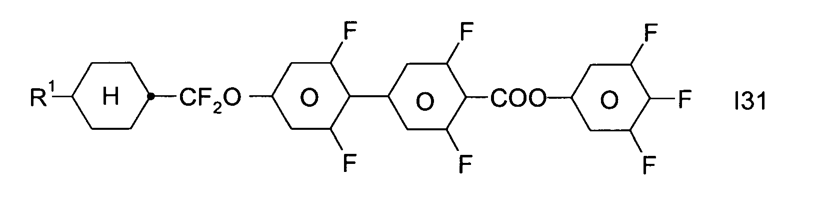 dans lesquelles
R¹ présente les significations indiquées dans la revendication 9.

11. Utilisation du milieu cristallin liquide selon une ou plusieurs des revendications 1 à 8 à des fins électro-optiques.

12. Affichage à cristaux liquides électro-optique contenant un milieu cristallin liquide selon une ou plusieurs des revendications 1 à 8.
